(19) **Europäisches Patentamt**
**European Patent Office**
**Office européen des brevets**

(11) **EP 2 504 720 B1**

(12) **FASCICULE DE BREVET EUROPEEN**

(45) Date de publication et mention
de la délivrance du brevet:
**07.08.2013 Bulletin 2013/32**

(51) Int Cl.:
***G01T 1/169*** *(2006.01)*     ***G06F 19/00*** *(2011.01)*

(21) Numéro de dépôt: **10782596.0**

(86) Numéro de dépôt international:
**PCT/EP2010/068135**

(22) Date de dépôt: **24.11.2010**

(87) Numéro de publication internationale:
**WO 2011/064258 (03.06.2011 Gazette 2011/22)**

(54) **PROCÉDÉ DE DÉTERMINATION D'UNE GRANDEUR OPÉRATIONNELLE PERMETTANT UNE GESTION SIMPLIFIÉE ET OPTIMISÉE D'ÉCHANTILLONS IRRADIÉS DANS DES INSTALLATIONS ET GARANTISSANT LE RESPECT D'OBJECTIFS DE SÛRETÉ**

VERFAHREN ZUR BESTIMMUNG EINER BETRIEBSMENGE FÜR VEREINFACHTE UND OPTIMIERTE HANDHABUNG VON BESTRAHLTEN PROBEN BEI EINEM GERÄT UND SICHERSTELLUNG DER KONFORMITÄT MIT SICHERHEITSZIELEN

METHOD FOR DETERMINING AN OPERATIONAL QUANTITY ENABLING SIMPLIFIED AND OPTIMIZED MANAGEMENT OF IRRADIATED SAMPLES IN EQUIPMENT AND ENSURING COMPLIANCE WITH SAFETY GOALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2009 FR 0905639**

(43) Date de publication de la demande:
**03.10.2012 Bulletin 2012/40**

(73) Titulaire: **Commissariat à l'Énergie Atomique et aux Énergies Alternatives 75015 Paris (FR)**

(72) Inventeur: **POIRSON, Laurent F-91400 Orsay (FR)**

(74) Mandataire: **Collet, Alain Marks & Clerk France Conseils en Propriété Industrielle Immeuble Visium 22, Avenue Aristide Briand 94117 Arcueil Cedex (FR)**

(56) Documents cités:
**FR-A1- 2 922 656**

• **"ESRF procedures for experiments using radioactive samples on beamlines other than beamline BM20 (ROBL)", INTERNET CITATION, 23 novembre 2007 (2007-11-23), pages 1-15, XP007914501, Extrait de l'Internet: URL:http://www.esrf.eu/Infrastructure/Safe ty/Experiments/RadioactiveSamples/radioact ive%20samples%20version%20C.pdf [extrait le 2010-08-18]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 504 720 B1

**Description**

La présente invention concerne un procédé de détermination d'une grandeur opérationnelle unique attachée à un échantillon irradié, qui est représentative de l'exposition externe générée dans toutes les configurations de travail et d'entreposage pouvant être rencontrées dans un laboratoire. Elle s'applique notamment au domaine de l'expertise sur des matériaux irradiés, dans le cadre de l'exploitation de plateformes de recherche conçues à cet effet, habituellement désignées "laboratoires chauds". L'invention peut également s'appliquer à tous types d'installations d'irradiation expérimentales ou d'investigation de la matière utilisant des rayonnements, ainsi qu'aux installations de production de radioéléments.

Un laboratoire chaud permet l'examen d'échantillons irradiés, et permet de recevoir dans ses installations des échantillons irradiés divers, qui peuvent être des matériaux activés, par exemple par des flux neutroniques, protoniques ou photoniques, ou encore des combustibles irradiés. Les examens réalisés sur ces échantillons irradiés peuvent par exemple être constitués de tests de fatigue, de corrosion, ou encore de caractérisation de tenue mécanique, par exemple à la rupture, à la traction statique ou à la traction dynamique.

La réception d'échantillons irradiés nécessite la mise en oeuvre d'une méthode de gestion des échantillons, qui doit garantir le respect des exigences dosimétriques de sûreté pour lesquelles les installations ont été conçues. Les méthodes de gestion mises en oeuvre doivent en outre viser à limiter les risques liés aux facteurs humains, notamment les erreurs d'appréciation ou les erreurs liées à la retranscription d'un nombre trop élevé de valeurs qui sont susceptibles de causer un détriment sanitaire vis-à-vis des opérateurs.

On connaît le document "ESRF procedures for experiments using radioactive samples on beamlines other than beamline BM20 (ROBL)", disponible à l'adresse internet http://www.esrf.eu/Infrastructure/Safety/Experiments/RadioactiveSamples/rad ioactive%20samples%20version%20C.pdf .

Ce document représente un exemple typique de directives, relatives à la gestion d'échantillons irradiés, fournies par un laboratoire de recherche, en ligne avec la loi relative à la sûreté nucléaire. Dans ce document on trouve des tableaux d'activité maximale à ne pas dépasser pour différents types d'échantillons (voir, par exemple, les tableaux 2, 3 et 4). On trouve également des formules qui représentent une activité équivalente "normalisée" à ne pas dépasser, dans le cas où l'échantillon est formé par un mélange de radionucléides.

La gestion des échantillons dans les laboratoires chauds est habituellement réalisée en fonction d'une activité calculée qui se décline selon les cas, en activité totale de radionucléides émetteurs béta/gamma, activité béta spécifique aux manipulations en Boîtes à Gants, activité alpha, fluence neutronique. Le calcul d'activité est réalisé au moyen de codes de calculs d'activation ou de calculs de produits de fission et noyaux lourds, à partir des caractéristiques moyennes des flux d'irradiation et de la composition isotopique des matériaux soumis à l'irradiation ; ces codes de calcul intégrant par ailleurs des modules de calcul d'évolution afin de rendre compte du temps de refroidissement minimum attendu avant réception. Cependant, ces grandeurs à elles seules ne permettent pas de prévoir l'exposition externe générée au poste de travail d'une unité de travail. En effet, pour une même valeur d'activité, l'exposition externe générée au poste de travail dépend d'autres paramètres : le spectre de répartition des radionucléides dans l'échantillon, la nature et la géométrie du matériau constituant l'échantillon en raison des phénomènes d'auto-atténuation, les caractéristiques, notamment la nature et l'épaisseur des protections biologiques de l'unité de travail. C'est la raison pour laquelle, en complément des activités susvisées, il est d'usage de définir des spectres types enveloppes, par nuance de matériau constituant les échantillons. Ces spectres types sont supposés conduire à activité égale et pour une configuration donnée d'unité de travail, au débit de dose, représentatif de l'exposition externe, le plus élevé. Or ces spectres types, outre la complexité inhérente à la gestion de plusieurs paramètres, comme par exemple la liste des radioéléments admissibles et leurs activités maximales respectives, et la nécessité pour tout procédé de figurer dans un référentiel de sûreté, requérant l'approbation de l'autorité de sûreté avant que le procédé ne soit applicable, réduisent considérablement la liste des échantillons recevables et partant le domaine d'études possible des échantillons irradiés, quand bien même leur réception dans les unités de travail et d'entreposage ne remettrait pas en cause les objectifs dosimétriques du laboratoire.

Il est à observer que certains référentiels de sûreté prévoient la possibilité de requérir des autorisations exceptionnelles pour des échantillons ne figurant pas dans le cadre prédéfini, néanmoins de telles requêtes imposent des délais de traitement relativement longs qui ne sont pas toujours compatibles avec l'urgence de certains examens sur les matériaux lorsque ceux-ci sont eux-mêmes demandés dans le cadre d'études de sûreté sur d'autres installations. Cette limitation implicite du domaine de fonctionnement autorisé est due à trois raisons essentielles :

- les nuances de matériaux, telles que la matrice, les éléments additifs, les impuretés constituant les échantillons irradiés sont illimitées, conférant alors aux échantillons irradiés des spectres de radionucléides tout aussi variés. Or cette variabilité des spectres ne peut pas être encadrée par des spectres types enveloppes de l'exposition externe aux postes de travail, sans en fixer à l'avance les nuances acceptables des matériaux constituant les échantillons ;
- les matériaux étudiés trouvent leur application dans diverses installations d'irradiation, telles que des cyclotrons, des accélérateurs de particules, synchrotrons, des réacteurs nucléaires. Les matériaux soumis aux études peuvent donc avoir été irradiés par tous types de rayonnements, notamment de neutrons, protons, deutons, ions, photons, avec une gamme d'énergie qui ne cesse de s'étendre. Or, les caractéristiques particulières des rayonnements produits par ces installations gouvernent les réactions nucléaires possibles dans le matériau soumis à l'irradiation. Ainsi, indépendamment de la nuance de matériau, la variabilité des caractéristiques des rayonnements étudiés en recherche confère aux matériaux irradiés des spectres de radioéléments tout aussi variés ;

- si un spectre type enveloppe a pu être déterminé pour une unité de travail donnée, ce spectre type n'a pas forcément caractère d'enveloppe pour une unité de travail ayant une protection biologique d'épaisseur différente et encore moins quand la nature du matériau biologique change, la même unité de travail pouvant également comporter des protections biologiques de nuances différentes. En effet, en dehors du spectre de radioéléments, l'efficacité d'une protection biologique, qui est caractérisée par le facteur de protection - une grandeur sans dimension égale au rapport d'atténuation du débit de dose par la protection biologique - dépend de son épaisseur et de la nature de son matériau. C'est la raison pour laquelle, dans l'usage courant, un laboratoire est obligé de réaliser :

    o au début de la mise en service d'une unité de travail, des contrôles exhaustifs d'efficacité des blindages, en présence d'étalons d'échantillons irradiés représentatifs des spectres types supposés enveloppes ;
    o aux cours de l'exploitation, lors du déchargement des échantillons dans une unité de travail, un contrôle systématique du débit de dose à chaque poste de travail afin de vérifier que l'exposition prévisible du personnel lors des examens expérimentaux est compatible avec les objectifs dosimétriques de sûreté. Dans le cas contraire, notamment si des mesures complémentaires de radioprotection se révèlent insuffisantes, l'examen expérimental peut être abandonné.

Cette limitation a des répercussions sur l'utilisation rationnelle des outils expérimentaux en vue d'amortir les coûts d'investissement, mais aussi prive le laboratoire d'un élargissement de son domaine de compétences aux nouveaux matériaux.

Un but de la présente invention est de pallier au moins les inconvénients précités, en proposant un procédé permettant de gérer de manière simple et sûre des échantillons irradiés dont la nature et les propriétés sont inconnues a priori. Le procédé selon la présente invention se base sur la détermination d'une grandeur opérationnelle unique, représentative du risque d'exposition externe généré par un échantillon irradié, quelle que soit l'unité de travail ou d'entreposage destinée à le recevoir. Cette grandeur opérationnelle est attachée à un échantillon irradié, et n'impose aucune restriction quant à la nature des échantillons recevables. En outre, cette grandeur opérationnelle est additive quels que soient le type et le nombre d'échantillons présents dans une même unité de travail ou d'entreposage, et permet ainsi une gestion simplifiée et optimisée des inventaires en échantillons irradiés présents dans les unités ou transférés entre unités, tout en garantissant le respect des objectifs de sûreté fixés à la conception en termes de dosimétrie du personnel et de facteur humain.

Un avantage de l'invention est qu'elle permet à un laboratoire la mettant en oeuvre, d'être capable d'offrir une meilleure acceptabilité d'échantillons irradiés présentant une grande diversité, tout en garantissant à tout moment le respect des objectifs dosimétriques et une simplicité dans le gestion des échantillons.

Un autre avantage de l'invention est qu'elle permet une exploitation optimale des unités de travail en estimant au plus juste l'exposition externe générée par les échantillons tenant compte des incertitudes de mesures et en permettant de refaire en cas de besoin des bilans d'inventaires pour tenir compte de la décroissance.

Un autre avantage de l'invention est qu'elle permet à un opérateur un choix aisé des emballages de transport les mieux appropriés pour l'expédition des échantillons après examen.

Un autre avantage de l'invention réside dans le fait qu'un procédé selon l'invention est aisément adaptable à différents laboratoires incorporant différents types d'installations, puisque les prétraitements nécessaires n'impliquent pas de calculs complexes.

Un autre avantage de l'invention est que la mise en oeuvre d'un procédé selon l'un des modes de réalisation de la présente invention peut être exécutée par une interface logicielle pouvant être pilotée par un opérateur n'ayant pas de connaissances particulières en mesures nucléaires.

A cet effet, l'invention a pour objet un procédé de détermination d'une grandeur opérationnelle permettant une gestion simplifiée et optimisée des échantillons irradiés présents dans les unités de travail et d'entreposage d'un laboratoire tout en garantissant le respect d'objectifs de sûreté en terme de dosimétrie du personnel et de facteur humain.

Le procédé de détermination de l'activité équivalente en un radioélément de référence déterminé d'un échantillon irradié manipulé dans des installations comprenant des enceintes de protection d'au moins une épaisseur et une nature déterminées, est caractérisé en ce qu'il comprend :

- une première étape de calculs préalables établissant à partir d'une première bibliothèque de radioéléments, une deuxième bibliothèque et une troisième bibliothèque de radioéléments pour lesquels le rapport des débits de doses calculés respectivement au travers de l'épaisseur minimale de protection et l'épaisseur maximale de protection présentées par les blindages des unités de travail de l'installation, est inférieur à celui du radioélément de référence,
- une deuxième étape de calcul de la source ponctuelle équivalente à l'échantillon irradié, calculant les activités en source ponctuelle pour chacun des radioéléments de la première bibliothèque détectés par une chaîne de spectrométrie gamma et des limites de détection en source ponctuelle pour chacun des radioéléments de la deuxième bibliothèque non détectés par la chaîne de spectrométrie gamma, et produisant un fichier de source ponctuelle comprenant la donnée des activités en source ponctuelle de chacun des radioéléments détectés et non détectés par la chaîne de spectrométrie gamma corrigées d'un facteur correctif défini comme le rapport de la valeur de débit de dose déclarée à une chambre d'ionisation et de la valeur reconstituée du débit d'équivalent de dose sur la base des activités en source ponctuelle calculées pondérées par la table de réponse de la chambre d'ionisation et la table de conversion en débit d'équivalent de dose derrière l'épaisseur réduite de protection du poste de mesure,
- une troisième étape de calcul de l'activité équivalente en radioélément de référence pondérant les activités en source ponctuelle corrigées produites à la deuxième étape par des facteurs de conversion en débit d'équivalent de dose derrière l'épaisseur maximale de protection pour les radioéléments de la troisième bibliothèque et l'épaisseur intermédiaire de protection pour les radioéléments n'appartenant pas à la troisième bibliothèque et pondérant la valeur de débit d'équivalent de dose obtenue pour les radioéléments de la troisième bibliothèque d'une part et d'autre part pour les radioéléments n'appartenant pas à la troisième bibliothèque par l'inverse du facteur de conversion en débit d'équivalent de dose de protection pour 1 Bq du radioélément de référence respectivement calculé derrière l'épaisseur maximale et l'épaisseur intermédiaire, l'activité équivalente en radioélément de référence étant égale à la somme des activités équivalentes ainsi calculées respectivement pour les radioéléments appartenant et n'appartenant pas à la troisième bibliothèque.

Dans un mode de réalisation de l'invention, le procédé de détermination de l'activité équivalente en radioélément de référence déterminé d'un échantillon irradié, les enceintes de protection étant constituées de deux matériaux différents A et B, dont les épaisseurs de blindage minimales et maximales sont respectivement $EA_{min}$, $EA_{max}$ et $EB_{min}$, $EB_{max}$, peut être caractérisé en ce que les activités équivalentes en radioéléments de référence $A_{équiv/A}$ et $A_{équiv/B}$ sont calculées à la troisième étape respectivement pour les matériaux A et B à partir de bibliothèques relatives à chacun des matériaux A et B, l'activité équivalente en radioélément de référence étant égale à la plus grande des activités équivalentes $A_{équiv/A}$ et $A_{équiv/B}$, l'épaisseur réduite étant choisie :

- plus petite que l'épaisseur minimale de blindage $EA_{min}$ en matériau A et l'épaisseur équivalente $EA_{équiv}EB_{min}$ de matériau A égale à l'épaisseur de matériau A offrant vis-à-vis d'une source de radioélément de référence le même facteur de protection que l'épaisseur minimale de blindage en matériau B $EB_{min}$, si la chambre d'ionisation et la chaîne de spectrométrie gamma sont placées derrière une épaisseur de blindage en matériau A, ou
- plus petite que l'épaisseur minimale de blindage $EB_{min}$ en matériau B et l'épaisseur équivalente $EB_{équiv}EA_{min}$ de matériau B égale à l'épaisseur de matériau B offrant vis-à-vis d'une source de radioélément de référence le même facteur de protection que l'épaisseur minimale de blindage en matériau A $EA_{min}$, si la chambre d'ionisation et la chaîne de spectrométrie gamma sont placées derrière une épaisseur de blindage en matériau B.

Dans un mode de réalisation de l'invention, le procédé de détermination de l'activité équivalente en un radioélément de référence déterminé d'un échantillon irradié peut être caractérisé en ce que les activités en source ponctuelle pour chacun des radioéléments de la première bibliothèque détectés par une chaîne de spectrométrie gamma et les limites de détection en source ponctuelle pour chacun des radioéléments de la deuxième bibliothèque non détectés par la chaîne de spectrométrie gamma sont calculées au cours d'une première étape, suivie d'une deuxième étape à laquelle lesdites activités en source ponctuelle et limites de détection sont converties en fluences photoniques par ordre d'énergie, une troisième étape calculant des fluences photoniques corrigées par une pondération des fluences photoniques par des coefficients de réponse de la chambre d'ionisation contenues dans la table de réponse de la chambre d'ionisation, lesdites valeurs reconstituées du débit d'équivalent étant obtenues par une pondération desdites fluences photoniques par les facteurs de conversion en débit d'équivalent de dose généré au niveau de la chambre d'ionisation compris dans la table de conversion en débit d'équivalent de dose derrière l'épaisseur réduite de protection du poste de mesure.

Dans un mode de réalisation de l'invention, le procédé de détermination de l'activité équivalente en un radioélément de référence déterminé d'un échantillon irradié peut être caractérisé en ce que la table de réponse de la chambre d'ionisation affecte à chaque bande d'énergie donnée $[E_i, E_f[$ le coefficient de réponse minimal lu sur la courbe de réponse de la chambre d'ionisation et correspondant à la plage d'énergies $[0, E_f]$.

Dans un mode de réalisation de l'invention, le procédé de détermination de l'activité équivalente en un radioélément de référence déterminé d'un échantillon irradié peut être caractérisé en ce que la valeur de débit de dose déclarée à la chambre d'ionisation est égale à la limite de détection $L_{de}$ si le débit de dose mesuré par la chambre d'ionisation est inférieur ou égal à un seuil de décision $S_{de}$, et est déclarée égale à la valeur nette de débit de dose mesurée par la chambre d'ionisation majorée d'une incertitude $\xi$de si le débit de dose mesuré par la chambre d'ionisation est supérieur au seuil de décision $S_{de}$.

Dans un mode de réalisation de l'invention, le procédé de détermination de l'activité équivalente en un radioélément de référence déterminé d'un échantillon irradié en présence d'un bruit de fond, peut être caractérisé en ce que lesdits seuil de décision $S_{de}$ et limite de détection $L_{de}$ sont donnés par la relation :

$$S_{d_e} = \frac{2 \cdot F \cdot e}{t} \cdot \left(1 + \sqrt{1 + \frac{2 \cdot D_0}{F \cdot e}}\right) \text{ et } L_{d_e} = \frac{4 \cdot F \cdot e}{t} \cdot \left(1 + \sqrt{1 + \frac{2 \cdot D_0}{F \cdot e}}\right) \quad ,$$

où : F désigne le coefficient d'étalonnage de la chambre d'ionisation pour le radioélément de référence, exprimé en Sv/Coulomb,

e désigne la charge de l'électron,

t désigne le temps de mesure de l'échantillon irradié,

$D_0$ désigne la dose générée par le bruit de fond pendant le temps t, exprimée en Sv.

Procédé de détermination de l'activité équivalente en un radioélément de référence déterminé d'un échantillon irradié en présence d'un bruit de fond selon l'une quelconque des revendications précédentes, caractérisé en ce que les seuil de décision $SD_{net}$ et limite de détection $LD_{net}$ servant à l'analyse de la soustraction pic à pic des spectres acquis par la chaîne de spectrométrie gamma, en l'absence et en la présence de l'échantillon à mesurer et qui sont exprimés en nombre de photons par seconde émis à l'énergie $E_i$ qui ont été complètement absorbés dans le détecteur par effet photoélectrique et qui proviennent uniquement de l'échantillon, sont données par la relation:

$$SD_{net} = K \cdot \sqrt{\frac{p'(a)}{t_m} + \frac{p'(a)}{t_0} + 5{,}042 \cdot \left(\frac{R \cdot B}{t_m^2} + \frac{R' \cdot B'}{t_0^2}\right)}$$

et

$$LD_{net} = \frac{K^2}{t_m} + 2 \cdot K \cdot \sqrt{\frac{p'(a)}{t_m} + \frac{p'(a)}{t_0} + 5{,}042 \cdot \left(\frac{R \cdot B}{t_m^2} + \frac{R' \cdot B'}{t_0^2}\right)} \; ,$$

où :

K est le coefficient de sécurité correspondant à une erreur de première et deuxième espèce toutes les deux prises égales,

p'(a) est la surface nette normalisée du pic d'absorption totale à l'énergie $E_i$ du spectre de bruit de fond déterminé en l'absence de l'échantillon, intégrée sur la région d'intérêt [$E_i$-a, $E_i$+a],

a définit la région d'intérêt [$E_i$-a, $E_i$+a] d'intégration de la surface du pic d'absorption totale,

R est la résolution de la chaîne de spectrométrie à l'énergie $E_i$ pour le spectre acquis en présence de l'échantillon et correspond à la largeur totale à mi-hauteur mesurée sur le pic net d'absorption totale,

R' est la résolution de la chaîne de spectrométrie à l'énergie $E_i$ pour le spectre du bruit de fond et correspond à la largeur totale à mi-hauteur mesurée sur le pic net d'absorption totale,

$t_m$ est le temps d'acquisition du spectre en présence de l'échantillon,

$t_0$ est le temps d'acquisition du spectre du bruit de fond,

B est la valeur moyenne du fond continu dans l'intervalle [$E_i$-a, $E_i$+a] du spectre acquis en présence de l'échantillon,

B' est la valeur moyenne du fond continu dans l'intervalle [$E_i$-a, $E_i$+a] du spectre du bruit de fond.

La présente invention a également pour objet un dispositif de mesure d'un échantillon irradié comprenant au moins un plan de travail apte à recevoir l'échantillon irradié et couvrant une épaisseur de blindage sous laquelle est disposé un caisson blindé caractérisé en ce que le caisson blindé comprend au moins une chambre d'ionisation et un détecteur de spectrométrie gamma associé à une chaîne de spectrométrie, et est disposé sous l'épaisseur de blindage sensiblement en regard de l'échantillon irradié, au moins la chambre d'ionisation et la chaîne de spectrométrie étant reliées à une unité de traitement mettant en oeuvre le procédé de détermination de l'activité équivalente en un radioélément de référence déterminé de l'échantillon irradié selon l'un des modes de réalisation de l'invention.

D'autres caractéristiques et avantages de l'invention apparaîtront à la lecture de la description, donnée à titre d'exemple, faite en regard des dessins annexés qui représentent :

- la figure 1, une vue en coupe schématique illustrant un dispositif de mesure disposé sous le plan de travail d'une unité de travail ou d'entreposage ;
- la figure 2, un logigramme illustrant un exemple de procédé de détermination de la grandeur caractéristique du procédé, selon un exemple de réalisatidn de l'invention ;
- la figure 3, un logigramme illustrant un exemple d'une étape de calcul de la source ponctuelle correspondant à un échantillon irradié, dans un mode de réalisation de l'invention ;
- la figure 4, un logigramme illustrant un exemple d'une étape de calcul de l'activité équivalente en $^{60}$Co, dans un exemple de réalisation de l'invention ;
- la figure 5, un logigramme illustrant un exemple d'une étape de calcul de la source ponctuelle représentative de la limite de détection d'activité équivalente en $^{60}$Co, dans un exemple de réalisation de l'invention ;
- la figure 6, un logigramme illustrant un exemple de méthode de calcul de la limite de détection d'activité équivalente en $^{60}$Co , dans un exemple de réalisation de l'invention.

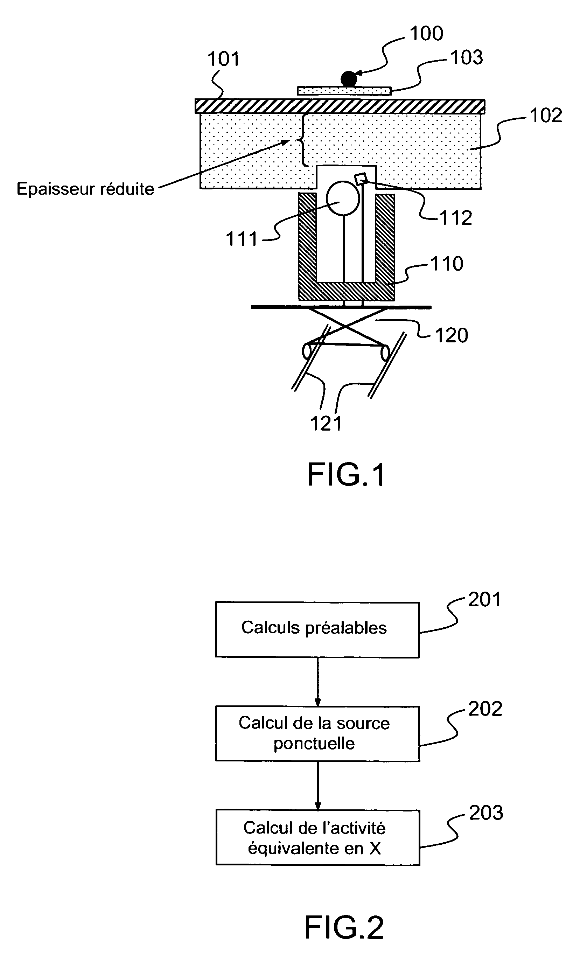

La figure 1 présente une vue en coupe schématique illustrant un dispositif de mesure disposé sous le plan de travail d'une unité de travail ou d'entreposage, permettant la mise en oeuvre d'un procédé selon un mode de réalisation de l'invention. D'une manière pratique, le procédé peut par exemple être mis en oeuvre dans une unité de traitement qui peut être interfacée avec les éléments constituant le dispositif de mesure décrit ci-après.

Un échantillon irradié 100 est disposé sur le plan de travail 101 d'une unité de travail dont les faces avant, arrière et le dessus ne sont pas représentés sur la figure. Le plan de travail 101 couvre une épaisseur de blindage 102 correspondant au blindage inférieur de l'unité de travail. De manière optionnelle, une plaque de blindage additionnel 103 peut être placée entre l'échantillon irradié 100 et le plan de travail 101. Un caisson blindé 110 dans lequel est implanté un dispositif de mesure décrit en détails ci-après, est placé sous l'épaisseur de blindage 102. La montée, la descente et le retrait du caisson blindé 110 pour les opérations de maintenance peuvent être réalisés par exemple au moyen d'une table élévatrice 120 pouvant ensuite être déplacée suivant des rails de guidage 121. Dans cet exemple de mode de réalisation, le dispositif de mesure implanté dans le caisson blindé 110 comprend une chambre d'ionisation 111 et un détecteur de spectrométrie gamma 112. Pour les réglages de mise au point, la position du dispositif de mesure à l'intérieur du caisson peut être ajustée en hauteur et en position transversale au moyen d'un support fixé à l'intérieur du caisson, non représenté sur la figure. Ce support permet également d'orienter la partie active du détecteur de spectrométrie gamma 112 vers le point de mesure central repéré sur le plan de travail 101. Un logement peut être réalisé dans la partie inférieure du blindage 102 dont les dimensions transverses doivent permettre au moment des réglages, de réaliser une remontée partielle du dispositif de mesure dans ce logement. Les dimensions transverses du logement doivent aussi être suffisantes pour couvrir la taille des échantillons recevables. La hauteur du logement est fonction de l'épaisseur réduite de blindage derrière laquelle doivent être réalisées les acquisitions de mesures du dispositif de mesure.

Dans un souci d'exploitation maximale des unités de travail et notamment de leurs équipements scientifiques, la présente invention propose de définir une grandeur opérationnelle, permettant une estimation au plus juste de l'exposition réelle que les échantillons génèrent au poste de travail des unités de travail, tout en tenant compte des estimations nécessaires liées à la fluctuation statistique du phénomène de radioactivité en présence. En effet, il n'est en pratique pas possible de mesurer une grandeur physique relative à la radioactivité avec une certitude de 100%, la radioactivité étant un phénomène aléatoire, pour lequel il est seulement possible d'estimer statistiquement les grandeurs physiques, à un risque d'erreur près donné. Pour que la prise en compte de ces estimations liées à la mesure nucléaire, qui est nécessaire pour garantir les objectifs de sûreté, n'aboutisse pas à surestimer la grandeur opérationnelle recherchée, différentes mesures nucléaires sont corrélées. La complémentarité des performances des appareils de détection employés : la chambre d'ionisation 111 et le détecteur de spectrométrie gamma 112, est dans ce but utilisée pour la détermination de la grandeur opérationnelle.

La grandeur opérationnelle élaborée à partir d'un poste de mesure et d'un traitement approprié conjuguant des mesures nucléaires, par exemple par l'intermédiaire du détecteur de spectrométrie gamma 112, et dosimétriques, par exemple par l'intermédiaire de la chambre d'ionisation 111, offre un compromis répondant au besoin d'une exploitation souple, réactive et au maximum des capacités de réception, tout en garantissant le respect d'exigence dosimétrique de sûreté et de radioprotection. Par rapport aux méthodes connues de l'état de la technique décrites précédemment, basées sur le calcul prévisionnel d'activités, une gestion basée sur la grandeur opérationnelle permet d'augmenter les limites d'acceptabilité, typiquement d'au moins un facteur 10 pour une majorité des échantillons activés, tout en garantissant le respect des objectifs de dose, même pour des échantillons inhabituels, par exemple des échantillons renfermant une activité importante de radioéléments émetteurs de raies gamma dont l'énergie est supérieure à 1,33 MeV.

Le procédé de détermination de la grandeur opérationnelle, impliquant le dispositif de mesure comprenant la chambre d'ionisation 111 et le détecteur de spectrométrie gamma 112, permet une gestion simple et sûre des échantillons irradiés puisque la seule grandeur opérationnelle permet la caractérisation d'un échantillon irradié 100 donné, où qu'il se situe dans le laboratoire. La valeur de la grandeur opérationnelle attachée à un échantillon est alors directement comparable à celle attachée à n'importe quel autre échantillon.

La grandeur opérationnelle proposée par la présente invention est une activité équivalente en un radioélément X déterminé, choisi de préférence parmi les radionucléides ayant le plus de chance d'être présents et d'être détectés en spectrométrie gamma. En effet, bien qu'en théorie il n'y ait aucune contrainte sur le choix du radioélément de référence X, l'effet Compton impose, dans le but d'optimiser l'estimation de la grandeur opérationnelle, de choisir comme référence un radioélément, même s'il n'est pas présent dans tous les échantillons, parmi ceux présentant des raies intenses d'énergies supérieures ou égales à celles du radioélément émetteur gamma majoritairement présent. Le choix définitif du radioélément X de référence repose également sur la vérification préalable que ses raies d'énergies sont dans les plages de mesure des appareils de détection 111, 112 du système de mesure. Il est également possible de choisir ces appareils afin de répondre à cette contrainte.

La présente invention permet un calcul précis de l'activité équivalente en X d'un échantillon irradié, prenant en considération les performances des appareils de mesure 111, 112 utilisés et rendant compte de l'exposition externe générée.

Dans un souci de simplification, la présente description se fonde sur le choix du $^{60}$Co comme radioélément de référence pour quantifier l'exposition externe due aux rayonnements gamma et aux rayonnements de freinage dus aux rayonnements béta. Ce choix correspond à un cas pratique courant où l'échantillon irradié 100 est majoritairement constitué d'aciers ferritiques, le $^{60}$Co étant alors le produit d'activation majoritaire, et se fonde également sur le fait que le $^{60}$Co possède deux raies intenses d'énergie facilement détectables en spectrométrie gamma, y compris derrière les épaisseurs de blindage présentes entre l'échantillon irradié 100 et les dispositifs de mesure 111, 112 dans le but d'éviter la saturation de ces derniers lorsque l'échantillon irradié 100 est fortement radioactif. Egalement, dans l'exemple développé dans la description ci-après, la plaque de blindage additionnelle 103, le caisson blindé 110, et l'épaisseur de blindage 102 sont en plomb. Le plan de travail 101 peut être en acier inoxydable. Ces configurations sont décrites à titre d'exemples particulièrement adaptés à des utilisations typiques, mais il est bien entendu que d'autres radioéléments de référence peuvent être envisagés, ainsi que d'autres types d'installations notamment en terme de nature de matériau de blindage, qui peut différer d'une unité de travail à l'autre au sein de la même installation.

L'épaisseur de blindage 102 présente entre les appareils de mesure 111, 112 et l'échantillon irradié 100 est tout au plus égale à l'épaisseur minimale de paroi de blindage des unités de travail de l'installation, c'est-à-dire l'épaisseur de blindage la plus faible de l'unité de travail la moins protégée. L'épaisseur maximale étant quant à elle désignée par l'épaisseur maximale de blindage rencontrée dans l'unité de travail la plus protégée avec prise en compté éventuelle de l'épaisseur de blindage des magasins présents dans cette unité de travail. L'épaisseur 102 est par la suite désignée épaisseur réduite du poste de mesure. L'épaisseur réduite est fixée en fonction de la gamme d'activité attendue des échantillons afin de ne pas saturer les appareils de mesure, notamment le détecteur de spectrométrie 112. Ainsi, pour une gamme haute d'activité, l'épaisseur réduite visée est au plus égale à l'épaisseur minimale de protection biologique des unités de travail, alors que pour une gamme plus basse, et notamment si les échantillons sont de très faible activité, il est préférable de diminuer l'épaisseur réduite, afin de ne pas affecter à de tels échantillons une activité plus grande que celle qu'ils ont réellement. Dans le cas où il est souhaité de couvrir une très large gamme, il est préférable de diminuer davantage l'épaisseur réduite et d'utiliser la plaque de blindage additionnel 103. La seule condition est que l'épaisseur réduite additionnée de l'épaisseur de la plaque de blindage additionnel 103 soit au total au plus égale à l'épaisseur minimale des parois de blindage des unités de travail. Il est en outre nécessaire d'offrir au système la possibilité de traiter ces deux configurations de mesure au choix de l'opérateur, par exemple via un logiciel d'interface, ou bien de manière automatique.

Les critères de débit de dose acceptables en face avant étant en général de l'ordre de quelques dizaines de μSv/h, l'épaisseur réduite doit être inférieure à l'épaisseur minimale des parois des unités de travail. Ainsi, à partir de la connaissance du terme source qui a été pris en compte lors de la conception pour le dimensionnement des unités de travail, il est possible de déterminer l'épaisseur réduite qui est la mieux adaptée pour les appareils de détection 111, 112, par le moyen de calculs ou bien d'essais expérimentaux.

La chambre d'ionisation 111 peut être reliée à un électromètre. Elle présente l'avantage d'être fiable et robuste. Il est par exemple possible de choisir la chambre d'ionisation 111 conforme à la norme européenne EN 60731. Cela permet d'une part de ne pas tenir compte du courant de fuite dans les expressions mathématiques du seuil de décision et de la limite de détection de la chambre d'ionisation 111, et d'autre part d'offrir une dispersion des réponses limitée à ± 10% pour un angle d'incidence du rayonnement compris entre ± 20 ° par rapport à l'axe perpendiculaire à l'axe de symétrie de la chambre d'ionisation 111, et donc de limiter l'influence de l'angle d'où provient le rayonnement. Il peut être avantageusement prévu de pouvoir régler en hauteur la position de la chambre d'ionisation 111, afin de garantir cet angle d'incidence pour la mesure, permettant ainsi de ne pas imposer de sens préférentiel pour le positionnement d'échantillons de forme allongée.

**EP 2 504 720 B1**

L'optimisation au plus juste de la valeur de la grandeur opérationnelle attachée à l'échantillon 100, impose le choix d'une chambre d'ionisation dont la réponse doit être étalonnée sur le radioélément de référence choisi et ayant idéalement une courbe de réponse la plus plate possible sur la gamme d'énergie de 0 à 4 MeV. Bien que les valeurs de réponse de la chambre d'ionisation 111 en fonction de l'énergie soient prises en compte dans la méthode d'élaboration de la grandeur opérationnelle, il est préférable pour optimiser la valeur de la grandeur opérationnelle, que la courbe de réponse en énergie ne fluctue pas de plus de 10% autour de la valeur médiane de 1.

Le détecteur de spectrométrie gamma 112 peut être du type CdZnTe formant avec un préamplificateur relié à un analyseur multi-canal et les dispositifs de traitement associés, comprenant notamment un logiciel de traitement spectral, non représentés sur la figure, une chaîne de spectrométrie gamma. Le détecteur de spectrométrie gamma 112 peut par exemple être de forme hémisphérique afin d'offrir un angle de détection plus large qu'un détecteur plat, permettant ainsi de rapprocher davantage le détecteur de spectrométrie gamma 112 de l'épaisseur réduite de blindage 102 tout en conservant une surface apparente de détection des échantillons dimensionnée à la taille du logement et ainsi permettre un choix plus large de la gamme de mesure. Avantageusement, il est possible de positionner le préamplificateur à 90° du détecteur de spectrométrie gamma 112, permettant ainsi de positionner l'ensemble détecteur de spectrométrie gamma 112 / préamplificateur parallèlement à la chambre d'ionisation 111 afin que le détecteur de spectrométrie gamma 112 puisse viser le point de mesure.

Pour la sûreté, seule importe la recherche des radioéléments qui sont plus pénalisants que le radioélément de référence, le $^{60}$Co dans l'exemple de la description, c'est-à dire les radioéléments pour lesquels une épaisseur de blindage donné serait moins protectrice que si cette source était constituée, à activité égale, de $^{60}$Co. Aussi, pour ces radioéléments, l'activité équivalente en $^{60}$Co est alors à calculer derrière l'épaisseur maximale de blindage pouvant être rencontrée entre les échantillons et l'opérateur ; Cette dernière prenant en compte d'éventuels magasins, il est avantageusement possible, dans ce cas, de définir une activité maximale équivalente par magasin afin de relever la limite maximale d'activité équivalente recevable dans l'unité de travail concernée. Pour tous les autres radioéléments, c'est-à-dire les radioéléments moins pénalisants que le $^{60}$Co, il importe pour la sûreté que le calcul final de l'activité équivalente en $^{60}$Co soit réalisé pour une épaisseur comprise entre l'épaisseur réduite du poste de mesure et l'épaisseur minimale. L'utilisation du détecteur de spectrométrie gamma 112 en complément de la chambre d'ionisation 111 mesurant un débit d'équivalent de dose, a donc pour objectif principal de rechercher dans l'échantillon irradié 100 les radioéléments classés plus pénalisants que le $^{60}$Co et de quantifier leurs contributions aux valeurs de débit d'équivalent de dose. Or, l'épaisseur de plomb derrière laquelle sont réalisées les mesures a pour conséquence de dégrader les raies d'énergies émises par les radioéléments contenus dans l'échantillon irradié 100. Cette dégradation du spectre, résultat de l'interaction des rayonnements avec la matière est causée :

- par l'effet photoélectrique dans le plomb qui se traduit par l'absorption totale de l'énergie d'une partie des raies émises par les radioéléments contenus dans l'échantillon,
- par l'effet Compton qui « transforme » les raies d'énergies émises par l'échantillon en un continuum d'émissions gamma de basses énergies, ou "front Compton",
- par l'effet de paire qui se produit pour des énergies de rayonnement gamma supérieures à 1 MeV, et qui se traduit par la création d'un électron et d'un positron.

Il est à noter que de par les effets précités, le spectre obtenu par le détecteur de spectrométrie gamma 112 doit présenter un front Compton important qui masque les raies caractéristiques de basses énergies des radioéléments contenus dans l'échantillon. Par conséquent, seules les raies d'énergies supérieures et d'intensité suffisante ont des chances de pouvoir être quantifiées. Il n'est donc pas utile que le logiciel de spectrométrie gamma traite les basses énergies. D'une manière typique, avec des sources de $^{60}$Co, l'effet Compton dans le plomb est en effet trop important pour des énergies inférieures à 700 KeV pour qu'il soit possible de distinguer une raie caractéristique. En tout état de cause, cette valeur seuil n'a pas une grande influence sur les résultats issus de la méthode de calcul de l'activité équivalente en radioélément $^{60}$Co telle que proposée par la présente invention, car seules importent les mesures spectrométriques des énergies au moins supérieures à 1,17 MeV, correspondant à l'énergie minimale des raies du radioélément de référence $^{60}$Co . En effet, les énergies inférieures sont prises en compte par la chambre d'ionisation 111.

La figure 2 présente un logigramme illustrant un exemple de procédé de détermination de la grandeur caractéristique du procédé, selon un exemple de réalisation de l'invention.

Dans l'exemple illustré par la figure 2, les blindages de toutes les unités de travail sont constitués du même matériau.

Il est à noter pour la suite que tous les calculs présentés ci-dessous peuvent être mis en oeuvre dans une unité de traitement spécifique par exemple par l'intermédiaire d'une programmation adéquate du logiciel d'exploitation de cette dernière. De la même manière, les différentes bibliothèques, tables de conversion, et d'une manière générale toutes les données nécessaires au traitement, peuvent être stockées dans une mémoire de l'unité de traitement, ou bien dans un dispositif externe de stockage de données.

Un procédé de calcul d'une grandeur caractéristique selon un mode de réalisation de la présente invention peut comprendre 3 étapes : une étape de calculs préalables 201, une étape de calcul de la source ponctuelle 202, et une étape de calcul de l'activité équivalente en radioélément de référence X 203.

Lors de l'étape de calculs préalables 201, dans le but de rechercher dans l'échantillon irradié 100, en référence à la figure 1, les radioéléments classés plus pénalisants que le radioélément de référence $^{60}$Co à l'aide de la chaîne de spectrométrie gamma, il est nécessaire d'établir au préalable la liste des radioéléments potentiellement plus pénalisants que le $^{60}$Co.

Il est cependant à noter qu'une recherche infructueuse de tels radioéléments dans l'échantillon irradié 100 ne peut conduire à conclure à l'absence de ces radioéléments dans l'échantillon irradié 100 : il est par conséquent nécessaire de prendre en considération les limites de détection de ces radioéléments.

Pour établir la liste des radioéléments plus pénalisants que le radioélément de référence $^{60}$Co, il est nécessaire dans un premier temps, d'effectuer un tri sur une bibliothèque exhaustive de tous les radioéléments existants, par une sélection de ceux qui présentent au moins une raie d'énergie supérieure à 1,17 MeV, correspondant à la raie d'énergie la plus faible du radioélément de référence $^{60}$Co. Bien sûr, l'exhaustivité de la bibliothèque de travail dépend des modes de production des radioéléments et donc des types d'installations pouvant être à l'origine des échantillons irradiés.

A partir de cette liste, des calculs de débit d'équivalent de dose sont à réaliser : d'une part pour l'épaisseur de l'unité de travail la moins protégée, c'est-à-dire l'épaisseur minimale de blindage, et d'autre part pour l'épaisseur maximale de blindage, c'est-à-dire l'épaisseur maximale de protection biologique pouvant être présente entre l'échantillon irradié 100, éventuellement placé dans un magasin, et l'opérateur situé en face avant de n'importe quelle unité de travail. Ces calculs ont pour but de déterminer pour chacun des radioéléments, le facteur de protection apporté par l'écart entre les extrêmes de l'épaisseur de blindage en plomb pouvant être rencontrée en cours d'exploitation. Le facteur de protection se définit comme le rapport des débits de dose calculés avec respectivement les épaisseurs minimale et maximale de blindage.

Les calculs sont réalisés avec une modélisation simple en source ponctuelle du radioélément considéré de la liste précitée, avec un écran plan infini et des distances source - écran, écran - point de calcul, et activité de la source au libre choix, mais définitivement fixées pour tous les calculs. Il est important de conserver la même modélisation géométrique pour tous les calculs. Tous les radioéléments dont le facteur de protection est alors inférieur à celui du $^{60}$Co sont classifiés comme étant plus pénalisants que le $^{60}$Co.

Cette classification des radioéléments étant réalisée, il est alors possible, dans un mode de réalisation de l'invention, de les différencier selon leurs installations de production d'origine, par exemple différencier ceux qui sont susceptibles d'être présents dans un combustible irradié de ceux qui sont susceptibles d'être présents dans un matériau activé autre que combustible. En effet, dans un combustible irradié, les radioéléments sont produits par fission ou par capture neutronique, alors que pour les autres matériaux, ils sont issus de l'activation neutronique, photonique, protonique ou ionique. Suivant le mode de formation considéré, certains radioéléments seront présents ou absents dans l'échantillon irradié 100. Il est alors possible de constituer une bibliothèque des radioéléments plus pénalisants que le radioélément de référence $^{60}$Co pour chacun des cas où l'origine des échantillons permet de différencier ces bibliothèques. Dans l'exemple qui est donné dans la présente description, cette distinction est limitée aux cas des combustibles irradiés d'une part et des matériaux activés par activation neutronique, photonique, protonique ou ionique d'autre part.

Dans le cas où l'échantillon irradié 100 est un tronçon de crayon combustible comprenant un combustible irradié et une gaine activée, il est avantageux de faire le choix de réaliser une bibliothèque supplémentaire tenant compte de la présence simultanée dans l'échantillon de combustible irradié et de matériaux activés.

Il est ainsi à noter que pour optimiser la valeur de la grandeur opérationnelle d'un échantillon activé, les bibliothèques peuvent être différenciées en fonction du type d'installation à l'origine des radioéléments présents dans un échantillon, réduisant ainsi le nombre de radioéléments figurant dans chaque bibliothèque. Cependant il peut être également avantageux de disposer d'une bibliothèque plus générale permettant de traiter n'importe quel échantillon activé sans avoir à connaître le type d'installation à l'origine son activation.

La non-détection par la chaîne de spectrométrie gamma, de la présence des radioéléments plus pénalisants que le radioélément de référence $^{60}$Co, ne peut pas amener à conclure à l'absence de ces radioéléments dans l'échantillon irradié 100. Cette détection est en effet liée aux performances de la chaîne de spectrométrie gamma, au bruit de fond ambiant, mais aussi aux conditions de mesures et à la nature du phénomène physique mesuré, de caractère aléatoire. Afin de prendre en considération cette non-détection, il est nécessaire de faire l'hypothèse de la présence de ces radioéléments non identifiés, et de leur affecter une limite de détection, correspondant à l'activité minimale décelable. Cette limite de détection est déterminée habituellement sur la base d'un taux de confiance, par exemple d'une valeur typique de 97,5%.

Pour le calcul de l'activité équivalente en $^{60}$Co, il est également nécessaire de tenir compte des performances de la chambre d'ionisation 111, mesurant le débit d'équivalent de dose. Ces performances sont prises en compte à l'étape de calcul de la source ponctuelle 202, via la limite de détection quand la mesure nette de débit d'équivalent de dose, c'est à dire la différence des valeurs de débit d'équivalent de dose mesurées par le poste de mesure respectivement en présence et en l'absence de l'échantillon est inférieure au seuil de décision, ainsi que via la courbe de réponse en énergie de la chambre d'ionisation 111, d'une manière similaire à la courbe d'efficacité du détecteur de spectrométrie gamma 112.

La courbe de réponse de la chambre d'ionisation 111 prend en compte soit la perte réelle de représentativité de la mesure, soit la perte supposée totale quand la courbe de réponse n'est pas connue au-delà d'une certaine énergie. Cette courbe de réponse est ainsi utilisée pour corréler les activités de la source ponctuelle initialement issues des résultats de traitement de la chaîne de spectrométrie gamma, à la valeur de débit de dose affichée par la chambre d'ionisation 111 en tenant compte des performances supposées de cette dernière dans le pire cas. Il est à noter que ces performances jugées en pire cas garantissent le caractère conservatif de la correction apportée à la source ponctuelle et, partant, de l'activité équivalente en $^{60}$Co.

La méthode de calcul de l'activité équivalente en $^{60}$Co proposée par la présente invention repose sur un tri sélectif entre les radioéléments classifiés plus ou moins pénalisants que le radioélément de référence $^{60}$Co, selon leur efficacité biologique à traverser le plomb.

Il est à noter qu'il est également envisageable d'établir la méthode de calcul en se fondant uniquement sur le tri par fluence énergétique de tous les radioéléments potentiellement émetteurs de raies d'énergies supérieures à 1,17 MeV ; cependant dans un tel cas, le nombre élevé de raies conduit en cas de non-détection à la prise en compte d'un nombre plus élevé de limites de détection, et partant à majorer davantage l'activité équivalente en $^{60}$Co affectée à chaque échantillon, sans que cela ne soit justifié.

Il est également nécessaire, au préalable de l'étape de calcul de la source ponctuelle 202 et de l'étape de calcul de l'activité équivalente en radioélément de référence 203, de constituer une pluralité de bibliothèques de radioéléments. Le type d'échantillon irradié : combustible irradié ou autre matériau irradié, peut être avantageusement spécifié, ainsi qu'il est mentionné précédemment. Le type d'échantillon peut alors être identifié par le logiciel, par exemple au moyen d'une saisie par l'opérateur. A un type donné d'échantillons, peuvent alors être associées trois bibliothèques :

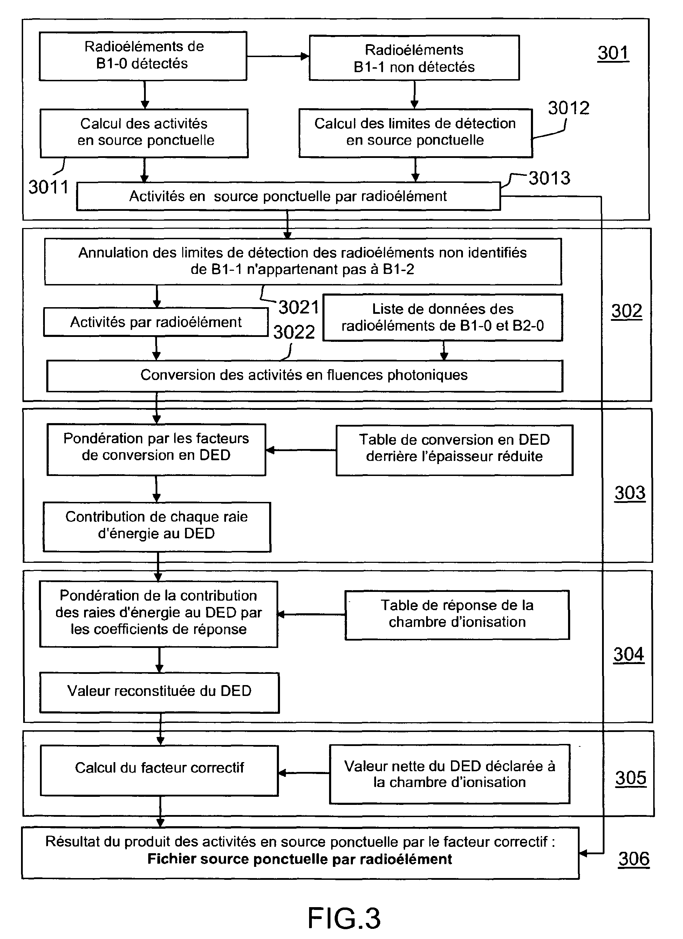

- une première bibliothèque, qui est une bibliothèque exhaustive de radioéléments potentiels, utilisée par le logiciel de traitement du spectre acquis par la chaîne de spectrométrie gamma, afin d'identifier les radioéléments à l'origine des pics d'absorption totale apparaissant dans le spectre. La première bibliothèque contient nécessairement les radioéléments de la seconde bibliothèque décrite ci-après ;
- une deuxième bibliothèque servant au calcul de la source ponctuelle décrit ci-après en référence à la figure 3, et qui contient :

    o les radioéléments ayant au moins une raie d'énergie supérieure à 1,33 MeV, afin de corriger la perte supposée totale de réponse de la chambre d'ionisation 111 choisie ; cette correction est dans l'exemple de la description nécessaire, car la courbe de réponse de la chambre d'ionisation 111 n'est pas connue au-delà de 1,33 MeV : aussi, par défaut, cette réponse est supposée nulle. Cette liste est optionnelle si la courbe de réponse de la chambre d'ionisation est connue sur la plage de 0 à 4 MeV,
    o les radioéléments plus pénalisants que le radioélément de référence $^{60}$Co, afin de tenir compte des limites de performances du poste de spectrométrie gamma via les limites de détection ;

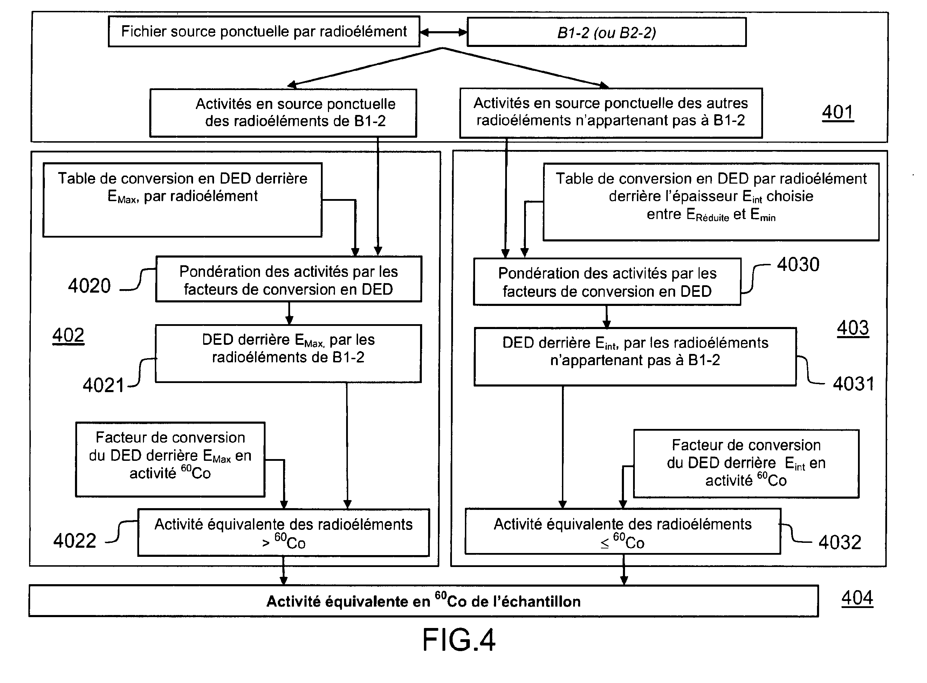

- une troisième bibliothèque utilisée spécifiquement à l'étape de calcul de l'activité équivalente en $^{60}$Co décrite ci-après en référence à la figure 4, et qui contient uniquement les radioéléments identifiés plus pénalisants que le radioélément de référence $^{60}$Co.

Il est à noter qu'en cas de réponse connue de la chambre d'ionisation sur la plage d'énergies s'étalant de 0 à 4 MeV, les deuxième et troisième bibliothèques sont confondues.

Pour la suite, un échantillon de type combustible irradié est dit de "type 1 ", et un échantillon de tout autre type est dit de "type 2". On note alors respectivement B1-0, B1-1 et B1-2 respectivement les première, deuxième et troisième bibliothèques correspondant à un échantillon de type 1, et B2-0, B2-1 et B2-2 respectivement les première, deuxième et troisième bibliothèques correspondant à un échantillon de type 2.

En prenant en considération les deux types d'échantillons 1 et 2, six bibliothèques sont constituées au total une fois pour toutes, indépendamment de la mesure des échantillons irradiés.

Avantageusement, pour une utilisation optimale répondant aux seuls besoins du système de mesure, il est possible d'affiner les données nucléaires pertinentes devant être contenues dans ces bibliothèques. En effet, le traitement du spectre sur les basses énergies n'étant pas réalisé, il s'avère par exemple inutile de faire une acquisition sur les basses énergies, qui par ailleurs dégrade la résolution en énergie. Aussi, la méthode de recherche des radioéléments pouvant être à l'origine des raies apparaissant sur le spectre, peut s'appuyer préférentiellement sur les raies caractéristiques ayant les énergies et les intensités les plus grandes. En pratique, il faut donner toutes les chances aux radioéléments constituant les différentes bibliothèques d'être détectés. A cet effet, les caractéristiques des radioéléments constitutifs des différentes bibliothèques utilisées peuvent avantageusement être élaborées sur les bases suivantes :

- seuls les radioéléments de période radioactive supérieure à une période déterminée, par exemple de 10 jours, peuvent être considérés, compte tenu des temps de refroidissement constatés entre la fin des irradiations et la réception de la matière dans le laboratoire objet de l'application citée en exemple. En effet on considère qu'au delà d'un temps de refroidissement correspondant à 10 périodes radioactives, les radioéléments concernés ont disparu, et/ou

- les radioéléments émetteurs béta purs, dont les produits de filiation ne sont pas émetteurs gamma, peuvent être supprimés, et/ou

- les radioéléments émetteurs béta purs dont au moins un des produits de filiation est émetteur gamma avec une période radioactive inférieure ou égale à la période déterminée citée ci-dessus, par exemple de 10 jours, peuvent être affectés des raies caractéristiques de ces émetteurs gamma, avec prise en compte de leur rapport de production et de branchement pour le calcul d'intensité se rapportant au radioélément émetteur béta pur considéré, et/ou

- toutes les raies gamma d'énergie inférieure à 700 KeV peuvent être supprimées, cette valeur seuil résultant du choix du radioélément de référence donné dans cet exemple, c'est à dire le $^{60}$Co, et de la nature du matériau constituant la protection biologique donnée dans cet exemple, c'est-à-dire le plomb, dès lors qu'il subsiste, après cette opération, au moins une raie d'énergie supérieure à 700 KeV dans le radioélément considéré, et/ou

- les paquets de raies dont l'énergie est très proche et comprise dans un intervalle égal à la résolution de la chaine de spectrométrie gamma, peuvent être remplacés par une raie unique à laquelle est affectée l'énergie de la raie la plus intense du paquet, et l'intensité totale du paquet considéré, et/ou

- toutes les raies d'intensité, y compris celles résultant de l'opération précitée le cas échéant, par exemple inférieures ou égales à 5% peuvent être supprimées, dès lors qu'il subsiste, après cette opération, au moins une raie d'intensité supérieure à 5%, et dès lors qu'il n'existe pas un autre radioélément de la liste présentant les mêmes raies d'énergie. En effet, deux radioéléments peuvent présenter les mêmes raies d'énergie, même avec des intensités identiques, mais il est nécessaire qu'ils puissent être distingués par au moins une raie d'énergie, car en cas de faible comptage, le logiciel de spectrométrie gamma n'est pas capable de les différencier, de par l'estimation de leur période radioactive.

Le formalisme des données nucléaires figurant dans les bibliothèques est imposé par le logiciel de spectrométrie utilisé. Le formalisme typique suivant peut par exemple être employé : une ligne précisant le nom du radioélément, suivi de sa période radioactive, du nombre total de raies d'énergie, une ligne précisant l'énergie de la première raie, en ordre croissant, suivie de son intensité et ainsi de suite jusqu'à la dernière raie. Le radioélément suivant est par exemple séparé du précédent par un caractère spécial de type saut de ligne.

L'étape de calcul de la source ponctuelle 202 équivalente à l'échantillon mesuré est décrite en détails ci-après en référence à la figure 3. Le calcul de la source ponctuelle prend en considération les limites de performances des appareils de mesure 111, 112 en référence à la figure 1. Ces limites de performances sont notamment prises en compte via les limites de détection des radioéléments non détectés et la courbe de réponse de la chambre d'ionisation 111.

L'étape 203 de calcul de l'activité équivalente en $^{60}$Co, dans l'exemple de la présente description, est décrite en détails ci-après en référence à la figure 4. A partir de la source ponctuelle ainsi déterminée à l'issue de l'étape de calcul 202, deux calculs d'équivalence en $^{60}$Co sont réalisés : un premier calcul pour les radioéléments plus pénalisants que le $^{60}$Co, derrière l'épaisseur maximale de protection biologique, et un second calcul pour les autres radioéléments, derrière une épaisseur choisie entre l'épaisseur réduite du poste de mesure et l'épaisseur minimale de protection biologique. L'activité équivalente en $^{60}$Co de l'échantillon est alors égale à la somme des activités équivalentes calculées respectivement pour les radioéléments plus pénalisants que le $^{60}$Co, et les radioéléments moins pénalisants que le $^{60}$Co.

La figure 3 présente un logigramme illustrant un exemple de l'étape de calcul de la source ponctuelle correspondant à un échantillon irradié, dans un mode de réalisation de l'invention.

Dans l'exemple de réalisation illustré par la figure 3, le calcul de la source ponctuelle 202, en référence à la figure 2, peut se décomposer en six étapes 301 à 306 décrites en détails ci-après.

La première étape 301 permet le calcul des activités en source ponctuelle des radioéléments identifiés et non identifiés par la chaîne de spectrométrie gamma. La première étape 301 est suivie d'une pluralité d'étapes 302 à 305 aboutissant au calcul du facteur correctif à appliquer dans une sixième étape 306 aux activités de la source ponctuelle déterminées à la première étape 301. Le facteur correctif permet de corréler les résultats de mesures issus de la chaîne de spectrométrie gamma, après prise en compte de sa courbe d'efficacité globale, aux résultats de mesures affichés par la chambre d'ionisation tenant compte de sa courbe de réponse. Cette correction permet alors d'étalonner les activités de la source ponctuelle initialement issues des résultats de traitement de la chaîne de spectrométrie gamma, de telle sorte que l'exposition ainsi générée par la source ponctuelle corrigée et censée être affichée par la chambre d'ionisation 111, c'est-à-dire la valeur reconstituée du débit de dose que mesurerait la chambre d'ionisation tenant compte de ses performances supposées au pire, soit égale à la valeur nette affichée par la chambre d'ionisation 111 à l'issue des mesures. Le facteur correctif a donc pour objet de donner une réalité physique, quant à ses effets en terme d'exposition externe, à la source ponctuelle telle que définie, notamment parce qu'elle comptabilise des limites de détection. Le facteur correctif, qui pondère de manière globale les activités initialement déterminées pour la source ponctuelle, permet de conserver le poids important volontairement accordé aux radioéléments plus pénalisants que le radioélément de référence, dans la source ponctuelle représentant l'échantillon. Aussi, pour tenir compte du cas particulier où la courbe de réponse de la chambre d'ionisation n'est pas connue au delà d'une valeur seuil d'énergie, la valeur seuil étant nécessairement supérieure ou égale aux énergies des raies du radioélément de référence choisi, il est avantageusement possible de ne pas comptabiliser dans le calcul du facteur correctif et plus précisément dans le calcul de la valeur reconstituée du débit d'équivalent de dose que mesurerait la chambre d'ionisation 111, la contribution apportée par les radioéléments moins pénalisants que le radioélément de référence qui ont au moins une raie d'énergie supérieure à la valeur seuil précitée et qui non pas été identifiés.

La première étape 301 distingue les radioéléments issus de la première bibliothèque, c'est-à-dire la bibliothèque B1-0 ou B2-0 suivant le type d'échantillon irradié considéré, à ceux issus de la deuxième bibliothèque B1-1 ou B2-1. D'une manière typique, un logiciel de traitement de spectrométrie gamma dispose de deux spectres : le spectre de bruit de fond acquis au préalable sur lequel un traitement a déjà été réalisé, et le spectre en présence de l'échantillon positionné sur le poste de mesure dont l'acquisition vient de se terminer. Le traitement séparé des spectres permet d'identifier les pics d'absorption totale, d'en calculer les aires brutes et nette ainsi que l'aire du fond continu, le seuil de décision attaché à un pic et la limite de détection. Il identifie les pics détectés correspondant aux énergies des raies des radioéléments appartenant à la première bibliothèque B1-0 ou B2-0. Lors du traitement du spectre acquis en présence de l'échantillon, le logiciel de traitement de spectrométrie gamma effectue pour les radioéléments détectés, une soustraction pic à pic du bruit de fond et réalise à une première sous-étape 3011 un calcul des activités en source ponctuelle selon des techniques en elles-mêmes connues qui s'appuient notamment sur l'établissement préalable de la courbe d'efficacité globale de la chaîne de spectrométrie gamma dans les conditions de mesure du poste de mesure.

Pour les radioéléments non détectés sur le spectre de l'échantillon, le logiciel de traitement de spectrométrie gamma réalise un calcul de limites de détection dans une deuxième sous-étape 3012, sur la base de l'analyse du seul spectre acquis en présence de l'échantillon. Or, les méthodes de calcul usuelles du seuil de décision et de la limite de détection utilisées pour le traitement d'un spectre unique ne sont pas représentatives de la soustraction de deux spectres. Aussi, il est proposé des méthodes de calcul du seuil de décision et de la limite de détection qui doivent être appliquées sur les résultats issus de la soustraction du bruit de fond. Il est à noter que les expressions peuvent être reformulées de façon à réutiliser les valeurs de seuil de décision et de limite de détection fournies par le logiciel de spectrométrie gamma lors des traitements séparés de chaque spectre.

Pour calculer les activités en source ponctuelle il est nécessaire d'établir au préalable la courbe d'efficacité globale de la chaine de spectrométrie gamma. L'efficacité globale à l'énergie $E_i$ est définie comme le rapport du nombre d'évènements net comptabilisés dans le pic d'absorption totale à l'énergie $E_i$ du détecteur de spectrométrie gamma et le nombre de photons émis à l'énergie $E_i$ pendant le même temps de mesure par une source ponctuelle qui serait placée à l'endroit de l'échantillon. Cette efficacité prend donc en compte la géométrie du poste de mesure telle que les différents écrans présents entre l'échantillon à mesurer et le détecteur de spectrométrie gamma. En parallèle, pour les radioéléments appartenant à la deuxième bibliothèque B1-1 ou B2-1 qui ne sont pas détectés par la chaîne de spectrométrie gamma, sur l'hypothèse que ces radioéléments sont effectivement présents dans l'échantillon irradié, un calcul des limites de détection en source ponctuelle est réalisé à la deuxième étape 3012 suivant les méthodes de calcul décrites ci-après. De la sorte, des activités en source ponctuelle de tous les radioéléments, qu'ils soient détectés ou non par la chaîne de spectrométrie gamma, sont déterminées à l'issue d'une troisième sous-étape 3013 de la première étape 301.

Il est en premier lieu rappelé que les évènements résultant de l'interaction photoélectrique du rayonnement gamma incident avec le matériau du détecteur donnent lieu à une impulsion dont la hauteur est proportionnelle à l'énergie incidente de ce rayonnement. D'une manière typique, une échelle de comptage multi-canal récupère cette impulsion et la comptabilise, ou la stocke, dans un canal, avec un pas de valeur déterminée, la valeur comptabilisée étant proportionnelle à la hauteur de l'impulsion et donc proportionnelle à l'énergie du rayonnement incident sur le détecteur ayant donné lieu à l'évènement. Après un temps de mesure donné, l'échelle de comptage multi-canal permet de comptabiliser dans chaque canal le nombre d'évènements ayant eu lieu. Un étalonnage préalable en énergie de la chaîne de spectrométrie gamma permet de faire la correspondance entre chaque canal et l'énergie du rayonnement incident sur le détecteur. La représentation du nombre d'évènements acquis pendant un temps de mesure donné en fonction du numéro de canal ou de l'échelle des énergies est désigné "spectre". Le nombre de canaux et le pas du canal déterminent la plage d'énergie de l'acquisition du spectre. Le spectre est ensuite traité par le logiciel de la chaîne de spectrométrie gamma selon de techniques connues afin de repérer dans celui-ci, les pics correspondant à une absorption totale dans le détecteur, de l'énergie des raies caractéristiques émises par les radioéléments potentiels de l'échantillon à mesurer. Lorsque ces pics sont identifiés, le logiciel de traitement intègre le nombre d'évènements comptabilisés par l'échelle de comptage multi-canal dans les canaux de la région d'intérêt du pic identifié. Le traitement d'un spectre réalisé par les logiciels de spectrométrie gamma pouvant être effectué suivant des techniques en elles-mêmes connues, il est présenté succinctement ci-après un exemple de mode de traitement de spectre permettant de définir certaines grandeurs utilisées en mesures par spectrométrie gamma, telles que la région d'intérêt du pic, le seuil de décision et la limite de détection.

Un spectre gamma de mesure d'un échantillon se présente sous la forme d'un fond continu décroissant avec l'énergie, sur lequel se superposent les pics d'absorption totale. Le fond continu est représentatif des interactions par effet Compton des rayonnements gamma émis par l'échantillon irradié avec les matériaux de structure entourant le détecteur, notamment les écrans interposés entre l'échantillon et le détecteur, ou avec le matériau-même du détecteur. A ces phénomènes s'ajoutent également les interactions des rayonnements d'origines tellurique et cosmique, et de rayonnements parasites extérieurs à la mesure provenant par exemple de la présence d'un magasin d'entreposage d'échantillons. Ces interactions sont alors mesurées en l'absence de l'échantillon irradié, via l'acquisition du spectre de bruit de fond. L'acquisition du spectre de bruit de fond est alors réalisée en même temps que la mesure par la chambre d'ionisation du débit d'équivalent de dose généré par le bruit de fond. Comme cela est décrit dans la suite, cette dernière valeur est utilisée à l'étape 202 en référence à la figure 2.

L'apparition des pics d'absorption totale dépend alors de l'intensité des raies gamma émises et des fluctuations statistiques de comptage dans chacun des canaux de la région d'intérêt du pic. Dans le but de minimiser ces fluctuations, il convient de choisir la région d'intérêt qui optimise le rapport signal sur bruit.

Le signal est représenté par l'aire nette du pic d'absorption totale intégrée sur une région d'intérêt (E-a, E+a).

En supposant que le pic d'absorption peut être décrit par une courbe de Gauss et que le fond continu peut être considéré comme constant sur un intervalle restreint, le rapport signal sur bruit s'exprime sous la forme :

$$R = \frac{\displaystyle\int_{E-a}^{E+a} A \cdot e^{-\frac{(x-E)^2}{2\sigma^2}} \cdot dx}{2 \cdot a \cdot B} \qquad (1),$$

où E désigne l'énergie centrale du pic d'absorption totale,

a définit les bornes de la région d'intérêt et donc d'intégration de l'aire du pic,

A désigne la hauteur du pic,

$\sigma$ désigne l'écart type de la courbe de Gauss,

B désigne la valeur moyenne du fond continu dans l'intervalle [E-a, E+a].

La valeur de a correspondant au rapport le plus élevé s'obtient alors en annulant la dérivée partielle suivante :

$$\frac{\partial}{\partial a}\left[\frac{\displaystyle\int_{E-a}^{E+a} A \cdot e^{-\frac{(x-E)^2}{2\sigma^2}} \cdot dx}{2 \cdot a \cdot B}\right] = 0 \qquad (2),$$

ou encore, en posant t = (x-E)/$\sigma$, par la relation suivante :

$$\frac{\partial}{\partial a}\left[\frac{\displaystyle\int_{-a/\sigma}^{a/\sigma} e^{-\frac{t^2}{2}} \cdot dt}{a}\right] = 0 \qquad (3).$$

La relation (3) admet pour solution : a = 1,4.$\sigma$

L'aire du pic d'absorption totale sur l'intervalle [E -1,4$\sigma$; E + 1,4$\sigma$] correspond alors à 83,8 % de l'intégrale du pic sur l'intervalle infini. L'intervalle [E -1,4$\sigma$; E + 1,4$\sigma$] est alors désigné plage de normalité de niveau de confiance égal à 83,8%.

La valeur de a diffère selon les méthodes employées, et présente en pratique une faible influence sur les résultats de mesure. Il est par exemple possible de retenir la valeur préconisée par le groupe de travail de normalisation n°5 du Comité d'Instrumentation de Radioprotection qui adopte une valeur de 2a = 5,92σ. L'aire du pic d'absorption totale sur l'intervalle [E - 5,92σ ; E + 5,92σ] est alors la plage de normalité de niveau de confiance égal à 99,7%.

Par ailleurs, on appelle "seuil de décision" la limite à partir de laquelle au risque α près, un pic détecté est considéré comme vrai. Le risque α est donc le risque de faux positif, c'est-à-dire le risque de conclure à tort sur la base d'un pic détecté, qu'il existe un pic, alors qu'en réalité il n'en existe pas. Selon cette définition, le seuil de décision est alors directement relié à l'erreur statistique commise sur l'intégrale du pic d'absorption totale.

Dans ces conditions, il peut être démontré, qu'en fixant un risque α égal à 2,5%, le seuil de décision, noté SD, est donné par la relation suivante

$$SD = 4,41 \cdot \sqrt{R \cdot B} \qquad (4),$$

où : R désigne la largeur totale à mi-hauteur du pic d'absorption totale supposé de forme gaussienne, désignée également "résolution" de la chaîne de spectrométrie,
B désigne la valeur moyenne du fond continu dans l'intervalle [E-R, E+R].

Ainsi, si l'aire mesurée du pic d'absorption totale est supérieure à la valeur du seuil de décision, il est possible de conclure avec une certitude de 97,5 %, que la grandeur physique recherchée est présente dans l'échantillon ou dans le bruit de fond selon le spectre considéré.

Dans le cas contraire, où l'aire mesurée du pic d'absorption totale est inférieure à la valeur du seuil de décision, il est possible de conclure que la grandeur physique est absente de l'échantillon ou du bruit de fond, avec un risque β de conclure à tort que la grandeur recherchée est absente de l'échantillon ou du bruit de fond alors qu'elle y est effectivement présente. Il peut être alors démontré que la valeur minimale de l'aire du pic d'absorption totale, notée LD (a), pour laquelle on peut conclure à une détection au risque β près égal à 2,5% de commettre une erreur, est donnée par la relation suivante :

$$LD(a) = 8,8 \cdot \sqrt{R \cdot B} \qquad (5).$$

La limite de détection est exprimée en nombre de photons à l'énergie $E_i$ absorbés dans le détecteur par effet photoélectrique pendant un temps d'acquisition donné. La limite de détection exprimée en activité du radioélément à l'origine de la raie d'émission $E_i$, dans la configuration d'une source ponctuelle est alors donnée par la relation :

$$LD = 8,8 \cdot \frac{\sqrt{R \cdot C}}{\varepsilon_f(E_i) \cdot \Gamma(E_i) \cdot 0,997 \cdot \sqrt{T}} \qquad (6),$$

où : C = B/T désigne le comptage moyen du fond dans l'intervalle [E-R, E+R],
$\varepsilon_f(E_i)$ désigne l'efficacité globale du détecteur,
$\Gamma(E_i)$ désigne le rapport de branchement du radioélément le plus probable, parfois désigné intensité de la raie d'émission à l'énergie $E_i$ du radioélément considéré,
T désigne le temps d'acquisition du spectre.

Dans le cadre de la présente application, une acquisition du bruit de fond en l'absence de l'échantillon irradié peut être réalisée. Le spectre de bruit de fond qui en résulte fait l'objet d'un traitement, comprenant notamment la recherche des pics et le calcul de l'aire nette des pics, par la soustraction du fond continu, selon des techniques en elles-mêmes connues. Le spectre acquis en présence de l'échantillon fait l'objet du même traitement, mais il est réalisé en plus, pour les pics identifiés par comparaison avec le seuil de détection défini ci-avant, une soustraction pic à pic des aires nettes normalisées du spectre de bruit de fond tenant compte d'une valeur de tolérance sur la centroïde du pic identifié. La différence ainsi obtenue des aires nettes normalisées obtenues pour chaque pic identifié sur le spectre acquis en présence l'échantillon doit faire ensuite l'objet d'un test de détection. On présente ci-après les relations formulant le calcul du seuil de décision et de la limite de détection qui s'appliquent aux résultats de mesure issus de la soustraction pic à pic du spectre de bruit de fond telle que décrite précédemment :

Pour le spectre acquis en présence de l'échantillon pendant le temps de mesure $t_m$, (appelé spectre de l'échantillon) on note pour le pic identifié, F(a) l'aire du fond continu dans l'intervalle 2a, il est alors possible d'écrire la relation suivante :

$$F(a) = 2 \cdot B \cdot a \qquad \qquad (7).$$

Si f(a) désigne l'aire normalisée du fond continu alors :

$$f(a) = \frac{F(a)}{t_m} \qquad \qquad (8).$$

L'erreur statistique qui affecte une variable est donnée par la racine carrée de sa variance. Soit « $\sigma^2 x$ », la variance de la variable X, il est alors possible d'écrire la relation suivante :

$$\sigma^2{}_{f(a)} = \left(\frac{1}{t_m}\right)^2 \cdot \sigma^2{}_{F(a)} = \frac{F(a)}{t_m{}^2} \qquad \qquad (9).$$

En notant P(a) l'aire nette du pic d'absorption totale à l'énergie E, c'est à dire : $P(a) = \int\limits_{E-a}^{E+a} A \cdot e^{-\frac{(x-E)^2}{2\sigma^2}} \cdot dx$, A et $\sigma$ étant respectivement la hauteur et l'écart type de la forme supposée gaussienne du pic net et S(a) l'aire brute du pic d'absorption totale, et si p(a) et s(a) désignent respectivement leurs aires nette et brute normalisées, alors :

$$p(a) = \frac{P(a)}{t_m} \ , \ s(a) = \frac{S(a)}{t_m} \ \text{et} \ \sigma^2{}_{p(a)} = \frac{P(a)}{t_m^2} \qquad \qquad (10).$$

L'aire brute normalisée du pic d'absorption totale peut également s'écrire :

$$s(a) = p(a) + f(a) \qquad \qquad (11) \ ;$$

également :

$$\sigma^2{}_{s(a)} = \sigma^2{}_{p(a)} + \sigma^2{}_{f(a)} \qquad \qquad (12).$$

A partir des relations (9) et (10) ci-dessus on peut alors écrire la relation suivante :

$$\sigma^2{}_{s(a)} = \frac{P(a)}{t_m^2} + \frac{F(a)}{t_m{}^2} \qquad \qquad (13).$$

Or, p(a) = s(a) - f(a), d'où : $\sigma^2{}_{p(a)} = \sigma^2{}_{s(a)} + \sigma^2{}_{f(a)}$
Ainsi, à partir des relations (13) et (9), il est possible d'écrire les relations suivantes :

$$\sigma^2{}_{p(a)} = \frac{P(a)}{t_m^2} + \frac{F(a)}{t_m{}^2} + \frac{F(a)}{t_m{}^2} \ , \qquad \qquad (14)$$

ou

$$\sigma^2_{p(a)} = \frac{P(a)}{t_m^2} + 2 \cdot \frac{F(a)}{t_m^2} \qquad (15).$$

Pour le spectre acquis en l'absence de l'échantillon, ou "spectre du bruit de fond", en notant pour le pic identifié à la fois sur le spectre de l'échantillon et le spectre de bruit de fond : F'(a) l'aire du fond continu supposé constant dans l'intervalle 2a, il est alors possible d'écrire la relation suivante :

$$F'(a) = 2 \cdot B' \cdot a \qquad (16) \; ;$$

B' étant la valeur moyenne du fond continu dans l'intervalle $[E_i-a, E_i+a]$ du spectre du bruit de fond

Si f'(a) désigne l'aire normalisée du fond continu du spectre du bruit de fond alors :

$$f'(a) = \frac{F'(a)}{t_0} \qquad (17).$$

De la même manière que ci-dessus, il est possible d'écrire la relation suivante :

$$\sigma^2_{f'(a)} = \frac{F'(a)}{t_0^2} \qquad (18).$$

En notant P'(a) l'aire nette du pic d'absorption totale à l'énergie E, c'est-à-dire : $P'(a) = \int\limits_{E-a}^{E+a} A' \cdot e^{-\frac{(x-E)^2}{2\sigma'^2}} \cdot dx$ ,

A' et σ' étant respectivement la hauteur et l'écart type de la forme supposée gaussienne du pic net et S'(a) l'aire brute du pic d'absorption totale du spectre de bruit de fond, et si p'(a) et s'(a) désignent respectivement leurs aires nette et brute normalisées, alors de la même manière que ci-dessus il est possible d'écrire la relation suivante :

$$\sigma^2_{p'(a)} = \frac{P'(a)}{t_0^2} + 2 \cdot \frac{F'(a)}{t_0^2} \qquad (19).$$

La différence des surfaces nettes utilisée pour le calcul des activités en source ponctuelle représentant l'échantillon mesuré est donnée par :

$$p(a) - p'(a).$$

Ainsi :

$$\sigma^2_{[p(a)-p'(a)]} = \sigma^2_{p(a)} + \sigma^2_{p'(a)} \qquad (20).$$

A partir des relations (15) et (19) il est possible d'écrire la relation suivante :

$$\sigma^2_{[p(a)-p'(a)]} = \frac{P(a)}{t_m^2} + 2 \cdot \frac{F(a)}{t_m^2} + \frac{P'(a)}{t_0^2} + 2 \cdot \frac{F'(a)}{t_0^2}$$

$$= \frac{p(a)}{t_m} + 2 \cdot \frac{f(a)}{t_m} + \frac{p'(a)}{t_0} + 2 \cdot \frac{f'(a)}{t_0} \tag{21}.$$

Ainsi :

$$\sigma_{[p(a)-p'(a)]} = \sqrt{\frac{p(a)}{t_m} + \frac{p'(a)}{t_0} + 2 \cdot \frac{f(a)}{t_m} + 2 \cdot \frac{f'(a)}{t_0}} \tag{22},$$

ou
encore :

$$\sigma_{[p(a)-p'(a)]} = \sqrt{\frac{p(a)-p'(a)}{t_m} + \frac{p'(a)}{t_m} + \frac{p'(a)}{t_0} + 2 \cdot \frac{f(a)}{t_m} + 2 \cdot \frac{f'(a)}{t_0}} \tag{23}.$$

La grandeur [p(a)-p'(a)] correspondant à p(a)-p'(a) = 0, c'est-à-dire à l'absence de pic provenant de l'échantillon mesuré, suit donc une loi normale d'écart type égal à : $\sqrt{\frac{p'(a)}{t_m} + \frac{p'(a)}{t_0} + 2 \cdot \frac{f(a)}{t_m} + 2 \cdot \frac{f'(a)}{t_0}}$ .

L'hypothèse de l'absence de pic provenant de l'échantillon n'est donc vérifiée au risque $\alpha$ près que si :

$$p(a) - p'(a) \le K_\alpha \cdot \sigma_{[p(a)-p'(a)]}$$

$$\le K_\alpha \cdot \sqrt{\frac{p'(a)}{t_m} + \frac{p'(a)}{t_0} + 2 \cdot \frac{f(a)}{t_m} + 2 \cdot \frac{f'(a)}{t_0}} \tag{24},$$

où $K_\alpha$ est le coefficient de sécurité correspondant à un risque $\alpha$ de faux positif, c'est-à-dire déclarer à tort la présence d'un pic alors qu'il n'y en a pas.

Le seuil de décision, exprimé en différence de surface nette normalisée des pics à l'énergie E des spectres de l'échantillon et du bruit de fond, qui est la limite à partir de laquelle un pic d'absorption totale peut être considéré comme provenant de l'échantillon au risque $\alpha$ près, est donc donné par la relation :

$$SD = K_\alpha \cdot \sqrt{\frac{p'(a)}{t_m} + \frac{p'(a)}{t_0} + 2 \cdot \frac{f(a)}{t_m} + 2 \cdot \frac{f'(a)}{t_0}} \tag{25}$$

En posant R et R', les largeurs totales à mi-hauteur, communément désignées par le sigle LTMH, des pics d'absorption totale, supposée de forme gaussienne, à l'énergie E respectivement des spectres de l'échantillon et du bruit de fond, il est possible d'écrire:

$$R = 2{,}355 \cdot \sigma \text{ et } R' = 2{,}355 \cdot \sigma' \tag{26}.$$

R et R' sont les résolutions de la chaîne de spectrométrie, respectivement pour les spectres de l'échantillon et du bruit de fond. Il est à noter que pour les énergies des raies des radioéléments de la bibliothèque de recherche qui n'ont pas été identifiées sur l'un ou l'autre des spectres, la valeur R ou R' est prise égale à la valeur d'énergie correspondante lue sur la courbe d'étalonnage en résolution.

En adoptant par convention une valeur $2a = 5{,}92\ \sigma$ pour le spectre de l'échantillon et $2a = 5{,}92\ \sigma'$ pour le spectre du bruit de fond, alors pour ces deux spectres, respectivement : $2a = 2{,}52\ R$ et $2a = 2{,}52\ R'$ ; il est donc possible d'écrire la relation suivante :

$$SD = K_\alpha \cdot \sqrt{\frac{p'(a)}{t_m} + \frac{p'(a)}{t_0} + 5{,}042 \cdot \left(\frac{R \cdot B}{t_m^2} + \frac{R' \cdot B'}{t_0^2}\right)} \qquad (27).$$

Par exemple, pour un risque $\alpha = 2{,}5\%$ de déclarer à tort la présence d'un pic provenant de l'échantillon alors qu'il n'en existe pas, alors la valeur de la fonction de répartition de la gaussienne réduite donne $K_\alpha = 1{,}96$ et le seuil de détection s'écrit :

$$SD = 1{,}96 \cdot \sqrt{\frac{p'(a)}{t_m} + \frac{p'(a)}{t_0} + 5{,}042 \cdot \left(\frac{R \cdot B}{t_m^2} + \cdot \frac{R' \cdot B'}{t_0^2}\right)} \qquad (28).$$

Ainsi, si la différence des surfaces nettes normalisées des pics d'absorption totale des spectres établis en présence et en l'absence de l'échantillon à l'énergie des raies des radioéléments contenus dans la bibliothèque de recherche, est supérieure à la valeur du seuil de décision, il est possible de conclure avec une certitude de 97,5 % que la grandeur physique recherchée est présente dans l'échantillon.

Dans le cas contraire, où la différence des surfaces nettes normalisées du pic d'absorption totale est inférieure à la valeur du seuil de décision, il est possible de conclure que la grandeur physique est absente de l'échantillon avec un risque $\beta$ de conclure à tort que la grandeur recherchée est absente de l'échantillon alors qu'elle y est effectivement présente.

Mais, pour qu'un pic provenant de l'échantillon représenté par la valeur $[p(a) - p'(a)]$ ne soit pas déclaré nul au risque $\beta$ près de conclure à tort qu'il est nul alors qu'il est réel, il faut que la différence des surfaces nettes normalisée du pic ne soit pas nulle, c'est-à-dire $[p(a) - p'(a)] \neq 0$ et que, d'après les relations (24) et (25) ci-dessus, l'inégalité suivante soit réalisée :

$$[p(a) - p'(a)] \geq K_\alpha \cdot \sqrt{\frac{p'(a)}{t_m} + \frac{p'(a)}{t_0} + 2 \cdot \frac{f(a)}{t_m} + 2 \cdot \frac{f'(a)}{t_0}}$$
$$+ K_\beta \cdot \sqrt{\frac{p(a)}{t_m} + \frac{p'(a)}{t_0} + 2 \cdot \frac{f(a)}{t_m} + 2 \cdot \frac{f'(a)}{t_0}} \qquad (29),$$

où $K_\beta$ est le coefficient de sécurité correspondant à un risque $\beta$ de faux négatif, c'est-à-dire de déclarer à tort l'absence d'un pic alors qu'il en existe réellement un.

La valeur minimale de la différence des surfaces nettes normalisées du pic d'absorption totale notée $LD_{net}$, pour laquelle on peut conclure à une détection de pic provenant de l'échantillon au risque $\beta$ près, vérifie alors la relation suivante :

$$LD_{net} = K_\alpha \cdot \sqrt{\frac{p'(a)}{t_m} + \frac{p'(a)}{t_0} + 2 \cdot \frac{f(a)}{t_m} + 2 \cdot \frac{f'(a)}{t_0}}$$
$$+ K_\beta \cdot \sqrt{\frac{LD(a)}{t_m} + \frac{p'(a)}{t_m} + \frac{p'(a)}{t_0} + 2 \cdot \frac{f(a)}{t_m} + 2 \cdot \frac{f'(a)}{t_0}} \qquad (30).$$

En fixant par exemple $\beta = \alpha = 2{,}5\%$ alors : $K_\alpha = K_\beta = K$ et donc :

$$LD_{net} = K \cdot \left[ \sqrt{\frac{p'(a)}{t_m} + \frac{p'(a)}{t_0} + 2 \cdot \frac{f(a)}{t_m} + 2 \cdot \frac{f'(a)}{t_0}} + \sqrt{\frac{LD_{net}}{t_m} + \frac{p'(a)}{t_m} + \frac{p'(a)}{t_0} + 2 \cdot \frac{f(a)}{t_m} + 2 \cdot \frac{f'(a)}{t_0}} \right] \qquad (31).$$

En posant $X = \sqrt{\dfrac{LD_{net}}{t_m} + \dfrac{p'(a)}{t_m} + \dfrac{p'(a)}{t_0} + 2 \cdot \dfrac{f(a)}{t_m} + 2 \cdot \dfrac{f'(a)}{t_0}}$ , on obtient la relation :

$$t_m X^2 - \left[ p'(a) + \frac{p'(a) \cdot t_m}{t_0} + 2 \cdot f(a) + 2 \cdot \frac{f'(a) \cdot t_m}{t_0} \right] = K \cdot \left[ \sqrt{\frac{p'(a)}{t_m} + \frac{p'(a)}{t_0} + 2 \cdot \frac{f(a)}{t_m} + 2 \cdot \frac{f'(a)}{t_0}} + X \right] \qquad (32),$$

ou encore la relation suivante :

$$X^2 - \frac{K}{t_m} \cdot X - \left[ \frac{p'(a)}{t_m} + \frac{p'(a)}{t_0} + 2 \cdot \frac{f(a)}{t_m} + 2 \cdot \frac{f'(a)}{t_0} \right] - \frac{K}{t_m} \cdot \sqrt{\frac{p'(a)}{t_m} + \frac{p'(a)}{t_0} + 2 \cdot \frac{f(a)}{t_m} + 2 \cdot \frac{f'(a)}{t_0}} = 0 \qquad (33).$$

En posant alors $b = \dfrac{p'(a)}{t_m} + \dfrac{p'(a)}{t_0} + 2 \cdot \dfrac{f(a)}{t_m} + 2 \cdot \dfrac{f'(a)}{t_0}$ , la racine positive de cette équation est alors :

$$
\begin{aligned}
X &= \frac{\dfrac{K}{t_m} + \sqrt{\left(\dfrac{K}{t_m}\right)^2 + 4 \cdot b + 4 \cdot \dfrac{K}{t_m} \cdot \sqrt{b}}}{2} \\
&= \frac{\dfrac{K}{t_m} + \left[ \dfrac{K}{t_m} + 2 \cdot \sqrt{b} \right]}{2} \qquad\qquad (34). \\
&= \frac{K}{t_m} + \sqrt{b}
\end{aligned}
$$

La limite de détection du pic d'absorption totale provenant de l'échantillon, pour laquelle il est certain à $(1-\beta)$ que le pic sera détecté, est alors donnée par la relation :

$$LD_{net} = t_m \cdot (X^2 - b) = t_m \cdot \left[ \left( \frac{K}{t_m} + \sqrt{b} \right)^2 - b \right] = \frac{K^2}{t_m} + 2 \cdot K \cdot \sqrt{b} \qquad (35),$$

ou encore par la relation :

$$LD_{net} = \frac{K^2}{t_m} + 2 \cdot K \cdot \sqrt{\frac{p'(a)}{t_m} + \frac{p'(a)}{t_0} + 2 \cdot \frac{f(a)}{t_m} + 2 \cdot \frac{f'(a)}{t_0}} \qquad (36).$$

En négligeant la valeur de $K^2/t_m$ devant le deuxième terme de la relation (36) il est alors possible d'écrire la relation suivante :

$$LD_{net} \approx 2 \cdot K \cdot \sqrt{\frac{p'(a)}{t_m} + \frac{p'(a)}{t_0} + 2 \cdot \frac{f(a)}{t_m} + 2 \cdot \frac{f'(a)}{t_0}}$$

$$= 2 \cdot SD = 2 \cdot K_\alpha \cdot \sqrt{\frac{p'(a)}{t_m} + \frac{p'(a)}{t_0} + 5,042 \cdot (\frac{R \cdot B}{t_m^2} + \frac{R' \cdot B'}{t_0^2})} \qquad (37).$$

En prenant alors par exemple $\beta = \alpha = 2,5\%$, $K_\alpha = 1,96$, il est possible d'écrire la relation :

$$LD_{net} = 3,92 \cdot \sqrt{\frac{p'(a)}{t_m} + \frac{p'(a)}{t_0} + 5,042 \cdot (\frac{R \cdot B}{t_m^2} + \frac{R' \cdot B'}{t_0^2})} \qquad (38).$$

La limite de détection $LD_{net}$ formulée par la relation (38) ci-dessus s'exprime en nombre de photons par seconde à l'énergie $E_i$ qui ont été complètement absorbés dans le détecteur par effet photoélectrique et qui proviennent uniquement de l'échantillon. Or, il est nécessaire d'exprimer la limite de détection en activité du radioélément présent potentiellement dans l'échantillon et à l'origine de la raie d'émission $E_i$, dans la configuration d'une source ponctuelle. Pour cela, il est possible d'utiliser dans un premier temps une courbe d'efficacité globale qui donne pour un évènement d'énergie $E_i$ détecté dans le détecteur, la fluence photonique de la source ponctuelle. Ensuite selon la probabilité de présence de tel ou tel radioélément, on en déduit son activité, sur la base de son rapport de branchement à l'énergie $E_i$.

Soit $\varepsilon_f(E_i)$ l'efficacité globale du détecteur, $\Gamma(E_i)$ le rapport de branchement du radioélément le plus probable. La limite de détection de ce radioélément exprimée en activité d'une source supposée ponctuelle est donnée par la relation :

$$LD_{net} = 3,92 \cdot \frac{\sqrt{\frac{p'(a)}{t_m} + \frac{p'(a)}{t_0} + 5,042 \cdot (\frac{R \cdot B}{t_m^2} + \frac{R' \cdot B'}{t_0^2})}}{\in_f(E_i) \cdot \Gamma(E_i) \cdot 99,7\%} \qquad (39).$$

En posant $C = B/t_m$ et $C' = B'/t_0$ les comptages moyens du fond respectivement sur les spectres de l'échantillon et du bruit de fond alors il est possible d'écrire la relation suivante :

$$LD_{net} = 3,92 \cdot \frac{\sqrt{\frac{p'(a)}{t_m} + \frac{p'(a)}{t_0} + 5,042 \cdot (\frac{R \cdot C}{t_m} + \frac{R' \cdot C'}{t_0})}}{\in_f(E_i) \cdot \Gamma(E_i) \cdot 99,7\%} \qquad (40).$$

Dans l'exemple d'application décrit, l'expression des résultats de mesure à l'énergie $E_i$ après soustraction pic à pic du bruit de fond peut être formulée de la manière suivante :

• Lorsqu'un pic a été détecté sur le spectre de l'échantillon, c'est-à-dire

$$p(a) > 4,41 \cdot \sqrt{\frac{R \cdot B}{t_0^2}} \text{ , il est nécessaire d'exprimer le résultat de mesure affecté à l'échantillon à l'énergie } E_i$$

en fonction du test suivant :

•

$$\text{Si } p(a) - p'(a) \le 1,96 \cdot \sqrt{\frac{p'(a)}{t_m} + \frac{p'(a)}{t_0} + 5,042 \cdot (\frac{R \cdot B}{t_m^2} + \frac{R' \cdot B'}{t_0^2})}$$

alors

$$Résultat = LD_{net} = 3{,}92 \cdot \frac{\sqrt{\dfrac{p'(a)}{t_m} + \dfrac{p'(a)}{t_0} + 5{,}042 \cdot \left(\dfrac{R \cdot C}{t_m} + \dfrac{R' \cdot C'}{t_0}\right)}}{\in_f(E_i) \cdot \Gamma(E_i) \cdot 99{,}7\%} \qquad (41).$$

$$\text{Si } p(a) - p'(a) > 1{,}96 \cdot \sqrt{\frac{p'(a)}{t_m} + \frac{p'(a)}{t_0} + 5{,}042 \cdot \left(\frac{R \cdot B}{t_m^2} + \cdot \frac{R' \cdot B'}{t_0^2}\right)}$$

alors

$$Résultat = \frac{[p(a) - p'(a)] + \xi}{\in_f(E_i) \cdot \Gamma(E_i) \cdot 99{,}7\%} \qquad (42),$$

où $\zeta$ représente l'incertitude standard étendue sur l'évaluation de [p(a)-p'(a)] qui est égale à la racine carrée de la somme des carrés des incertitudes respectives de p'(a) et de p(a) données par le logiciel de traitement avec un coefficient de sécurité de 1,96.

•

Lorsqu'aucun pic n'a été détecté sur le spectre de l'échantillon, c'est-à-dire pour $\mathbf{p(a)} \leq 4{,}41 \cdot \sqrt{\dfrac{R \cdot B}{t_0^2}}$ , alors le résultat de mesure affecté à l'échantillon à l'énergie $E_i$ est la valeur de la limite de détection suivante :

$$Résultat = LD_{net} = 3{,}92 \cdot \frac{\sqrt{\dfrac{p'(a)}{t_m} + \dfrac{p'(a)}{t_0} + 5{,}042 \cdot \left(\dfrac{R \cdot C}{t_m} + \dfrac{R' \cdot C'}{t_0}\right)}}{\in_f(E_i) \cdot \Gamma(E_i) \cdot 99{,}7\%} \qquad (43).$$

L'expression de l'activité en source ponctuelle affectée à chaque radioélément de la première bibliothèque peut ensuite être obtenue selon des critères qui privilégient dans l'ordre les raies détectées et les raies les plus intenses. Il est également possible de réaliser un calcul d'activité en calculant une moyenne pondérée des activités ou limites de détection définies à l'énergie $E_i$ par l'intensité de chaque raie également désignée rapport de branchement du radioélément défini dans la première bibliothèque B1-0 ou B2-0.

Le traitement réalisé à la deuxième étape 302 consiste, à partir des activités en source ponctuelle par radioélément obtenues à la fin de la première étape 301, à construire une nouvelle source ponctuelle fictive en annulant à une première sous-étape 3021, les valeurs des limites de détection des radioéléments moins pénalisants que le radioélément de référence qui ont au moins une raie d'énergie supérieure à la valeur seuil précitée et qui non pas été identifiés, c'est-à-dire des radioéléments non identifiés de la deuxième bibliothèque B1-1 ou B2-1, n'appartenant pas à la troisième bibliothèque B1-2 ou B2-2. De ce fait, l'absence d'informations suffisantes sur la courbe de réponse de la chambre d'ionisation 111 conduit par ce calcul à un facteur correctif qui est toujours plus grand que celui que l'on obtiendrait si la courbe de réponse était connue sur la totalité de la plage. Cela garantit le caractère d'enveloppe de l'activité équivalente en radioélément de référence calculée à l'étape 203, en référence à la figure 2. Il reste bien sûr préférable que la courbe de réponse de la chambre d'ionisation soit connue, afin de ne pas surestimer par excès la valeur de la grandeur opérationnelle recherchée, et ainsi optimiser la capacité potentielle d'accueil des échantillons irradiés dans les unités de travail.

Le but des étapes 302 à 305 est de calculer le facteur correctif permettant de corréler les résultats des mesures issues de la chaîne de spectrométrie gamma, après prise en compte de la courbe d'efficacité globale de celle-ci, au résultat de mesure affiché par la chambre d'ionisation tenant compte de sa courbe de réponse. Dans le cas particulier où la courbe de réponse de la chambre d'ionisation n'est pas connue au-delà d'une valeur d'énergie seuil, la valeur seuil étant supérieure ou égale aux énergies des raies du radioélément de référence choisi, il est nécessaire de réaliser la première sous-étape 3021 de la seconde étape 302. Dans le cas où la courbe de réponse est connue sur l'ensemble de la plage des énergies couvrant l'ensemble des raies de la première bibliothèque, la première sous-étape 3021 de la seconde étape 302 n'est pas nécessaire.

La seconde étape 302 comprend une seconde sous-étape 3022 consistant à convertir en fluences photoniques les activités en source ponctuelle déterminées à l'issue de la première étape 301 ou à l'issue de la première sous-étape 3021 de la seconde étape 302. Pour cela, les radioéléments constituant la source ponctuelle sont recherchés dans une liste dans laquelle sont répertoriés tous les noms des radioéléments figurant dans les différentes bibliothèques de radioéléments utilisées à l'étape 301 notées dans l'exemple B1-0 et B2-0, avec toutes les données associées concernant les raies d'émission gamma et X, c'est-à-dire les données relatives à l'énergie des raies et leur intensité. Pour constituer cette liste, il peut être judicieux de partir de la même banque de données nucléaires que celle ayant servi à constituer les différentes bibliothèques utilisée à l'étape 301, de vérifier que le nom des radioéléments figurant dans les bibliothèques B1-0 et B2-0 sont bien retranscrits avec la même écriture afin que les noms des radioéléments figurant dans les bibliothèques B1-0 et B2-0 puissent être retrouvés automatiquement dans la liste des données. Ensuite, il convient pour les radioéléments identifiés à la constitution des bibliothèque B1-0 et B2-0 comme étant émetteurs béta avec au moins un des produits de filiation émetteurs gamma présentant une période radioactive inférieure ou égale à la période de 10 jours retenue dans l'exemple, d'affecter les raies caractéristiques de ces émetteurs gamma, en prenant en compte leur rapport de production et de branchement pour le calcul d'intensité se rapportant au radioélément émetteur béta pur considéré. Il est à noter que contrairement aux bibliothèques B1-0 et B2-0, les caractéristiques des raies extraites de la banque de données nucléaires choisie pour constituer la liste précitée sont conservées dans l'état à l'exception de l'opération mentionnée ci-avant pour les émetteurs béta répondant aux critères énoncés précédemment.

Après l'identification dans la liste précitée des radioéléments constituant la source ponctuelle, on associe pour chacune des raies d'énergie caractéristiques $E_i$ de ces radioéléments, le produit de l'activité du radioélément définie dans la source ponctuelle et l'intensité d'émission $I_i$ de la raie apparaissant dans la liste précitée. Ce produit est la fluence photonique $F_I$ de la source ponctuelle à l'énergie $E_i$. Les valeurs des fluences photoniques aux différentes énergies peuvent ensuite être triées par ordre d'énergie pour simplifier les calculs de l'étape suivante.

La conversion de la source ponctuelle en fluences photoniques réalisée à la seconde sous-étape 3022 de la deuxième étape 302, permet à la troisième étape 303, de calculer la contribution de chaque raie d'énergie de la source ponctuelle définie à la fin de la deuxième étape 302, au débit d'équivalent dose généré au niveau de la chambre d'ionisation, puis de reconstituer la valeur que cette dernière afficherait en tenant compte de sa courbe de réponse.

Pour calculer à la troisième étape 303, la contribution au débit d'équivalent de dose généré par la source ponctuelle, ou la source ponctuelle fictive, au niveau de la chambre d'ionisation, il est nécessaire de disposer d'une table de conversion des fluences photoniques de la source ponctuelle en débit d'équivalent de dose généré au niveau de la chambre d'ionisation. Cette table de conversion en débit d'équivalent de dose peut être obtenue par un simple calcul de radioprotection utilisant des codes de calcul Monte Carlo ou Semi Monte Carlo moyennant un découpage en bandes d'énergie suffisamment fin de la plage d'énergies dans l'intervalle [0, 4 MeV], pour s'affranchir des variations des facteurs de dose, le découpage en énergie étant habituellement prédéfini par les codes de calcul de radioprotection. La géométrie du poste de mesure, notamment des écrans interposés entre la source et la chambre d'ionisation, est modélisée. Cependant, afin que le point de calcul représente au mieux le débit d'équivalent de dose généré dans le volume de la chambre d'ionisation, il peut être proposé :

- de réaliser une mesure de débit d'équivalent de dose en plaçant dans la configuration des futures mesures, une source étalon du radioélément de référence, soit le ⁶⁰Co dans l'exemple de la description, assimilée à une source ponctuelle,
- de déterminer par calcul, avec une même source étalon, une même géométrie de mesure, la position du point de calcul pour laquelle la valeur calculée de débit d'équivalent de dose est égale à la valeur précédemment affichée par la chambre d'ionisation. Il est à noter que la chambre d'ionisation est étalonnée sur le radioélément de référence et donc le coefficient de réponse est égal à 1.

La modélisation de calcul étant réalisée, et la position du point de calcul fixée, il est alors calculé pour 1 photon par seconde émis dans chacune des bandes d'énergies présélectionnées, la valeur du débit d'équivalent de dose au point de calcul. De la sorte peut être constituée la table des facteurs de conversion en débit d'équivalent de dose généré au niveau de la chambre d'ionisation pour une émission photonique unitaire par bandes d'énergie. Pour établir la contribution $C_i$ par raies d'énergie de la source ponctuelle, ou source ponctuelle fictive, au débit d'équivalent de dose généré au niveau de la chambre d'ionisation, il suffit alors de pondérer chaque fluence photonique $F_i$ définie à l'énergie $E_i$ par le facteur de la table précitée de conversion en débit d'équivalent de dose dont la bande d'énergie comprend l'énergie $E_i$.

L'étape suivante, la quatrième étape 304, consiste à reconstituer la valeur de débit d'équivalent de dose qu'afficherait la chambre d'ionisation si l'échantillon était constitué de la source ponctuelle définie à la fin de l'étape 301 ou à la fin de la première sous-étape 3021 de la seconde étape 302. Pour cela il est nécessaire de prendre en compte la courbe de réponse de la chambre d'ionisation.

La courbe de réponse de la chambre d'ionisation est représentée par une fonction continue. Pour tenir compte de cette courbe de réponse, il est nécessaire d'établir une table de réponse de la chambre d'ionisation, qui est une fonction discrète définie sur des bandes d'énergie choisies en fonction des variations de la courbe de réponse. Pour tenir compte de la dégradation de l'énergie des raies caractéristiques émises par les radioéléments au sein de l'échantillon, à travers l'épaisseur réduite du poste de mesure, et conserver le caractère enveloppe du facteur correctif appliqué à la source ponctuelle à la sixième étape 306 décrite en détails ci-après, indépendamment du découpage en bandes d'énergie de la courbe de réponse, la table de réponse affecte à chaque bande d'énergie donnée [Ei, Ef[, le coefficient de réponse minimal lu sur la courbe de réponse de la chambre d'ionisation et correspondant à la plage [0, Ef]. Pour obtenir finalement la valeur de débit d'équivalent de dose qu'afficherait la chambre d'ionisation si l'échantillon était constituée de la source ponctuelle définie à la fin de l'étape 301 ou à la fin de la première sous-étape 3021 de la deuxième étape 302, il est nécessaire de pondérer chaque contribution $C_i$ de la source ponctuelle, définie à l'énergie $E_i$, par le coefficient de la table de réponse dont la bande d'énergie comprend l'énergie $E_i$, puis de sommer sur l'ensemble des raies d'énergie toutes le contributions pondérées de la source ponctuelle. La pondération ainsi réalisée, permet d'estimer par défaut la valeur reconstituée du débit d'équivalent de dose qu'afficherait la chambre d'ionisation ; cette valeur par défaut garantit le caractère enveloppe du facteur correctif et partant du calcul final de l'activité équivalente en $^{60}$Co.

Le but de la cinquième étape 305 est de réaliser le calcul de la source ponctuelle à proprement parler, en calculant un facteur correctif, défini comme le rapport de la valeur nette déclarée du débit d'équivalent de dose à la chambre d'ionisation à l'issue des mesures de bruit de fond et de l'échantillon placé en position de mesure, et la valeur de débit d'équivalent de dose telle que reconstituée à l'issue de la quatrième étape 304 précitée.

Dans le but de déterminer la valeur nette du débit d'équivalent de dose à déclarer à la chambre d'ionisation, il est nécessaire de prendre en compte les considérations suivantes. Le caractère statistique de la radioactivité impose de distinguer la valeur nette mesurée par la chambre d'ionisation et la valeur nette du débit d'équivalent de dose qui doit être déclarée à la chambre d'ionisation. La valeur nette mesurée par la chambre d'ionisation est obtenue à partir de la soustraction des deux mesures suivantes : une mesure du débit d'équivalent de dose pour l'échantillon placé en position de mesure, et une mesure du débit d'équivalent de dose avant l'introduction de l'échantillon dans l'unité de travail, ou "mesure du bruit de fond". En effet c'est la valeur nette du débit d'équivalent de dose devant être déclarée à la chambre d'ionisation qui doit être utilisée pour le calcul facteur correctif, dans la mesure où seule cette valeur prend en compte l'incertitude statistique des mesures et donc garantit avec un niveau de confiance donné le caractère enveloppe de la grandeur opérationnelle d'activité équivalente en X. Cette valeur déclarée à la chambre d'ionisation peut alors être établie sur la base de paramètres en eux-mêmes connus de seuil de décision, de limite de détection, d'expression du résultat et de niveau de confiance associé, dépendant des conditions de mesures.

Ces paramètres de seuil de décision, de limite de détection, de niveau de confiance et d'expression de résultat applicables à un mesurage d'une variable statistique peuvent être définis sous une des formes possibles présentées ci-après.

D'une manière habituelle, le résultat de mesure, dit résultat brut, d'une grandeur donnée, telle que la grandeur indicative de l'exposition externe, comporte la contribution de l'échantillon mais aussi celle du bruit de fond externe, ainsi qu'une contribution liée à l'influence de la matrice de l'échantillon. Or, l'influence du bruit de fond et de la matrice de l'échantillon en cours de mesure, ne sont pas quantifiables a priori. Par contre, il est possible de réaliser séparément des mesures de bruit de fond avec un "blanc" composé d'une matrice inerte représentant l'échantillon, et ainsi estimer les valeurs statistiques attachées à l'influence du bruit de fond. De ce fait, il est possible de procéder comme si les résultats nets de mesure liés à la grandeur recherchée dans l'échantillon étaient connus. Ainsi, la distribution des résultats nets de mesure du blanc peuvent être représentés par une loi normale de probabilité centrée sur une valeur nulle de la grandeur recherchée. De même, la distribution de résultats nets de mesure d'une grandeur vraie X contenue dans l'échantillon peut être représentée par une loi normale centrée sur la valeur X.

Il est à noter que dans le cadre de la présente invention, la grandeur vraie recherchée dans l'échantillon est l'exposition externe générée par l'échantillon dans des conditions de mesure données. Par conséquent, la matrice de l'échantillon n'a d'influence potentielle que sur le bruit de fond mesuré. Ainsi, il est possible, en négligeant cette influence, de réduire les mesures du blanc à des mesures de bruit de fond externe, en l'absence de toute matrice d'échantillon.

Lorsque les résultats nets de mesure d'un échantillon sont proches de celles du blanc, il est nécessaire de réaliser un test statistique afin de définir les valeurs des grandeurs à déclarer. Le seuil de décision, noté $S_{De}$ et dont la valeur est positive, est la valeur critique de ce test pour décider de la détection ou non d'une grandeur vraie dans l'échantillon. Cette valeur prend en compte les performances de l'appareil de mesure, les conditions opératoires de la mesure, telles que la géométrie de mesure, le temps, etc.

Ainsi, tout résultat de mesurage net supérieur au seuil de décision, mènera à la conclusion de la présence de la grandeur recherchée dans l'échantillon. Cependant, des résultats nets de mesurage peuvent être supérieurs au seuil de décision, alors que la grandeur recherchée est inexistante dans l'échantillon. Aussi, pour une valeur donnée du seuil de décision, il existe une probabilité $\alpha$ de conclure à tort qu'il y a détection alors que la grandeur recherchée n'est pas présente dans l'échantillon. Fixer la valeur du seuil de décision revient donc à fixer la valeur acceptable de $\alpha$, appelée également probabilité de "fausse détection" ou risque de première espèce. La valeur de $S_{De}$ peut alors s'exprimer en nombre d'écarts types $\sigma_0$ (distribution du blanc) sous la forme :

$$S_{De} = u_{1-\alpha} \cdot \sigma_0, \text{ où } u_{1-\alpha}$$

est un facteur multiplicatif dépendant de $\alpha$.

Par définition du seuil de décision, un résultat de mesurage inférieur au seuil de décision conclut à une non-détection. Or, des résultats de mesurage peuvent être inférieurs au seuil de décision alors que la grandeur recherchée est effectivement présente dans l'échantillon. Aussi, pour une valeur donnée du seuil de décision, il existe une probabilité $\beta$ donnée de conclure à tort qu'il n'y a pas de détection alors que la grandeur recherchée est présente dans l'échantillon. La probabilité $\beta$ ou risque de deuxième espèce varie avec la valeur de la grandeur vraie détectée. Ainsi, en fixant une valeur minimale de $\beta$, on en déduit la valeur minimale de grandeur vraie pouvant être détectée avec une probabilité de $(1-\beta)$ et donc pouvant donner un résultat de mesure supérieur au seuil de décision. Cette valeur minimale est la limite de détection, notée $L_{De}$. Toute grandeur vraie supérieure à la limite de détection a donc une probabilité supérieure à $(1-\beta)$ d'être détectée.

Les valeurs de $\alpha$ et $\beta$ peuvent être choisies égales par convention. En admettant alors que les distributions des résultats nets de mesurage du blanc et de mesurage de l'échantillon contenant la limite de détection, ont le même écart type, il est possible d'écrire la relation suivante : $L_{De} = 2S_{De}$.

Pour des risques $\alpha$ et $\beta$ égaux à 2,5 %, et dans l'hypothèse d'une loi normale, $u_{1-\alpha}$ est alors égal à 1,96 et donc on peut écrire $S_{De} = 1,96 \cdot \sigma_0 \cong 2 \cdot \sigma_0$ et $L_{De} \cong 4 \cdot \sigma_0$. La limite de détection est alors la plus petite valeur de la grandeur recherchée qui ait une probabilité au moins égale à 97,5 % d'être détectée.

Lorsque l'on dispose d'un résultat net de mesurage R, il est nécessaire de pouvoir conclure sur la valeur vraie X qui est inconnue. Pour ce faire, il est possible de définir un intervalle de confiance centré sur une valeur R particulière, de telle sorte que cet intervalle ait une probabilité donnée de contenir la valeur vraie X. En fait, cette probabilité est la probabilité de trouver une valeur R telle que l'intervalle de confiance centré sur R contienne la valeur vraie X.

Pour une valeur $X \geq 0$, soit $\sigma_x$ l'écart type de la distribution centrée sur la valeur X. La valeur nette du mesurage R peut alors prendre toutes les valeurs comprises entre $-\infty$ et $+\infty$. Parmi toutes les valeurs prises par R, il est nécessaire de rechercher les valeurs de R pour lesquelles l'intervalle de confiance contient la valeur X.

Soit $R \pm \dfrac{u_{1-\gamma}}{2} \cdot \sigma_X$ , l'intervalle de confiance autour de R pour un niveau de confiance de $(1-\gamma)$.

Pour que la valeur vraie X soit contenue dans l'intervalle centré $\left[ R - \dfrac{u_{1-\gamma}}{2} \cdot \sigma_X , \ R + \dfrac{u_{1-\gamma}}{2} \cdot \sigma_X \right]$, il faut que |R-X| soit inférieur à $\dfrac{u_{1-\gamma}}{2} \cdot \sigma_X$. La $\left[ R - \dfrac{u_{1-\gamma}}{2} \cdot \sigma_X , \ R + \dfrac{u_{1-\gamma}}{2} \cdot \sigma_X \right]$, il faut que |R-X| soit inférieur à $\dfrac{u_{1-\gamma}}{2} \cdot \sigma_X$. La valeur vraie X étant positive, cette condition s'écrit sous la forme : $(X - \dfrac{u_{1-\gamma}}{2} \cdot \sigma_X) \leq R \leq (X + \dfrac{u_{1-\gamma}}{2} \cdot \sigma_X)$. Or, si l'on adopte pour les valeurs de $\dfrac{u_{1-\gamma}}{2}$, les valeurs données par la table de la loi normale qui donne des valeurs particulières de la fonction de répartition de la gaussienne réduite, la probabilité d'obtenir une valeur de mesurage R qui soit contenue dans l'intervalle $[X - \dfrac{u_{1-\gamma}}{2} \cdot \sigma_X , X + \dfrac{u_{1-\gamma}}{2} \cdot \sigma_X]$ est alors de $(1-\gamma)$. Cette probabilité est aussi la probabilité pour que l'intervalle $[R - u_{1-\alpha} \cdot \sigma_x, R + u_{1-\alpha} \cdot \sigma_x]$ contienne la valeur vraie X. Ainsi, en considérant le cas particulier où $u_{1-\gamma}/2 = u_{1-\alpha}$ (avec $S_{De} = u_{1-\alpha} \cdot \sigma_0$), alors la probabilité pour que l'intervalle de confiance $[R - u_{1-\alpha} \cdot \sigma_x, R + u_{1-\alpha} \cdot \sigma_x]$ contienne la valeur vraie X est égale à $(1-2\alpha)$. L'intervalle de confiance de la valeur X au niveau de probabilité $(1-2\alpha)$ est défini par $\pm u_{1-\alpha} \cdot \sigma_x$.

Pour une valeur X quelconque et un résultat net de mesurage R, l'amplitude de l'intervalle de confiance associé à R est égale à $|\pm u_{1-\alpha} \cdot \sigma_x|$. Cette amplitude peut donc être interprétée comme l'incertitude aléatoire associée au résultat net de mesurage R pour un niveau de confiance de (1-2α) de trouver la valeur vraie X. Si l'incertitude aléatoire relative du résultat R est exprimée sous la forme $[u_{1-\alpha} \cdot \sigma_X/R]$, alors cette incertitude relative augmente quand $\sigma_X$ diminue et donc quand X diminue. Elle est ainsi maximale quand X = 0 et s'exprime alors sous la forme $[u_{1-\alpha} \cdot \sigma_0/R]$ ou encore $[S_{De}/R]$. Quand R diminue de +∝ à 0, le rapport $[u_{1-\alpha} \cdot \sigma_0/R]$ augmente. Il existe donc une seule valeur particulière de R telle que l'incertitude relative $[u_{1-\alpha} \cdot \sigma_X/R]$ soit égale à 100 %. Cette valeur particulière est R = $S_{De}$ appartenant à la distribution centrée sur la valeur vraie "nulle". Le seuil de décision peut donc également être défini comme la valeur particulière du résultat net de mesurage R, pour laquelle l'incertitude aléatoire relative est de 100% pour un niveau de confiance de (1-2α).

Lorsqu'un résultat de mesurage R est obtenu, il n'est pas possible a priori de connaître la distribution de X à laquelle il appartient. Il est donc nécessaire de définir les valeurs minimale et maximale que pourrait prendre X selon la valeur de mesurage particulière R, avec un risque minimum que X soit en réalité en dehors de l'intervalle défini. Quelques exemples d'expressions à adopter pour le résultat avec les niveaux de confiance associés, selon les valeurs prises par R par comparaison à la valeur du seuil de décision sont présentés ci-après.

Lorsque R≤$S_{De}$, le résultat peut être exprimé sous la forme : X ≤ $L_{De}$, correspondant à un niveau de confiance égal à (1-α) de trouver la valeur vraie X.

Lorsque R>$S_{De}$ et que l'on écrit X = R ± $u_{1-\alpha} \sigma_x$, le niveau de confiance de cette écriture est de (1-2α).

L'incertitude relative sur un résultat de mesure égal à la $L_{De}$ est alors par exemple de 50% pour un niveau de confiance de 95%, en fixant α = 2,5%.

Les valeurs des écarts types $\sigma_x$ ne sont pas connues, mais il est possible de les estimer à partir du résultat de mesure et des conditions dans lesquelles la mesure est réalisée. On note alors cet estimateur $\sigma_R$.

Dans le cadre de la présente invention, où il s'agit d'estimer les valeurs enveloppes, on fait le choix d'adopter les écritures suivantes :

Soit R la mesure :

- Si R ≤ $S_{De}$ alors la valeur de la grandeur recherchée sera déclarée égale à la $L_{De}$.
- Si R > $S_{De}$ alors la grandeur recherchée sera déclarée égale R ± 2 $\sigma_R$ (avec $\sigma_R$ l'écart type de la mesure R, et 2, la valeur du coefficient de sécurité correspondant à une probabilité supérieure à 95%).

Ainsi, si la valeur nette du débit d'équivalent de dose (éventuellement négative) mesuré par la chambre d'ionisation est inférieure ou égale au seuil de décision $S_{De}$, alors la valeur nette du débit d'équivalent de dose déclarée à la chambre d'ionisation est choisie égale à la limite de détection $L_{De}$ ; si la valeur nette du débit d'équivalent de dose mesuré par la chambre d'ionisation est supérieure au seuil de décision $S_D$, alors la valeur nette du débit d'équivalent de dose déclarée à la chambre d'ionisation est prise égale à la somme de la valeur nette du débit d'équivalent de dose mesuré par la chambre d'ionisation et d'une incertitude $\xi_{De}$.

Le seuil de décision $S_{De}$ et la limite détection $L_{De}$ de la chambre d'ionisation s'expriment en fonction de la valeur du bruit de fond, du temps de mesure du bruit de fond et du temps de mesure de l'échantillon irradié. La chambre d'ionisation peut d'une manière typique être couplée à un électromètre numérique fonctionnant en mode "débit de dose", par exemple à l'aide d'une résistance aux bornes de laquelle on mesure la tension, ou encore en mode "dose", par exemple à l'aide d'un condensateur dont on mesure la charge collectée, soit encore en mode "débit de dose intégré" consistant par exemple à intégrer le courant traversant une résistance, via la mesure de la tension, pendant un temps de mesure fixé par l'opérateur.

En considérant par exemple le mode "dose" de l'ensemble de comptage constitué par la chambre d'ionisation couplée à l'électromètre, la valeur du débit d'équivalent de dose étant alors obtenue en réalisant le rapport dé la dose équivalente mesurée, affichée par l'électromètre, et du temps de mesure, alors le mode de fonctionnement peut être assimilé à celui d'une échelle de comptage numérique.

La valeur de débit d'équivalent de dose nécessaire pour le calcul du facteur correctif, et partant du calcul de la source ponctuelle, est la valeur du débit de dose uniquement généré par l'échantillon irradié. Par conséquent, il est nécessaire de déterminer le seuil de décision $S_{de}$ et la limite de détection $L_{de}$ exprimée en valeur nette du débit d'équivalent de dose, c'est-à-dire après déduction du bruit de fond. Il est présenté ci-après les démonstrations et expressions mathématiques de ces grandeurs associées à une chambre d'ionisation reliée à un électromètre fonctionnant en mode "dose". Il est considéré que le courant de fuite de la chambre d'ionisation est négligeable.

Soit $D_0$, la valeur de dose brute mesurée en l'absence de l'échantillon (bruit de fond) pendant le temps de mesure $t_0$.

Soit $D_m$, la valeur de dose brute mesurée en présence de l'échantillon pendant le temps de mesure $t_m$.

Soit de, la valeur nette du débit de dose, c'est-à-dire du débit de dose généré uniquement par l'échantillon à mesurer).

On a alors la relation :

$$d_e = \frac{D_m}{t_m} - \frac{D_0}{t_0} \qquad (44).$$

La dose est une grandeur proportionnelle à l'énergie déposée dans la chambre d'ionisation par le rayonnement incident et donc proportionnelle au nombre de paires d'ions créées. Or, la charge collectée par le condensateur du circuit électrique est proportionnelle au nombre de paires d'ions créées. Il est donc possible d'exprimer la dose comme le produit du nombre de paires d'ions créées et d'une constante, soit :

$$D_0 = F \cdot N_0 \cdot e \qquad \text{et} \qquad D_m = F \cdot N_m \cdot e,$$

avec $N_0$ : le nombre de paires d'ions créées par le bruit de fond pendant le temps $t_0$,
$N_m$ : le nombre de paires d'ions créées en présence de l'échantillon pendant le temps $t_m$,
F : le coefficient de conversion exprimé en Sievert/Coulomb, mesuré lors de l'étalonnage de la chambre d'ionisation avec une source contenant le radioélément de référence,
e : la charge de l'électron = $1,6.10^{-19}$ Coulomb.

La relation (44) peut alors s'écrire :

$$d_e = F \cdot e \cdot \left( \frac{N_m}{t_m} - \frac{N_0}{t_0} \right) \qquad (45).$$

L'incertitude standard combinée sur la valeur de notée $\sigma(d_e)$ est alors donnée par la relation :

$$(\sigma(d_e))^2 = \left( \frac{\partial d_e}{\partial N_m} \right)^2 (\sigma(N_m))^2 + \left( \frac{\partial d_e}{\partial N_0} \right)^2 (\sigma(N_0))^2 \qquad (46).$$

Or en admettant que $N_m$ et $N_0$ sont suffisamment grands pour suivre une loi normale, il est alors possible d'estimer leurs incertitudes standards par les relations :

$$(\sigma(N_m))^2 = N_m \text{ et } (\sigma(N_0))^2 = N_0$$

La relation (46) s'écrit alors :

$$(\sigma(d_e))^2 = \left( \frac{F \cdot e}{t_m} \right)^2 \cdot N_m + \left( \frac{F \cdot e}{t_0} \right)^2 \cdot N_0 \qquad (47)$$

L'incertitude standard étendue de de notée $\S(d_e)$ correspondant à un niveau de confiance de $(1-\alpha)$ est alors donnée par la relation suivante :

$$(\xi_{d_e})^2 = u_\alpha^2 \cdot (\sigma(d_e))^2 = (u_\alpha \cdot F \cdot e)^2 \cdot \left( \frac{N_m}{t_m^2} + \frac{N_0}{t_0^2} \right) \qquad (48).$$

En exprimant l'incertitude relative sur de, on obtient la relation suivante :

$$\left(\frac{\xi_{d_e}}{d_e}\right)^2 = \frac{(u_\alpha \cdot F \cdot e)^2 \cdot \left(\frac{N_m}{t_m^2} + \frac{N_0}{t_0^2}\right)}{(d_e)^2} = \frac{(u_\alpha \cdot F \cdot e)^2 \cdot \left(\frac{N_m}{t_m^2} + \frac{N_0}{t_0^2}\right)}{\left[F \cdot e \cdot \left(\frac{N_m}{t_m} - \frac{N_0}{t_0}\right)\right]^2} = \frac{u_\alpha^2 \cdot \left(\frac{N_m}{t_m^2} + \frac{N_0}{t_0^2}\right)}{\left[\frac{N_m}{t_m} - \frac{N_0}{t_0}\right]^2} \quad (49).$$

Le seuil de décision étant également défini comme la valeur particulière prise par de, pour laquelle on a une incertitude relative de 100 %, il vérifie la relation suivante :

$$1 = \frac{u_\alpha^2 \cdot \left[\frac{N_m}{t_m^2} + \frac{N_0}{t_0^2}\right]}{\left[\frac{N_m}{t_m} - \frac{N_0}{t_0}\right]^2} \quad \text{ou encore} \quad \left[\frac{N_m}{t_m} - \frac{N_0}{t_0}\right]^2 = u_\alpha^2 \cdot \left[\frac{N_m}{t_m^2} + \frac{N_0}{t_0^2}\right] \quad (50).$$

En développant l'identité au carré et en multipliant chaque membre de l'équation par $t_m^2$, on trouve finalement l'équation du second degré suivante :

$$N_m^2 + N_0^2 \cdot \frac{t_m^2}{t_0^2} - 2 \cdot N_0 \cdot \frac{t_m}{t_0} \cdot N_m = u_\alpha^2 \cdot \left[N_m + N_0 \cdot \frac{t_m^2}{t_0^2}\right] \quad (51) \; ;$$

qui peut également s'écrire :

$$N_m^2 - \left[2 \cdot N_0 \cdot \frac{t_m}{t_0} + u_\alpha^2\right] \cdot N_m + N_0 \cdot \frac{t_m^2}{t_0^2} \cdot \left[N_0 - u_\alpha^2\right] = 0 \quad (52).$$

La racine positive de l'équation du second degré (52) est alors donnée par la relation :

$$N_m^1 = \frac{\left[2 \cdot N_0 \cdot \frac{t_m}{t_0} + u_\alpha^2\right] + \sqrt{u_\alpha^2 \cdot \left[u_\alpha^2 + 4 \cdot N_0 \cdot \frac{t_m}{t_0} \cdot \left(1 + \frac{t_m}{t_0}\right)\right]}}{2}$$

$$= N_0 \cdot \frac{t_m}{t_0} + \frac{u_\alpha \cdot \left(u_\alpha + \sqrt{u_\alpha^2 + 4 \cdot N_0 \cdot \frac{t_m}{t_0} \cdot \left(1 + \frac{t_m}{t_0}\right)}\right)}{2} \quad (53).$$

Le seuil de décision exprimé en valeur nette du débit de dose généré par l'échantillon est alors donné par la relation suivante :

$$S_{d_e} = F \cdot e \cdot \left(\frac{N_m^1}{t_m} - \frac{N_0}{t_0}\right) = F \cdot e \cdot \frac{u_\alpha \cdot \left(u_\alpha + \sqrt{u_\alpha^2 + 4 \cdot N_0 \cdot \frac{t_m}{t_0} \cdot \left(1 + \frac{t_m}{t_0}\right)}\right)}{2 \cdot t_m} \quad (54).$$

En exprimant alors le $S_{de}$ en fonction de $D_0$ donné par la relation : $N_0 = \dfrac{D_0}{F \cdot e}$,

il est alors possible d'écrire la relation suivante :

$$S_{d_e} = F \cdot e \cdot \left( \frac{N_m^1}{t_m} - \frac{N_0}{t_0} \right) = F \cdot e \cdot \frac{u_\alpha \cdot \left( u_\alpha + \sqrt{u_\alpha^2 + 4 \cdot \frac{D_0}{F \cdot e} \cdot \frac{t_m}{t_0} \cdot \left( 1 + \frac{t_m}{t_0} \right)} \right)}{2 \cdot t_m} \qquad (55).$$

En prenant par exemple une valeur du coefficient de sécurité de 1,96 ($\cong$ 2) correspondant à un niveau de probabilité de 95%, le seuil de décision exprimé en valeur nette du débit de dose est donné par la relation :

$$S_{d_e} = \frac{2 \cdot F \cdot e}{t_m} \cdot \left( 1 + \sqrt{1 + \frac{D_0}{F \cdot e} \cdot \frac{t_m}{t_0} \cdot \left( 1 + \frac{t_m}{t_0} \right)} \right) \qquad (56),$$

où : $S_{de}$ désigne le seuil de décision exprimé en valeur nette de débit d'équivalent de dose, exprimé en Sv/h ou en Sv/s,
F désigne le coefficient d'étalonnage de la chambre d'ionisation pour le radioélément de référence $^{60}$Co, exprimé en Sv/Coulomb,
e désigne la charge de l'électron, soit $1,6.10^{-19}$ Coulomb, $t_m$ désigne le temps de mesure de l'échantillon irradié, exprimé en heures ou en secondes,
$t_0$ désigne le temps de mesure du bruit de fond, exprimé en heures ou en secondes,
$D_0$ désigne la dose générée par le bruit de fond pendant le temps $t_0$, exprimée en Sv.

Pour une valeur $\dfrac{D_0}{F \cdot e} \cdot \dfrac{t_m}{t_0}$ grande devant $u_\alpha^2$, l'expression (55) du seuil de décision devient alors :

$$S_{d_e} = F \cdot e \cdot \frac{u_\alpha \cdot \left( \sqrt{4 \cdot \frac{D_0}{F \cdot e} \cdot \frac{t_m}{t_0} \cdot \left( 1 + \frac{t_m}{t_0} \right)} \right)}{2 \cdot t_m} = F \cdot e \cdot \frac{u_\alpha \cdot \left( \sqrt{\frac{D_0}{F \cdot e} \cdot \frac{t_m}{t_0} \cdot \left( 1 + \frac{t_m}{t_0} \right)} \right)}{t_m} \qquad (57).$$

$$= u_\alpha \cdot F \cdot e \cdot \left( \sqrt{\frac{D_0}{F \cdot e} \cdot \left( \frac{1}{t_m \cdot t_0} + \frac{1}{t_0^2} \right)} \right)$$

Dans ces conditions, en prenant $t_m = t_0$, il est possible d'écrire la relation : $S_{d_e} = u_\alpha \cdot F \cdot e \cdot \left( \sqrt{\frac{2 \cdot D_0}{F \cdot e \cdot t_0^2}} \cdot \right)$, cette relation étant équivalente à $S_{de} = u_\alpha \cdot \sigma(d_0)$ obtenu en choisissant $N_m = N_o$ dans l'expression (47) de l'écart type du débit de dose net.

L'expression mathématique de la limite de détection exprimée en débit d'équivalent de dose nette et compte tenu de la convention précité ($\alpha = \beta$), peut être déduite de (56) :

$$L_{d_e} = 2 \cdot S_{d_e} = \frac{4 \cdot F \cdot e}{t_m} \cdot \left( 1 + \sqrt{1 + \frac{D_0}{F \cdot e} \cdot \frac{t_m}{t_0} \cdot \left( 1 + \frac{t_m}{t_0} \right)} \right) \qquad (58),$$

où $L_{de}$ désigne la limite de détection exprimée en valeur nette de débit de dose, en Sv/h ou Sv/s.
Si le temps de mesure de l'échantillon $t_m$ correspond au temps de mesure du bruit de fond $t_0$, et que leur valeur commune est notée t, alors il est possible d'écrire les relations suivantes :

$$S_{d_e} = \frac{2 \cdot F \cdot e}{t} \cdot \left( 1 + \sqrt{1 + \frac{2 \cdot D_0}{F \cdot e}} \right) \text{ et } L_{d_e} = \frac{4 \cdot F \cdot e}{t} \cdot \left( 1 + \sqrt{1 + \frac{2 \cdot D_0}{F \cdot e}} \right) \qquad (59),$$

F étant typiquement de l'ordre de 1,104 Sv/C dans l'exemple de la présente application, le terme $\dfrac{2 \cdot D_0}{F \cdot e}$ est plus grand que 1, et la relation (59) peut donc être simplifiée en approximation par la relation suivante :

$$S_{d_e} \approx \frac{2 \cdot F \cdot e}{t} \cdot \left( \sqrt{\frac{2 \cdot D_0}{F \cdot e}} \right) \approx 3 \cdot \frac{\sqrt{D_0 \cdot F \cdot e}}{t} \quad \text{et} \quad L_{d_e} \approx 6 \cdot \frac{\sqrt{D_0 \cdot F \cdot e}}{t} \qquad (60),$$

Il est également possible d'exprimer le seuil de décision $S_{de}$ et la limite de détection $L_{de}$ en fonction de la valeur du débit d'équivalent de dose moyen affichée par l'électromètre, en l'absence de l'échantillon irradié, correspondant alors à la valeur du bruit de fond.

Soit $d_0$, la valeur de débit de dose moyen affichée par l'électromètre au bout d'un temps $t_0$ de mesure en l'absence de l'échantillon irradié, la relation (59) s'écrit alors sous la forme suivante :

$$S_{d_e} = \frac{2 \cdot F \cdot e}{t_m} \cdot \left( 1 + \sqrt{1 + \frac{d_0}{F \cdot e} \cdot \left( t_m + \frac{t_m^2}{t_0} \right)} \right) \qquad (61),$$

et la relation (60) s'écrit alors sous la forme suivante :

$$L_{d_e} = \frac{4 \cdot F \cdot e}{t_m} \cdot \left( 1 + \sqrt{1 + \frac{d_0}{F \cdot e} \cdot \left( t_m + \frac{t_m^2}{t_0} \right)} \right) \qquad (62).$$

Ainsi si la valeur nette du débit d'équivalent de dose de après mesure de l'échantillon irradié et déduction du bruit de fond vérifie :

- $d_e \leq S_{de}$, alors la valeur nette du débit d'équivalent de dose déclarée à la chambre d'ionisation notée $D_d$ est telle que $D_d = L_{de}$, sinon
- de > $S_{de}$, alors $D_d$ = de + $\xi_{de}$, où $\xi_{de}$ est l'incertitude sur la valeur de pour laquelle il est choisi un coefficient de sécurité de 2, correspondant à un niveau de probabilité de 95%.

L'incertitude standard étendue sur de peut alors être donnée par la relation suivante :

$$\left( \xi_{d_e} \right)^2 = u_\alpha^2 \cdot \left( \sigma(d_e) \right)^2 = \left( u_\alpha \cdot F \cdot e \right)^2 \cdot \left( \frac{N_m}{t_m^2} + \frac{N_0}{t_0^2} \right) = \left( u_\alpha \cdot F \cdot e \right)^2 \cdot \left( \frac{D_m}{F \cdot e \cdot t_m^2} + \frac{D_0}{F \cdot e \cdot t_0^2} \right),$$

sont :

$$\xi_{d_e} = u_\alpha \cdot \sqrt{F \cdot e \cdot \left( \frac{D_m}{t_m^2} + \frac{D_0}{t_0^2} \right)} = u_\alpha \cdot \sqrt{F \cdot e \cdot \left( \frac{d_m}{t_m} + \frac{d_0}{t_0} \right)} = 2 \cdot \sqrt{F \cdot e \cdot \left( \frac{d_m}{t_m} + \frac{d_0}{t_0} \right)} \qquad (63),$$

où $d_m$ et $d_0$ désignent les valeurs du débit de dose moyen affichées par l'électromètre, respectivement en la présence et en l'absence de l'échantillon irradié.

A la cinquième étape 305, le facteur correctif est obtenu en calculant le rapport entre la valeur nette du débit d'équivalent de dose déclarée à la chambre d'ionisation pour l'échantillon placé en position de mesure, et la valeur de débit d'équivalent de dose telle que reconstituée à l'issue de la quatrième étape 304 précitée.

La sixième étape 306 consiste ensuite à pondérer par le facteur correctif l'ensemble des activités des radioéléments de la source ponctuelle calculée à la fin de la première étape 301, à la troisième sous-étape 3013. Le résultat de ces activités pondérées par radioélément constitue la source ponctuelle représentative de l'échantillon mesuré et correspond au résultat de sortie de l'étape de calcul de la source ponctuelle 202 en référence à la figure 2.

Il est à noter que la source ponctuelle représentant l'échantillon étant constituée à la fin de la sixième étape 306, il est possible de reporter les caractéristiques de cette source selon le formalisme d'un code de calcul de radioprotection et ainsi donner la possibilité de réaliser des calculs complémentaires de radioprotection tels que par exemple l'estimation du débit d'équivalent de dose généré par l'échantillon placé dans un emballage de transport.

La figure 4 présente un logigramme illustrant un exemple de procédé de calcul de l'activité équivalente en $^{60}$Co, dans un mode de réalisation de l'invention, à partir de la source ponctuelle telle qu'obtenue à la fin de l'étape de calcul de la source ponctuelle 202 en référence à la figure 2.

Dans l'exemple de réalisation illustré par la figure 4, le calcul de l'activité équivalente en radioélément de référence X, en référence à l'étape 203 de la figure 2, peut se décomposer en une première étape 401 de tri des radioéléments constituant la source ponctuelle en deux catégories. Cette étape est ensuite suivie de deux étapes de traitement 402 et 403 réalisées en parallèle pour chacune des deux catégories de radioéléments. Les résultats de ces deux traitements réalisés en parallèle font ensuite l'objet d'un traitement commun à une quatrième étape 404, pour aboutir au calcul de l'activité équivalente en radioélément de référence X de l'échantillon mesuré.

Lors de la première étape 401, il est fait une distinction selon que les radioéléments de la source ponctuelle obtenue à l'étape 202 en référence à la figure 2, appartiennent ou non à la troisième bibliothèque B1-2 ou B2-2 selon le type d'échantillon irradié considéré.

Pour les radioéléments appartenant à la troisième bibliothèque B1-2 ou B2-2, c'est-à-dire les radioéléments plus pénalisants que le radioélément de référence, soit le $^{60}$Co dans l'exemple de la présente description, la première étape 401 est suivie d'une première étape de traitement 402 qui peut se décomposer en deux étapes, une première sous-étape 4021 consistant à calculer la valeur du débit d'équivalent de dose généré par la source ponctuelle constituée de ces radioéléments derrière l'épaisseur maximale de blindage à une distance donnée et une seconde sous-étape 4022 consistant à calculer l'activité équivalente en radioélément de référence X, des radioéléments de la source ponctuelle appartenant à la troisième bibliothèque B1-2 ou B2-2.

La première sous étape 4021 peut être réalisée de deux manières, selon que la table de facteur de débit d'équivalent de dose derrière l'épaisseur maximale $E_{Max}$ a été établie par activité unitaire de radioélément ou par émission photonique unitaire répartie en bandes d'énergie.

Pour constituer ces deux tables de conversion au choix, il est possible de modéliser dans un code de calcul de radioprotection de préférence de type Monte Carlo ou semi Monte Carlo, une source ponctuelle et un écran plan infini dont l'épaisseur et la nature sont prises égales à la valeur maximale de blindage pouvant être interposée entre les échantillons et les opérateurs. Le cas échéant il est possible de prendre en compte l'épaisseur de blindage supplémentaire apportée par la présence de magasins blindés dans l'unité de travail si les blindages considérés sont de même nature que la paroi de blindage de l'unité de travail considérée. Les positions source-écran et point de calcul-écran sont fixées une fois pour toutes. Il est avantageux de fixer les distances source-écran et écran-point de calcul égales à celles d'une situation représentative de la configuration de travail afin de donner la possibilité d'afficher à l'opérateur la valeur estimée du débit d'équivalent de dose généré au poste de travail. Pour calculer le facteur de conversion par activité unitaire de radioélément, la source du calcul peut alors être constituée avec une activité unitaire de l'un des radioéléments de la bibliothèque B1-2 et B2-2, et le calcul de débit d'équivalent de dose peut être réalisé. Pour obtenir la table de conversion par activité unitaire de radioélément, il est nécessaire d'effectuer autant de calculs qu'il y a de radioéléments dans les bibliothèques B1-2 et B2-2. Il est à noter qu'il est alors important, dans un souci de cohérence, que les données nucléaires des radioéléments des bibliothèques B1-2 et B2-2 utilisées par le code de calcul de radioprotection soient identiques à celles utilisées lors de la troisième étape 302 de conversion des activités de la source ponctuelle en fluence photonique réalisée à la seconde sous-étape de la deuxième étape 302 de calcul de la source ponctuelle, en référence à la figure 3. Dans le cas contraire ou en cas de doute, il est préférable de privilégier la deuxième méthode qui utilise une table de conversion en débit d'équivalent de dose par émission photonique unitaire, et qui par ailleurs offre l'avantage de permettre une modification ultérieure des bibliothèques sans remettre en cause les étapes de calcul.

Pour constituer la table de conversion en débit d'équivalent de dose par activité unitaire de radioélément, il est possible d'employer la même modélisation de calcul que celles d'une situation représentative de la configuration de travail et de définir une source photonique unitaire (1 photon/s) par bande d'énergie définie sur la plage de 0 à 4 MeV. Selon les possibilités du code de calcul, il peut être nécessaire de réaliser autant de calculs que de bandes d'énergie définies, mais il est à noter que la plupart des codes de calcul en radioprotection propose un pré-découpage en bandes d'énergie avec la possibilité de réaliser un seul calcul pour obtenir les facteurs de conversion en débit d'équivalent par source unitaire (1 photon/s) réparti par bandes d'énergie. Quel que soit le moyen de calcul utilisé l'objectif est de connaître les facteurs de conversion en débit d'équivalent de dose derrière l'épaisseur maximale de la source ponctuelle constituée d'un photon émis par seconde dans chacune des bandes d'énergies présélectionnées.

La première méthode pour obtenir à la première sous-étape 4021 de la première étape de traitement 402, la valeur du débit d'équivalent de dose généré par la source ponctuelle derrière l'épaisseur maximale de blindage à une distance donnée, consiste à pondérer chaque activité de la source ponctuelle définie à la première étape 401 pour les radioéléments de la bibliothèque B1-2 ou B2-2 par le facteur correspondant de la table de conversion par activité unitaire de radioélément, dans une étape préalable de pondération 4020, puis de sommer toutes les contributions de ces radioéléments.

La deuxième méthode consiste dans un premier temps à convertir en fluences photoniques les activités de la source ponctuelle définie pour les radioéléments de la bibliothèque B1-2. Pour cela il est procédé comme à la deuxième étape 302 du calcul de la source ponctuelle, et la liste de données nucléaires dont il est fait état est à nouveau utilisée. Ainsi les radioéléments de la source ponctuelle qui appartiennent à la troisième bibliothèque B1-2 (ou B2-2) sont identifiés dans cette liste. Grâce à cette liste, est associé pour chacune des raies d'énergie caractéristiques $E_i$ de ces radioéléments, le produit de l'activité du radioélément défini dans la source ponctuelle correspondante de la première étape 401 et l'intensité d'émission $I_i$ de la raie apparaissant dans la liste précitée. Les valeurs des fluences photoniques définies aux énergies $E_i$ constituent la source ponctuelle des radioéléments de la troisième bibliothèque B1-2. Pour obtenir enfin la valeur du débit d'équivalent de dose généré par la source ponctuelle derrière l'épaisseur maximale de blindage à une distance donnée, il est alors possible de pondérer chaque fluence photonique ainsi déterminée à l'énergie $E_i$ par le facteur correspondant de la table de conversion par émission photonique unitaire, puis de sommer toutes les contributions des raies d'énergie.

La seconde sous-étape 4022 qui consiste à calculer l'activité équivalente en radioélément de référence X, des radioéléments de la source ponctuelle appartenant à la bibliothèque B1-2 ou B2-2, nécessite de définir le facteur de conversion du débit d'équivalent de dose derrière l'épaisseur maximale, en activité équivalente du radioélément de référence, c'est à dire le $^{60}$Co dans l'exemple de la description. Pour cela, il est nécessaire d'employer exactement la même modélisation de calcul que celle utilisée pour la réalisation de la table de conversion en débit d'équivalent de dose derrière l'épaisseur maximale (par émission photonique unitaire ou par activité unitaire) objet de la sous étape 4021, puis de définir la source ponctuelle par 1 Bq de $^{60}$Co. Le résultat de ce calcul de radioprotection est la valeur du débit d'équivalent de dose généré par 1 Bq de $^{60}$Co derrière l'épaisseur maximale de blindage à la même distance de modélisation. L'inverse de cette valeur du débit d'équivalent de dose est la valeur du facteur de conversion du débit d'équivalent de dose derrière l'épaisseur maximale en activité équivalente du radioélément de référence $^{60}$Co. L'activité équivalente en $^{60}$Co, des radioéléments de la source ponctuelle appartenant à la bibliothèque B1-2 ou B2-2 est obtenu en réalisant le produit de la valeur du débit d'équivalent de dose généré par lesdits radioéléments de la source ponctuelle derrière l'épaisseur maximale de blindage et de la valeur du facteur de conversion du débit d'équivalent de dose derrière l'épaisseur maximale en activité équivalente du radioélément de référence $^{60}$Co.

Pour les radioéléments n'appartenant pas à la troisième bibliothèque B1-2 ou B2-2, c'est-à-dire les radioéléments moins pénalisants que le radioélément de référence, soit le $^{60}$Co dans l'exemple de la présente description, la première étape 401 est suivie d'une deuxième étape de traitement 403 qui peut se décomposer d'une manière similaire à la première étape de traitement 402 décrite ci-dessus, en deux sous-étapes :

- une première sous-étape 4031 consistant à calculer la valeur du débit d'équivalent de dose généré par les radioéléments de la source ponctuelle n'appartenant pas à la bibliothèque B1-2 ou B2-2, derrière une épaisseur de blindage intermédiaire $E_{int}$ comprise entre l'épaisseur réduite $E_{réduite}$ du poste de mesure et l'épaisseur minimale $E_{min}$ de blindage des unités de travail, à une distance donnée. Il peut être avantageux de réaliser ce calcul derrière l'épaisseur réduite du poste de mesure afin de réutiliser la table de conversion en débit d'équivalent de dose établie pour la constitution de la source ponctuelle. Il est possible de démontrer que pour les radioéléments classés moins pénalisants que le radioélément de référence (B1-2 ou B2-2), l'activité équivalente en radioélément de référence qui en résulte décroît lorsque le calcul de la valeur de débit d'équivalent de dose est réalisé derrière une épaisseur croissante de blindage. Par conséquent le choix de fixer l'épaisseur intermédiaire égale à l'épaisseur réduite aboutit à une valeur d'activité équivalente en radioélément de référence qui est enveloppe de celle que l'on aurait obtenue si l'équivalence avait été réalisée avec une épaisseur supérieure à celle du poste de mesure. La limitation volontaire du nombre de tables de conversion ne remet donc pas en cause le caractère enveloppe du calcul de l'activité équivalente en radioélément de référence ainsi présentée. Cependant si l'écart entre l'épaisseur réduite du poste de mesure et l'épaisseur minimale des unités de travail est important, il peut être avantageux d'optimiser la valeur de l'activité équivalente en radioélément de référence en réalisant le calcul de débit d'équivalent de dose de la deuxième étape de traitement 403, derrière l'épaisseur minimale de blindage des unités de travail. Dans ce cas, une nouvelle table de conversion est à constituer dans les mêmes conditions derrière l'épaisseur minimale de blindage.

- une deuxième sous-étape 4032 consistant à calculer l'activité équivalente en radioélément de référence X, de la source ponctuelle des radioéléments n'appartenant pas à la bibliothèque B1-2 ou B2-2.

La première sous-étape 4031 de l'étape de traitement 403 en référence à la figure 4 peut être réalisée de deux manières, selon le choix de réaliser une table de facteur de débit d'équivalent de dose derrière l'épaisseur intermédiaire choisie entre l'épaisseur réduite du poste de mesure et l'épaisseur minimale de blindage des unités de travail par activité unitaire de radioélément, ou par émission photonique unitaire répartie en bande d'énergie.

Une table de conversion par émission photonique a déjà été constituée pour l'épaisseur réduite du poste de mesure lors de la troisième étape 303 du calcul de la source ponctuelle, en référence à la figure 3. Elle peut donc être réutilisée ici, s'il est fait le choix de fixer l'épaisseur intermédiaire à la valeur de l'épaisseur réduite du poste de mesure. En cas de choix d'une autre épaisseur intermédiaire comprise entre l'épaisseur réduite et l'épaisseur minimale, une nouvelle table de conversion par émission photonique est à réaliser selon les mêmes principes que ceux énoncés en référence à la troisième étape 303 du calcul de la source ponctuelle.

Pour constituer la table de conversion par activité unitaire de radioélément derrière l'épaisseur intermédiaire choisie égale à l'épaisseur réduite du poste de mesure, la modélisation géométrique de la troisième étape 303 du calcul de la source ponctuelle peut être réutilisée. La distance choisie entre le point calcul et l'épaisseur réduite de blindage peut être modifiée mais elle doit être conservée pour tous les calculs de la troisième étape de traitement 403. Pour calculer le facteur de conversion par activité unitaire de radioélément, il est alors possible de constituer la source du calcul de radioprotection avec une activité unitaire de l'un des radioéléments de la bibliothèque générale B1-0 et B2-0, et de lancer le calcul de débit d'équivalent de dose derrière l'épaisseur intermédiaire choisie. Pour obtenir la table de conversion par activité unitaire de radioélément, il est alors nécessaire de réaliser autant de calculs qu'il y a de radioéléments dans les bibliothèques B1-0 et B2-0. Il est rappelé qu'il est important, dans un souci de cohérence, que les données nucléaires des radioéléments des bibliothèques B1-0 et B2-0 utilisées par le code de calcul de radioprotection soient identiques à celles utilisées lors de la deuxième étape 302 du calcul de la source ponctuelle, de conversion des activités de la source ponctuelle en fluence photonique. Dans le cas contraire ou en cas de doute, il est avantageux de privilégier la deuxième manière décrite ci-après qui utilise une table de conversion en débit d'équivalent de dose par émission photonique unitaire derrière l'épaisseur intermédiaire qui, si elle est prise égale à l'épaisseur réduite du poste de mesure a déjà été établie pour la réalisation de la troisième étape 303 du calcul de la source ponctuelle, la distance entre le point de calcul et l'épaisseur réduite ayant été prise égale à une distance représentative de la position de la chambre d'ionisation.

La première méthode pour obtenir à la première sous-étape 4031 de la troisième étape de traitement 403, la valeur du débit d'équivalent de dose généré derrière l'épaisseur intermédiaire de blindage à une distance donnée par la source ponctuelle des radioéléments n'appartenant pas à la bibliothèque B1-2 ou B2-2, c'est-à-dire les radioéléments moins pénalisants que le radioélément de référence, consiste à pondérer, dans une étape préalable de pondération 4030, chaque activité de la source ponctuelle ainsi définie par le facteur correspondant de la table de conversion par activité unitaire de radioélément, puis de sommer toutes les contributions de ces radioéléments, pour obtenir le débit d'équivalent de dose.

La deuxième méthode consiste dans un premier temps à convertir en fluences photoniques les activités de la source ponctuelle des radioéléments n'appartenant pas à la troisième bibliothèque B1-2 ou B2-2. Pour cela il est procédé comme à la deuxième étape 302 du calcul de la source ponctuelle, et la liste de données nucléaires dont il est fait état peut être à nouveau utilisée. Ainsi, les radioéléments de la source ponctuelle n'appartenant pas à la troisième bibliothèque B1-2 ou B2-2 sont identifiés dans cette liste. Grâce à cette liste, est associé pour chacune des raies d'énergie caractéristiques $E_i$ de ces radioéléments, le produit de l'activité du radioélément définie dans la source ponctuelle ci-avant et l'intensité d'émission $I_i$ de la raie apparaissant dans la liste précitée. Ces produits représentent les fluences photoniques définies aux énergies $E_i$ et constituent la source ponctuelle des radioéléments n'appartenant pas à la troisième bibliothèque B1-2 ou B2-2, converties en fluences photoniques. Pour obtenir enfin à la première sous-étape 4031 de l'étape 403, la valeur du débit d'équivalent de dose généré par cette source ponctuelle derrière l'épaisseur réduite de blindage à une distance donnée, il est possible de pondérer chaque fluence photonique ainsi déterminée à l'énergie $E_i$ par le facteur correspondant de la table de conversion par émission photonique unitaire, puis de sommer toutes les contributions des raies d'énergie.

La deuxième sous-étape 4032 de l'étape de traitement 403 en référence à la figure 4, consistant à calculer l'activité équivalente en radioélément de référence X, des radioéléments de la source ponctuelle n'appartenant pas à la bibliothèque B1-2 ou B2-2, nécessite de définir le facteur de conversion en débit d'équivalent de dose derrière l'épaisseur intermédiaire choisie à la sous étape 4031 par activité unitaire du radioélément de référence, c'est-à-dire le $^{60}$Co dans l'exemple décrit. Pour cela, il est nécessaire de réutiliser exactement la même modélisation géométrique de calcul, c'est-à-dire la même épaisseur intermédiaire, la même distance point de calcul-blindage, etc., que celle de l'étape 4031, puis de définir la source ponctuelle du calcul par une activité unitaire de 1 Bq de $^{60}$Co. Le résultat de ce calcul de radioprotection est la valeur du débit d'équivalent de dose généré par 1 Bq de $^{60}$Co derrière l'épaisseur intermédiaire à la même distance de modélisation que celle de la sous étape 4031 (par émission photonique unitaire ou par activité unitaire). L'inverse de cette valeur du débit d'équivalent de dose est la valeur du facteur de conversion du débit d'équivalent de dose derrière l'épaisseur intermédiaire, en activité équivalente du radioélément de référence $^{60}$Co. L'activité équivalente en $^{60}$Co des radioéléments de la source ponctuelle n'appartenant pas à la troisième bibliothèque B1-2 ou B2-2 est obtenue en réalisant le produit de la valeur du débit d'équivalent de dose généré par lesdits radioéléments de la source ponctuelle derrière l'épaisseur intermédiaire et de la valeur du facteur de conversion du débit d'équivalent de dose derrière l'épaisseur intermédiaire en activité équivalente du radioélément de référence $^{60}$Co.

La troisième étape de traitement 404 consiste à sommer les activités équivalentes d'une part obtenues à l'issue de la première étape 402, c'est-à-dire l'activité équivalente en radioélément de référence des radioéléments de la source ponctuelle appartenant à la bibliothèque B1-2 ou B2-2, et d'autre part obtenues à l'issue de la deuxième étape de traitement 403, c'est-à-dire l'activité équivalente en radioélément de référence des radioéléments de la source ponctuelle n'appartenant pas à la bibliothèque B1-2 ou B2-2. Cette somme est alors l'activité équivalente en radioélément de référence de l'échantillon mesuré.

En l'absence d'activité dans un échantillon irradié, la méthode de calcul de l'activité équivalente en $^{60}$Co alloue par défaut à l'échantillon irradié, une activité équivalente en $^{60}$Co qui n'est jamais nulle. La valeur de cette activité dépend des conditions de mesure et des limites de performances des appareils. Cette activité équivalente en $^{60}$Co est aussi l'activité équivalente en $^{60}$Co minimale décelable par le système de mesure. Par analogie avec la définition de la limite de détection applicable à un mesurage d'une variable statistique, la valeur de cette activité équivalente en $^{60}$Co peut être désignée "limite de détection en activité équivalente en $^{60}$Co". Le calcul de cette activité est alors réalisé dans le cas supposé où le débit de dose net généré par l'échantillon irradié est inférieur à la valeur du seuil de décision $S_{de}$ et lorsqu'aucun radioélément n'a été détecté. La connaissance de la limite d'activité équivalente en $^{60}$Co doit notamment permettre à l'opérateur d'apprécier au cours des acquisitions, les performances des conditions opératoires de la mesure et également le temps de comptage nécessaire. Ainsi, si la valeur d'activité affectée à l'échantillon est égale à la limite de détection ainsi définie, il est intéressant pour l'opérateur d'augmenter le temps de mesure s'il souhaite affecter une activité plus faible à l'échantillon. Ce calcul peut être réalisé et affiché de façon cyclique pendant le temps de mesure, en réalisant des traitements en arrière-plan des résultats intermédiaires.

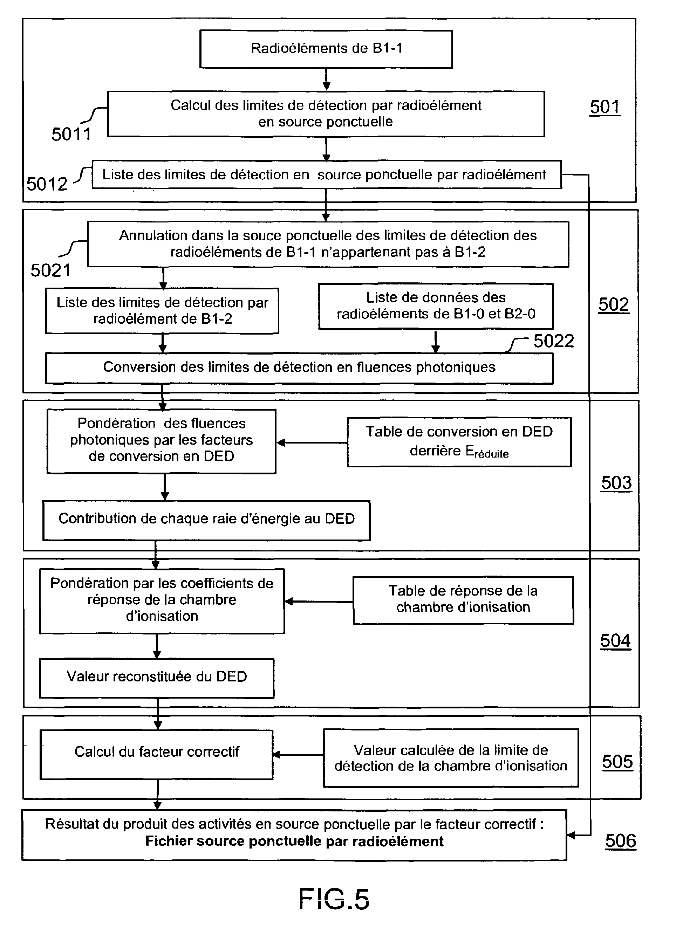

La figure 5 présente un logigramme illustrant un exemple d'une étape de calcul de la source ponctuelle représentative de la limite de détection d'activité équivalente en $^{60}$Co, dans un exemple de réalisation de l'invention, dans l'hypothèse où aucun radioélément n'a pu être détecté par la chaîne de spectrométrie gamma à l'issue de la première étape 301 du calcul de la source ponctuelle, en référence à la figure 3. D'une manière similaire au calcul de la source ponctuelle dans le cas le plus général, décrit précédemment en référence à la figure 3, le calcul de la source ponctuelle dans la présente hypothèse peut se décomposer en six étapes 501 à 506 correspondant respectivement aux six étapes 301 à 306 décrites en référence à la figure 3.

La première étape 501 selon la présente hypothèse diffère de la première étape 301 du cas général. A la première étape 501 dans la présente hypothèse, tous les radioéléments de la deuxième bibliothèque B1-1 ou B1-2 sont affectés lors d'une deuxième sous-étape 5012, d'une activité égale à leur limite de détection $L_{de}$, calculée lors d'une première sous-étape 5011 à partir des mesures réalisées par la chaîne de spectrométrie gamma.

Il est à noter qu'il est indispensable que le logiciel de spectrométrie gamma utilisé permette de calculer, à l'aide des formules de seuil de décision et de limite de détection déjà présentées à l'étape 301, les limites de détection en source ponctuelle des radioéléments détectés et non détectés de la deuxième bibliothèque B1-1 ou B1-2 après l'opération de soustraction pic à pic des acquisitions en présence et en l'absence de l'échantillon à mesurer. Les activités ainsi constituées des limites de détection des radioéléments de la deuxième bibliothèque B1-1 ou B2-1 définissent dans cette hypothèse la source ponctuelle, faisant l'objet aux étapes 502 à 504 de traitements de calcul identiques à ceux décrits relativement aux étapes 302 à 304 en référence à la figure 3, y compris les sous-étapes 5021 et 5022, identiques aux sous-étapes 3021 et 3022, permettant ainsi d'aboutir au calcul de la valeur reconstituée du débit d'équivalent de dose qu'afficherait la chambre d'ionisation en présence de la source ponctuelle. La cinquième étape 505 de calcul de la source ponctuelle diffère alors de la cinquième étape 305 du calcul de la source ponctuelle décrite précédemment en référence à la figure 3. Dans la présente hypothèse, la cinquième étape de calcul 505 consiste à calculer le facteur correctif qui est utilisé à la sixième étape 506 pour pondérer la source ponctuelle des limites de détection calculées précédemment à la deuxième sous-étape 5012 de la première étape 501. Ce facteur correctif est défini comme le rapport de la limite de détection $L_{de}$ déterminée à partir du débit de dose moyen du bruit de fond et des temps de mesure selon une des formes possibles dont celle de la relation (58) donnée ci-dessus pour le mode dose de la chambre d'ionisation et la valeur reconstituée du débit d'équivalent de dose qu'afficherait la chambre d'ionisation telle qu'obtenue à l'issue de la quatrième étape 504 précitée.

Les activités par radioélément de la source ponctuelle représentant les activités minimales décelables par le système de mesure et faisant l'objet de la sixième étape 506 sont alors définies comme le produit des activités en source ponctuelle telles que déterminées à la première étape 501 précitée, par le facteur correctif issu de la cinquième étape 505.

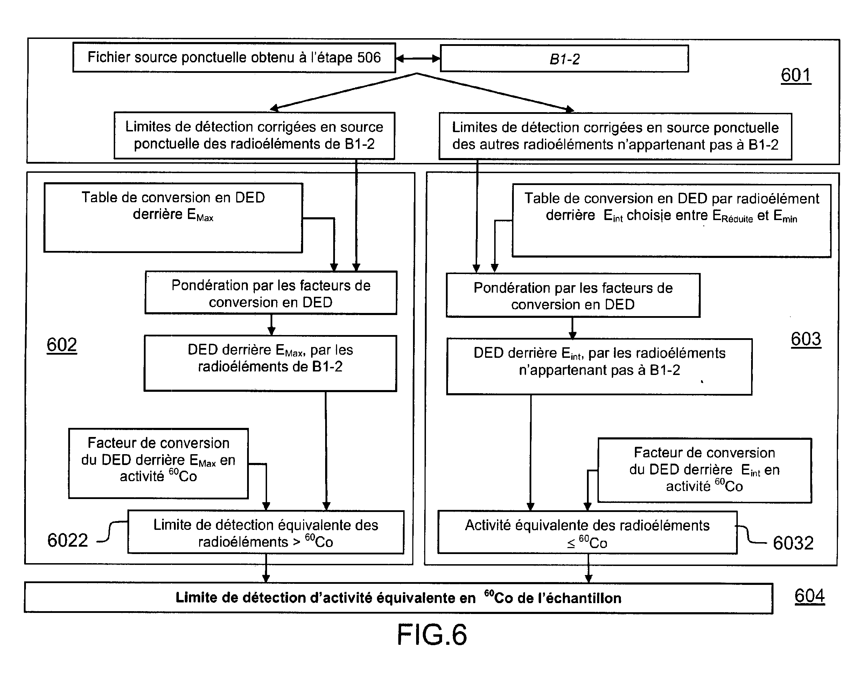

La figure 6 présente un logigramme illustrant un exemple de méthode de calcul de la limite de détection d'activité équivalente en $^{60}$Co, dans l'hypothèse où aucun radioélément n'a pu être détecté par la chaîne de spectrométrie gamma à l'issue de la première étape 301 du calcul de la source ponctuelle, en référence à la figure 3. Les étapes de traitement 601 à 604 conduisant au calcul final de la limite de détection d'activité équivalente en radioélément de référence sont en tous points identiques aux étapes de traitement 401 à 404 décrites ci-dessus en référence à la figure 4, à la différence que le fichier source ponctuelle utilisé en entrée de la première étape 601 est constitué du fichier source ponctuelle issu de la cinquième étape 505 du calcul de la source ponctuelle dans la présente hypothèse. Ainsi, dans le cas de la présente hypothèse, les limites de détection corrigées en source ponctuelle des radioéléments sont déterminées à l'issue de la première étape 601 du calcul de l'activité équivalente en radioélément de référence, plutôt que des valeurs d'activités en source ponctuelle. Egalement, aux secondes sous-étapes 6022 et 6032 respectivement des étapes de traitement 602 et 603, des limites de détection équivalentes sont calculées, respectivement des radioéléments plus pénalisants que le radioélément de référence, et des radioéléments moins pénalisants, et non des activités équivalentes.

Il est à remarquer que les exemples présentés dans la description ci-dessus s'appliquent à des enceintes constituées de protections biologiques de même nature. Il est avantageusement possible d'appliquer un procédé de détermination de la grandeur opérationnelle à des enceintes constituées de protections biologiques de natures différentes, c'est-à-dire réalisées dans des matériaux différents ou bien des matériaux identiques mais de densités différentes.

Si l'on dispose par exemple de deux ensembles d'unités de travail blindées, la nécessité d'élaborer une activité équivalente en X à caractère d'enveloppe pour les deux ensembles peut être justifiée, si des transferts d'échantillons entre ces deux ensembles sont prévus et que l'on dispose d'un unique système de mesure. A l'intérieur de chaque ensemble, les unités de travail ont alors une épaisseur minimale et une épaisseur maximale de blindage. Soient $EA_{min}$, $EA_{max}$ les épaisseurs respectivement minimale et maximale des enceintes du premier ensemble constitué du matériau A et $EB_{min}$, $EB_{max}$ les épaisseurs respectivement minimale et maximale des enceintes du second ensemble constitué du matériau B. Le système de mesure est supposée placé derrière une épaisseur réduite de matériau A ou B, telle que cette épaisseur est au maximum égale à la plus petite épaisseur équivalente de matériau A ou B. Pour déterminer les valeurs admissibles de l'épaisseur réduite du poste de mesure il est possible de procéder de la manière suivante :

Dans un premier temps, il est possible de déterminer les facteurs de protection apportés par les différentes épaisseurs $EA_{min}$, $EA_{max}$ et $EB_{min}$, $EB_{max}$ pour une source ponctuelle du radioélément de référence X.

Pour l'épaisseur $EA_{min}$, on détermine par calcul son épaisseur équivalente constituée de matériau B notée $EB_{équiv}\, EA_{min}$, qui est l'épaisseur de matériau B offrant vis-à-vis d'une source de radioélément X, le même facteur de protection que $EA_{min}$. De la même manière, il est possible de déterminer l'épaisseur équivalente constituée de matériau A, notée $EA_{équiv}\, EB_{min}$, offrant vis-à-vis d'une source de radioélément X le même facteur de protection que l'épaisseur $EB_{min}$.

La méthode de calcul de l'épaisseur équivalente $EB_{équiv}\, EA_{min}$ est décrite ci-après, la méthode de calcul de l'épaisseur $EA_{équiv}\, EB_{min}$ peut s'en déduire en permutant les indices A et B. Il convient dans un premier temps de modéliser, via un code de calcul de radioprotection :

- une source ponctuelle de radioélément X d'activité fixée à une valeur donnée,
- une distance source- point de calcul de débit de dose donnée,
- une distance écran- point de calcul donnée.

Ces valeurs étant définitivement fixées, une première étape peut alors consister à placer un écran de matériau A et d'épaisseur $EA_{min}$ et calculer le débit d'équivalent de dose généré au point de calcul par cette source. Une deuxième étape peut consister à remplacer ensuite cet écran par un écran de matériau B et à fixer la valeur de débit d'équivalent de dose au point de calcul, à la valeur trouvée à la première étape précitée, les autres paramètres cités aux trois alinéas précédents restant inchangés. On calcule ensuite l'épaisseur de matériau B nécessaire pour obtenir ce débit d'équivalent de dose au point de calcul. Cette épaisseur est l'épaisseur $EB_{éqiv}\, EA_{min}$.

Si le poste de mesure est placé derrière un écran constitué du matériau A, alors l'épaisseur de cet écran, appelée épaisseur réduite, doit être inférieure ou égale à la plus petite des deux valeurs $EA_{min}$ et $EA_{équiv}\, EB_{min}$, au risque sinon d'allouer à un échantillon peu radioactif, une limite d'activité équivalente en X trop grande, qui pénaliserait alors l'exploitation optimale de l'un ou l'autre des ensembles d'enceintes. Il est donc nécessaire que l'épaisseur réduite du poste de mesure notée $E_{réduite}$ vérifie la relation :

$$E_{réduite} \leq \inf (EA_{min}, EA_{équiv}\, EB_{min}) \qquad (64).$$

De la même manière, si le poste de mesure est placé derrière un écran constitué du matériau B, la relation suivante doit être satisfaite :

$$E_{réduite} \leq \inf{}' (EB_{min}, EB_{équiv}\, EA_{min}) \qquad (65).$$

Il est à noter que s'il est prévu de recevoir des échantillons d'activité très élevée, l'épaisseur réduite ainsi déterminée pourrait conduire à saturer le détecteur de spectrométrie du poste de mesure. Un calcul de type Monte Carlo peut permettre d'estimer le risque de saturation. Si ce risque est réel, il est possible de prévoir, avantageusement, de disposer une protection amovible devant l'épaisseur réduite, qui constitue une nouvelle épaisseur réduite du poste de mesure et donc une deuxième configuration de calcul, par exemple sélectionnable par l'opérateur.

La liste des radioéléments classés plus pénalisants que le radioélément de référence X dépend de la nature du matériau considéré, même si un grand nombre de radioéléments peuvent être communs à deux matériaux donnés. Par conséquent, si les deux ensembles A et B diffèrent par la nature de leur protection biologique, alors les bibliothèques de radioéléments établies indépendamment pour chaque ensemble ne sont a priori pas identiques. Pour les deux ensembles d'unités de travail par exemple en plomb et en béton, les activités maximales équivalentes en X définissant le domaine de fonctionnement sont supposées connues pour chacune des unités de travail composant les différents ensembles.

Il est possible de déterminer, pour chacun des matériaux A et B, les différentes bibliothèques de radioéléments telles que définies précédemment. Dans le cas d'échantillons de type 1, et en choisissant le $^{60}$Co comme radioélément de référence, on peut alors établir les bibliothèques présentées dans le tableau suivant :

| Bibliothèques associées | Tous les radioéléments potentiellement présents | Radioéléments ayant au moins une raie d'énergie > 1,33 MeV et radioéléments plus pénalisants que le $^{60}$Co | Radioéléments plus pénalisants que le $^{60}$Co |
|---|---|---|---|
| Matériau A | B1-0 | $B_A$ 1-1 | $B_A$ 1-2 |
| Matériau B | | $B_B$ 1-1 | $B_B$ 1-2 |

Il est à noter que dans le cas où les bibliothèques $B_A$ 1-2 et $B_B$ 1-2 s'avèrent identiques, il est alors possible de simplifier la méthode de calcul de la source ponctuelle et de l'activité équivalente en X décrite ci-après

Après une acquisition de spectres en l'absence et en présence de l'échantillon, il est possible de calculer une source ponctuelle pour chacun des matériaux A et B selon la méthode décrite ci-dessus en référence à la figure 3 ; ainsi des fichiers sources ponctuelles pour les matériaux A et B, notés respectivement $Sp_A$ et $Sp_B$, peuvent être constitués.

Il est à noter que les étapes de calcul de la source ponctuelle telle que décrites ci-dessus en référence à la figure 3 sont identiques pour les deux types de matériaux A et B, exceptée la première étape 301 qui diffère de par les bibliothèques utilisées. En effet, le poste de mesure étant implanté derrière une épaisseur réduite de l'un des matériaux, les tables de conversion en débit d'équivalent de dose et la table de réponse de la chambre d'ionisation utilisées sont identiques pour la constitution des deux sources ponctuelles.

Les sources ponctuelles étant constituées, il est alors possible de réaliser le calcul d'activité équivalente en X pour chacun des matériaux A et B, selon la méthode décrite ci-dessus en référence à la figure 4, mais en remplaçant les tables de conversion en débit d'équivalent de dose derrière l'épaisseur intermédiaire par celles établies derrière les épaisseurs minimales de matériau A ou B. Il est rappelé ici que pour le matériau de l'unité de travail recevant le poste de mesure, la table de conversion en débit d'équivalent de dose et le facteur de conversion en activité équivalente en radioélément de référence utilisés pour le calcul de la contribution des radioéléments classés moins pénalisants, peuvent être réalisés derrière une épaisseur intermédiaire comprise entre l'épaisseur réduite du poste de mesure et l'épaisseur minimale de ce matériau. Par exemple, l'épaisseur minimale des unités de travail peut être choisie pour chacun des matériaux. Les activités équivalentes en X pour les matériaux A et B sont notées respectivement $A_{équiv/A}$ et $A_{équiv/B}$.

L'activité équivalente en X de l'échantillon couvrant toutes les épaisseurs des unités de travail de matériau A et matériau B est alors la plus grande des deux valeurs $A_{équiv/A}$ et $A_{équiv/B}$. Il est alors possible d'écrire la relation suivante :

$$\text{Activité équivalente en X de l'échantillon} = \sup (A_{équiv/A} , A_{équiv/B}) \qquad (66).$$

Le calcul de la limite de détection en activité équivalente en X de l'échantillon est réalisé d'une manière similaire, en procédant par une première étape de calcul du fichier des activités par radioélément de la source ponctuelle représentant les activités minimales décelables par le système de mesure pour chacun des matériaux A et B conformément aux étapes décrites ci-dessus en référence à la figure 5. Il est à noter que pour les radioéléments communs aux deuxièmes bibliothèques $B_A$ 1-1 de A et $B_B$ 1-1 de B, les activités calculées à l'issue de la sixième étape 506 de calcul de la source ponctuelle, en référence à la figure 5, sont identiques pour chacun des deux matériaux A et B. La deuxième étape consiste à calculer la limites de détection d'activité équivalente en radioélément de référence pour chacun des matériaux notées LD$_{équiv/A}$ et LD$_{équiv/B}$. Pour cela il est procédé selon la méthode décrite ci-dessus en référence à la figure 6, en utilisant en entrée, pour chacun des matériaux, le fichier des activités par radioélément de la source ponctuelle issue de la première étape mentionnée ci-dessus, et en utilisant pour la troisième étape 603, les tables de conversion en débit d'équivalent de dose et le facteur de conversion en activité équivalente établis derrière l'épaisseur minimale de chacun des matériaux en lieu et place de ceux établis derrière l'épaisseur intermédiaire. La limite de détection en activité équivalente en X de l'échantillon est alors la plus grande des deux valeurs LD$_{équiv/A}$ et LD$_{équiv/B}$.

Il est à noter que l'existence de magasins blindés à l'intérieur de certaines unités de travail, utilisés pour l'entreposage d'échantillons irradiés, peut avantageusement être mise à profit pour étendre, en cas de besoin, le domaine admissible dés échantillons irradiés. Aussi, pour conserver cette opportunité, il est préférable que les protections biologiques des magasins blindés soient prises en compte dans la méthode d'élaboration de la grandeur opérationnelle. Ainsi, le domaine de fonctionnement autorisé associé à la grandeur opérationnelle peut se distinguer en un domaine usuel simplifié où seul l'inventaire de l'unité de travail est géré, et un domaine exceptionnel où l'on s'autorise une plus forte activité globale, notamment sur le plan de travail, en fonction de l'inventaire présent dans le magasin.

Quels que soient les critères ayant conduit à dimensionner les protections biologiques d'une unité de travail, il est possible de transposer le procédé selon l'un des modes de réalisation de l'invention, à une unité de travail déjà construite. Ainsi, les limites du domaine de fonctionnement, traduit dans l'unité opérationnelle de la méthode de gestion, sont définies uniquement à partir du choix du radioélément X de référence, et d'une valeur maximale acceptable de débit de dose au poste de travail, sans qu'il soit nécessaire de connaître au préalable la méthode selon laquelle est élaborée la grandeur opérationnelle attachée à l'échantillon irradié. Par conséquent, il est possible, à la conception, de définir les limites du domaine de fonctionnement autorisé de chaque unité de travail sans avoir à fixer immédiatement les paramètres intervenant dans la méthode d'élaboration de la grandeur opérationnelle attachée aux échantillons irradiés.

Il est possible de mettre à jour la grandeur opérationnelle des échantillons, afin que celle-ci rende compte au plus juste, mais jamais par défaut, de l'exposition externe générée par les échantillons irradiés au poste de travail de chaque unité de travail. L'exposition externe générée par les échantillons irradiés étant décroissante dans le temps, la méthode d'élaboration de la grandeur opérationnelle peut donc mettre à profit l'état de décroissance de l'échantillon irradié à son arrivée dans le laboratoire, ainsi qu'au cours de son entreposage dans les unités de travail. Une mise à jour des inventaires en cours d'exploitation peut donc être avantageusement prévue, dans le but d'augmenter les capacités d'entreposage des unités de travail.

Il est à noter que la grandeur opérationnelle établie selon le procédé de la présente invention permet également d'apprécier l'acceptabilité d'échantillons disposés dans un emballage de transport, dés lors que dans l'agrément de celui-ci figure une activité maximale traduite dans le radioélément de référence.

## Revendications

1. Procédé de détermination de l'activité équivalente en un radioélément de référence (X) déterminé d'un échantillon irradié (100) manipulé dans des installations comprenant des enceintes de protection d'au moins une épaisseur et une nature déterminées, **caractérisé en ce qu'**il comprend :

   • une première étape (201) de calculs préalables établissant à partir d'une première bibliothèque (B1-0, B2-0) de radioéléments, une deuxième bibliothèque (B1-1, B2-1) et une troisième bibliothèque (B1-2, B2-2) de radioéléments pour lesquels le rapport des débits de doses calculés respectivement au travers de l'épaisseur minimale de protection et l'épaisseur maximale de protection présentées par les blindages des unités de travail de l'installation, est inférieur à celui du radioélément de référence (X),
   • une deuxième étape (202) de calcul de la source ponctuelle équivalente à l'échantillon irradié (100), calculant les activités en source ponctuelle pour chacun des radioéléments de la première bibliothèque (B1-0, B2-0) détectés par une chaîne de spectrométrie gamma (112) et des limites de détection en source ponctuelle pour chacun des radioéléments de la deuxième bibliothèque (B1-1, B2-1) non détectés par la chaîne de spectrométrie gamma (112), et produisant un fichier de source ponctuelle comprenant la donnée des activités en source ponctuelle de chacun des radioéléments détectés et non détectés par la chaîne de spectrométrie gamma (112) corrigées d'un facteur correctif défini comme le rapport de la valeur de débit de dose déclarée à une chambre d'ionisation (111) et de la valeur reconstituée du débit d'équivalent de dose sur la base des activités en source ponctuelle calculées pondérées par la table de réponse de la chambre d'ionisation (111) et la table de conversion en débit d'équivalent de dose derrière l'épaisseur réduite de protection du poste de mesure,
   • une troisième étape (203) de calcul de l'activité équivalente en radioélément de référence (X) pondérant les activités en source ponctuelle corrigées produites à la deuxième étape (202) par des facteurs de conversion en débit d'équivalent de dose derrière l'épaisseur maximale de protection pour les radioéléments de la troisième bibliothèque (B1-2, B2-2) et l'épaisseur intermédiaire de protection pour les radioéléments n'appartenant pas à la troisième bibliothèque (B1-2, B2-2) et pondérant la valeur de débit d'équivalent de dose obtenue pour les radioéléments de la troisième bibliothèque (B1-2, B2-2) d'une part et d'autre part pour les radioéléments n'appartenant pas à la troisième bibliothèque (B1-2, B2-2) par l'inverse du facteur de conversion en débit d'équivalent de dose de protection pour 1 Bq du radioélément de référence respectivement calculé derrière l'épaisseur maximale et l'épaisseur intermédiaire, l'activité équivalente en radioélément de référence (X) étant égale à la somme des activités équivalentes ainsi calculées respectivement pour les radioéléments appartenant et n'appartenant pas à la troisième bibliothèque (B1-2, B2-2).

2. Procédé de détermination de l'activité équivalente en radioélément de référence (X) déterminé d'un échantillon irradié (100) selon la revendication 1, les enceintes de protection étant constituées de deux matériaux différents A et B, dont les épaisseurs de blindage minimales et maximales sont respectivement $EA_{min}$, $EA_{max}$ et $EB_{min}$, $EB_{max}$, **caractérisé en ce que** les activités équivalentes en radioéléments de référence (X) $A_{équiv/A}$ et $A_{équiv/B}$ sont calculées à la troisième étape (203) respectivement pour les matériaux A et B à partir de bibliothèques ($B_A1$-0, $B_A1$-1, $B_A1$-2, $B_B1$-0, $B_B1$-1, $B_B1$-2) relatives à chacun des matériaux A et B, l'activité équivalente en radioélément de référence étant égale à la plus grande des activités équivalentes $A_{équiv/A}$ et $A_{écquiv/B}$, l'épaisseur réduite étant choisie :

    • plus petite que l'épaisseur minimale de blindage $EA_{min}$ en matériau A et l'épaisseur équivalente $EA_{équiv}EB_{min}$ de matériau A égale à l'épaisseur de matériau A offrant vis-à-vis d'une source de radioélément de référence (X) le même facteur de protection que l'épaisseur minimale de blindage en matériau B $EB_{min}$, si la chambre d'ionisation (111) et la chaîne de spectrométrie gamma (112) sont placées derrière une épaisseur de blindage en matériau A, ou
    • plus petite que l'épaisseur minimale de blindage $EB_{min}$ en matériau B et l'épaisseur équivalente $EB_{éqiv}EA_{min}$ de matériau B égale à l'épaisseur de matériau B offrant vis-à-vis d'une source de radioélément de référence (X) le même facteur de protection que l'épaisseur minimale de blindage en matériau A $EA_{min}$, si la chambre d'ionisation (111) et la chaîne de spectrométrie gamma (112) sont placées derrière une épaisseur de blindage en matériau B.

3. Procédé de détermination de l'activité équivalente en un radioélément de référence (X) déterminé d'un échantillon irradié (100) selon la revendication 1, **caractérisé en ce que** les activités en source ponctuelle pour chacun des radioéléments de la première bibliothèque (B1-0, B2-0) détectés par une chaîne de spectrométrie gamma (112) et les limites de détection en source ponctuelle pour chacun des radioéléments de la deuxième bibliothèque (B1-1, B2-1) non détectés par la chaîne de spectrométrie gamma (112) sont calculées au cours d'une première étape (301), suivie d'une deuxième étape (302) à laquelle lesdites activités en source ponctuelle et limites de détection sont converties en fluences photoniques par ordre d'énergie, une troisième étape (303) calculant des fluences photoniques corrigées par une pondération des fluences photoniques par des coefficients de réponse de la chambre d'ionisation (111) contenues dans la table de réponse de la chambre d'ionisation (111), lesdites valeurs reconstituées du débit d'équivalent étant obtenues par une pondération desdites fluences photoniques par les facteurs de conversion en débit d'équivalent de dose généré au niveau de la chambre d'ionisation (111) compris dans la table de conversion en débit d'équivalent de dose derrière l'épaisseur réduite de protection du poste de mesure.

4. Procédé de détermination de l'activité équivalente en un radioélément de référence (X) déterminé d'un échantillon irradié (100) selon la revendication 3, **caractérisé en ce que** la table de réponse de la chambre d'ionisation (111) affecte à chaque bande d'énergie donnée [Ei, Ef[ le coefficient de réponse minimal lu sur la courbe de réponse de la chambre d'ionisation (111) et correspondant à la plage d'énergies [0, Ef].

5. Procédé de détermination de l'activité équivalente en un radioélément de référence (X) déterminé d'un échantillon irradié (100) selon l'une quelconque des revendications précédentes, **caractérisé en ce que** la valeur de débit de dose déclarée à la chambre d'ionisation (111) est égale à la limite de détection ($L_{de}$) si le débit de dose mesuré par la chambre d'ionisation (111) est inférieur ou égal à un seuil de décision ($S_{de}$), et est déclarée égale à la valeur nette de débit de dose mesurée par la chambre d'ionisation (111) majorée d'une incertitude ($\xi d_e$) si le débit de dose mesuré par la chambre d'ionisation (111) est supérieur au de décision ($S_{de}$).

6. Procédé de détermination de l'activité équivalente en un radioélément de référence (X) déterminé d'un échantillon irradié (100) en présence d'un bruit de fond selon l'une quelconque des revendications précédentes, **caractérisé en ce que** lesdits seuil de décision ($S_{de}$) et limite de détection ($L_{de}$) sont donnés par la relation :

$$S_{d_e} = \frac{2 \cdot F \cdot e}{t} \cdot \left(1 + \sqrt{1 + \frac{2 \cdot D_0}{F \cdot e}}\right) \text{ et } L_{d_e} = \frac{4 \cdot F \cdot e}{t} \cdot \left(1 + \sqrt{1 + \frac{2 \cdot D_0}{F \cdot e}}\right) \qquad ,$$

où :

> F désigne le coefficient d'étalonnage de la chambre d'ionisation (111) pour le radioélément de référence (X), exprimé en Sv/Coulomb,
> e désigne la charge de l'électron,
> t désigne le temps de mesure de l'échantillon irradié,
> $D_0$ désigne la dose générée par le bruit de fond pendant le temps t, exprimée en Sv.

**7.** Procédé de détermination de l'activité équivalente en un radioélément de référence (X) déterminé d'un échantillon irradié (100) en présence d'un bruit de fond selon l'une quelconque des revendications précédentes, **caractérisé en ce que** les seuil de décision ($SD_{net}$) et limite de détection ($LD_{net}$) servant à l'analyse de la soustraction pic à pic des spectres acquis par la chaîne de spectrométrie gamma, en l'absence et en la présence de l'échantillon à mesurer et qui sont exprimés en nombre de photons par seconde émis à l'énergie $E_i$ qui ont été complètement absorbés dans le détecteur par effet photoélectrique et qui proviennent uniquement de l'échantillon, sont données par la relation:

$$SD_{net} = K \cdot \sqrt{\frac{p'(a)}{t_m} + \frac{p'(a)}{t_0} + 5{,}042 \cdot \left(\frac{R \cdot B}{t_m^{\,2}} + \frac{R' \cdot B'}{t_0^{\,2}}\right)}$$

et

$$LD_{net} = \frac{K^2}{t_m} + 2 \cdot K \cdot \sqrt{\frac{p'(a)}{t_m} + \frac{p'(a)}{t_0} + 5{,}042 \cdot \left(\frac{R \cdot B}{t_m^{\,2}} + \frac{R' \cdot B'}{t_0^{\,2}}\right)} \,,$$

où :

> K est le coefficient de sécurité correspondant à une erreur de première et deuxième espèce toutes les deux prises égales,
> p'(a) est la surface nette normalisée du pic d'absorption totale à l'énergie $E_i$ du spectre de bruit de fond déterminé en l'absence de l'échantillon, intégrée sur la région d'intérêt [$E_i$-a, $E_i$+a],
> a définit la région d'intérêt [$E_i$-a, $E_i$+a] d'intégration de la surface du pic d'absorption totale,
> R est la résolution de la chaîne de spectrométrie à l'énergie $E_i$ pour le spectre acquis en présence de l'échantillon et correspond à la largeur totale à mi-hauteur mesurée sur le pic net d'absorption totale,
> R' est la résolution de la chaîne de spectrométrie à l'énergie $E_i$ pour le spectre du bruit de fond et correspond à la largeur totale à mi-hauteur mesurée sur le pic net d'absorption totale,
> $t_m$ est le temps d'acquisition du spectre en présence de l'échantillon,
> $t_0$ est le temps d'acquisition du spectre du bruit de fond,
> B est la valeur moyenne du fond continu dans l'intervalle [$E_i$-a, $E_i$+a] du spectre acquis en présence de l'échantillon,
> B' est la valeur moyenne du fond continu dans l'intervalle [$E_i$-a, $E_i$+a] du spectre du bruit de fond.

**8.** Dispositif de mesure d'un échantillon irradié (100) comprenant au moins un plan de travail (101) apte à recevoir l'échantillon irradié (100) et couvrant une épaisseur de blindage (102) sous laquelle est disposé un caisson blindé (110) **caractérisé en ce que** le caisson blindé (110) comprend au moins une chambre d'ionisation (111) et un détecteur de spectrométrie gamma (112) associé à une chaîne de spectrométrie, et est disposé sous l'épaisseur de blindage (102) sensiblement en regard de l'échantillon irradié (100), au moins la chambre d'ionisation (111) et la chaîne de spectrométrie étant reliées à une unité de traitement mettant en oeuvre le procédé de détermination de l'activité équivalente en un radioélément de référence (X) déterminé de l'échantillon irradié (100) selon l'une quelconque des revendications précédentes.

**Patentansprüche**

1. Verfahren zum Ermitteln von äquivalenter Aktivität in einem bestimmten Referenzradioelement (X) einer bestrahlten Probe (100), die in Installationen gehandhabt wird, die Schutzgehäuse von wenigstens einer/m bestimmten Dicke und Typ umfassen, **dadurch gekennzeichnet, dass** es Folgendes beinhaltet:

   • einen ersten Schritt (201) von Vorabberechnungen, bei denen von einer ersten Bibliothek (B1-0, B2-0) von Radioelementen eine zweite Bibliothek (B1-1, B2-1) und eine dritte Bibliothek (B1-2, B2-2) von Radioelementen erstellt werden, für die das Verhältnis der Dosisraten, die jeweils anhand der Mindestschutzdicke und der Höchstschutzdicke berechnet werden, die durch die Abschirmungen der Arbeitseinheiten der Installation geboten werden, kleiner ist als die des Referenzradioelements (X);
   • einen zweiten Schritt (202) des Berechnens der mit der bestrahlten Probe (100) äquivalenten Punktquelle, wobei die Punktquellenaktivitäten für jedes der durch eine Gammaspektrometriekette (112) erfassten Radioelemente der ersten Bibliothek (B1-0, B2-0) und Punktquellenerkennungsgrenzen für jedes der nicht von der Gammspektrometriekette (112) erkannten Radioelemente der zweiten Bibliothek (B1-1, B2-1) berechnet werden und eine Punktquellendatei erzeugt wird, die die Daten von Punktquellenaktivitäten jedes der Radioelemente umfasst, die von der Gammaspektrometriekette (112) erkannt und nicht erkannt werden, korrigiert durch einen Korrekturfaktor, der als das Verhältnis zwischen dem einer Ionisierungskammer (111) deklarierten Dosisratenwert und dem rekonstituierten Wert der äquivalenten Dosisrate auf der Basis der Punktquellenaktivitäten definiert ist, die durch die Antworttabelle der Ionisierungskammer (111) und die äquivalente Dosisraten-Konversionstabelle hinter der reduzierten Schutzdicke der Messstation berechnet und gewichtet werden;
   • einen dritten Schritt (203) des Berechnens der äquivalenten Aktivität in einem Referenzradioelement (X), wobei die im zweiten Schritt (202) produzierten korrigierten Punktquellenaktivitäten durch äquivalente Dosisraten-Konversionsfaktoren hinter der Höchstschutzdicke für die Radioelemente der dritten Bibliothek (B1-2, B2-2) und der Zwischenschutzdicke für die Radioelemente gewichtet werden, die nicht zur dritten Bibliothek (B1-2, B2-2) gehören, und der äquivalente Dosisratenwert, der für die Radioelemente der dritten Bibliothek (B1-2, B2-2) einerseits und für die nicht zur dritten Bibliothek (B1-2, B2-2) gehörenden Radioelemente andererseits erhalten wird, durch Umkehren des äquivalenten Schutzdosisraten-Konversionsfaktors für ein Bq des Referenzradioelementes gewichtet werden, der jeweils hinter der Höchstdicke und der Zwischendicke berechnet wird, wobei die äquivalente Aktivität im Referenzradioelement (X) gleich der Summe der äquivalenten Aktivitäten ist, die jeweils für die Radioelemente berechnet wurden, die zur dritten Bibliothek (B1-2, B2-2) gehören und nicht gehören.

2. Verfahren zum Ermitteln von äquivalenter Aktivität in einem bestimmten Referenzradioelement (X) einer bestrahlten Probe (100) nach Anspruch 1, wobei die Schutzgehäuse aus zwei verschiedenen Materialien A und B gebildet sind, deren Mindest- und Höchstabschirmdicken jeweils $EA_{min}$, $EA_{max}$ und $EB_{min}$, $EB_{max}$ sind, **dadurch gekennzeichnet, dass** die äquivalenten Aktivitäten in Referenzradioelementen (X) $A_{äquiv/A}$ und $A_{äquiv/B}$ im dritten Schritt (203) jeweils für die Materialien A und B auf der Basis von Bibliotheken ($B_A1-0$, $B_A1-1$, $B_A1-2$, $B_B1-0$, $B_B1-1$, $B_B1-2$) in Bezug auf jedes der Materialien A und B berechnet werden, wobei die äquivalente Aktivität in einem Referenzradioelement gleich der größten der äquivalenten Aktivitäten $A_{äquiv/A}$ und $A_{äquiv/B}$ ist, wobei die reduzierte Dicke so ausgewählt wird, dass sie:

   • kleiner ist als die Mindestabschirmdicke $EA_{min}$ aus Material A und die äquivalente Dicke $EA_{äquiv}EB_{min}$ von Material A gleich der Dicke von Material A, die mit Bezug auf eine Referenzradioelementquelle (X) denselben Schutzfaktor bietet wie die Mindestabschirmdicke aus Material B $EB_{min}$, wenn die Ionisierungskammer (111) und die Gammaspektrometriekette (112) hinter einer Abschirmdicke aus Material A platziert sind, oder
   • kleiner ist als die Mindestabschirmdicke $EB_{min}$ aus Material B und die äquivalente Dicke $EB_{aquiv}EA_{min}$ von Material B gleich der Dicke von Material B, die mit Bezug auf eine Referenzradioelementquelle (X) denselben Schutzfaktor bietet wie die Mindestabschirmdicke aus Material A $EA_{min}$, wenn die Ionisierungskammer (11) und die Gammaspektrometriekette (112) hinter einer Abschirmdicke aus Material B platziert sind.

3. Verfahren zum Ermitteln von äquivalenter Aktivität in einem bestimmten Referenzradioelement (X) einer bestrahlten Probe (100) nach Anspruch 1, **dadurch gekennzeichnet, dass** die Punktquellenaktivitäten für jedes der Radioelemente der durch eine Gammaspektrometriekette (112) erkannten ersten Bibliothek (B1-0, B2-0) und die Punktquellenerkennungsgrenzen für jedes der nicht durch die Gammaspektrometriekette (112) erkannten Radioelemente der zweiten Bibliothek (B1-1, B2-1) in einem ersten Schritt (301) berechnet werden, gefolgt von einem zweiten Schritt (302), bei dem die Punktquellenaktivitäten und Erkennungsgrenzen in Photonenfluenzen nach Energieordnung konvertiert werden, wobei in einem dritten Schritt (303) die Photonenfluenzen berechnet werden, korrigiert durch eine Gewichtung der Photonenfluenzen durch Reaktionskoeffizienten der Ionisierungskammer (111), die in der Antworttabelle der Ionisierungskammer (111) enthalten sind, wobei die rekonstituierten Werte der äquivalenten Rate durch eine Gewichtung der Photonenfluenzen durch die äquivalenten Dosisratenkonversionsfaktoren erhalten werden, die an der in der äquivalenten Dosisratenkonversionstabelle enthaltenen Ionisierungskammer (111) hinter der reduzierten Schutzdicke der Messstation erzeugt werden.

4. Verfahren zum Ermitteln von äquivalenter Aktivität in einem bestimmten Referenzradioelement (X) einer bestrahlten Probe (100) nach Anspruch 3, **dadurch gekennzeichnet, dass** die Antworttabelle der Ionisierungskammer (111) jedem gegebenen Energieband [Ei, Ef] den Mindestantwortkoeffizienten zuordnet, der auf der Antwortkurve der Ionisierungskammer (111) gelesen wird und dem Energiebereich [0, Ef] entspricht.

5. Verfahren zum Ermitteln von äquivalenter Aktivität in einem bestimmten Referenzradioelement (X) einer bestrahlten Probe (100) nach einem der vorherigen Ansprüche, **dadurch gekennzeichnet, dass** der in der Ionisierungskammer (111) deklarierte Dosisratenwert gleich der Erkennungsgrenze ($L_{de}$) ist, wenn die von der Ionisierungskammer (111) gemessene Dosisrate gleich oder kleiner als eine Entscheidungsschwelle ($S_{de}$) ist, und als gleich dem Nettodosisratenwert deklariert wird, der von der Ionisierungskammer (111) gemessen wird, erhöht um eine Unsicherheit ($\xi_{de}$), wenn die von der Ionisierungskammer (111) gemessene Dosisrate größer ist als die Entscheidungsschwelle ($S_{de}$).

6. Verfahren zum Ermitteln von äquivalenter Aktivität in einem bestimmten Referenzradioelement (X) einer bestrahlten Probe (100) in Anwesenheit von Hintergrundrauschen nach einem der vorherigen Ansprüche, **dadurch gekennzeichnet, dass** die Entscheidungsschwelle ($S_{de}$) und die Erkennungsgrenze ($L_{de}$) durch die folgende Beziehung ausgedrückt werden:

$$S_{d_e} = \frac{2 \cdot F \cdot e}{t} \cdot \left( 1 + \sqrt{1 + \frac{2 \cdot D_0}{F \cdot e}} \right) \quad \text{und} \quad L_{d_e} = \frac{4 \cdot F \cdot e}{t} \cdot \left( 1 + \sqrt{1 + \frac{2 \cdot D_0}{F \cdot e}} \right),$$

wobei:

F den Abtastkoeffizienten der Ionisierungskammer (111) für das Referenzradioelement (X) bezeichnet, ausgedrückt in Sv/Coulomb;
e die Ladung des Elektrons bezeichnet;
t die Messzeit der bestrahlten Probe bezeichnet;
$D_0$ die vom Hintergrundrauschen während der Zeit t erzeugte Dosierung bezeichnet, ausgedrückt in Sv.

7. Verfahren zum Ermitteln von äquivalenter Aktivität in einem bestimmten Referenzradioelement (X) einer bestrahlten Probe (100) in Anwesenheit eines Hintergrundrauschens nach einem der vorherigen Ansprüche, **dadurch gekennzeichnet, dass** die Entscheidungsschwelle ($SD_{net}$) und die Erkennungsgrenze ($LD_{net}$), die zum Analysieren der Spitze-zu-Spitze-Subtraktion der von der Gammaspektrometriekette erfassten Spektren verwendet werden, in Abwesenheit und in Anwesenheit der zu messenden Probe, und die als Anzahl von mit der Energie $E_i$ emittierten Photonen pro Sekunde ausgedrückt werden, die im Detektor durch fotoelektrischen Effekt völlig absorbiert werden und nur von der Probe kommen, durch die folgende Beziehung ausgedrückt werden:

$$SD_{net} = K \cdot \sqrt{\frac{p'(a)}{t_m} + \frac{p'(a)}{t_0} + 5,042 \cdot \left( \frac{R \cdot B}{t_m^2} + \frac{R' \cdot B'}{t_0^2} \right)}$$

und

$$LD_{net} = \frac{K^2}{t_m} + 2 \cdot K \cdot \sqrt{\frac{p'(a)}{t_m} + \frac{p'(a)}{t_0} + 5,042 \cdot \left( \frac{R \cdot B}{t_m^2} + \frac{R' \cdot B'}{t_0^2} \right)},$$

wobei:

K der Sicherheitskoeffizient ist, der einem Fehler der ersten und zweiten Spezies für jede zweite gleiche Probenahme entspricht;

p'(a) der standardisierte Nettooberflächenbereich des Gesamtabsorptionspeaks mit Energie $E_i$ des Hintergrundrauschspektrums ist, ermittelt in Abwesenheit der Probe, integriert auf der Region von Interesse [$E_i$-a, $E_i$+a];

a die Integrationsregion von Interesse [$E_i$-a, $E_i$+a] des Oberflächenbereichs des Gesamtabsorptionspeaks definiert;

R die Auflösung der Spektrometriekette mit Energie $E_i$ für das Spektrum ist, das in Anwesenheit der Probe erfasst wurde und der Gesamtbreite in der mittleren Höhe entspricht, die auf dem Netto-Gesamtabsorptionspeak gemessen wird;

R' die Auflösung der Spektrometriekette mit Energie $E_i$ für das Hintergrundrauschspektrum ist und der Gesamtbreite in der mittleren Höhe entspricht, die auf dem Netto-Gesamtabsorptionspeak gemessen wird;

$t_m$ die Erfassungszeit des Spektrums in Anwesenheit der Probe ist; $t_o$ die Erfassungszeit des Spektrums des Hintergrundrauschens ist; B der Durchschnittswert des kontinuierlichen Hintergrunds im Intervall [$E_i$-a, $E_i$+a] des in Anwesenheit der Probe erfassten Spektrums ist;

B' der Durchschnittswert des kontinuierlichen Hintergrunds im Intervall [$E_i$-a, $E_i$+a] des Spektrums des Hintergrundrauschens ist.

**8.** Vorrichtung zum Messen einer bestrahlten Probe (100), die wenigstens eine Arbeitsebene (101) umfasst, die zum Empfangen der bestrahlten Probe (100) und zum Bedecken einer Abschirmdicke (102) ausgelegt ist, unter der sich ein abgeschirmtes Gehäuse (110) befindet, **dadurch gekennzeichnet, dass** das abgeschirmte Gehäuse (110) wenigstens eine Ionisierungskammer (111) und einen mit einer Spektrometriekette assoziierten Gammaspektrometriedetektor (112) umfasst und unterhalb der Abschirmdicke (102) angeordnet ist und der bestrahlten Probe (100) im Wesentlichen zugewandt ist, wobei wenigstens die Ionisierungskammer (111) und die Spektrometriekette mit einer Verarbeitungseinheit verbunden sind, die das Verfahren zum Ermitteln der äquivalenten Aktivität in einer ermittelten Radioelementreferenz (X) der bestrahlten Probe (100) nach einem der vorherigen Ansprüche implementiert.

**Claims**

**1.** A method for determining equivalent activity in a determined reference radio-element (X) of an irradiated sample (100) handled in installations comprising protective enclosures of at least one determined thickness and type, **characterised in that** it comprises:

• a first step (201) of preliminary calculations establishing, from a first library (B1-0, B2-0) of radio-elements, a second library (B1-1, B2-1) and a third library (B1-2, B2-2) of radio-elements for which the ratio of the dosage rates respectively calculated using the minimum protective thickness and the maximum protective thickness offered by the shielding of the work units of the installation is less than that of the reference radio-element (X);

• a second step (202) of calculating the point source equivalent to the irradiated sample (100), calculating the point source activities for each of the radio-elements of the first library (B1-0, B2-0) detected by a gamma spectrometry chain (112) and point source detection limits for each of the radio-elements of the second library (B1-1, B2-1) not detected by said gamma spectrometry chain (112), and producing a point source file comprising the data relating to the point source activities of each of the radio-elements that are detected and are not detected by said gamma spectrometry chain (112) corrected by a corrective factor that is defined as the ratio of the dosage rate value declared to an ionisation chamber (111) and of the reconstituted value of the equivalent dosage rate based on the point source activities calculated and weighted by the response table of said ionisation chamber (111) and the equivalent dosage rate conversion table behind the reduced protective thickness of the measurement station;

• a third step (203) of calculating the equivalent activity in a reference radio-element (X) weighting the corrected point source activities produced during the second step (202) by equivalent dosage rate conversion factors behind the maximum protective thickness for the radio-elements of the third library (B1-2, B2-2) and the intermediate protective thickness for the radio-elements not belonging to the third library (B1-2, B2-2) and weighting the equivalent dosage rate value obtained for the radio-elements of the third library (B1-2, B2-2) on the one hand and for the radio-elements not belonging to the third library (B1-2, B2-2) on the other hand by the reverse of the equivalent protective dosage rate conversion factor for 1 Bq of the reference radio-element respectively calculated behind the maximum thickness and the intermediate thickness, the equivalent activity in the reference radio-element (X) being equal to the sum of the equivalent activities thus respectively calculated for the radio-elements belonging and not belonging to the third library (B1-2, B2-2).

2. The method for determining equivalent activity in a determined reference radio-element (X) of an irradiated sample (100) according to claim 1, said protective enclosures being made from two different materials A and B, the minimum and maximum shielding thicknesses of which are respectively $EA_{min}$, $EA_{max}$ and $EB_{min}$, $EB_{max}$, **characterised in that** the equivalent activities in reference radio-elements (X) $A_{equiv/A}$ and $A_{equiv/B}$ are calculated during the third step (203) for materials A and B respectively on the basis of libraries ($B_A1$-0, $B_A1$-1, $B_A1$-2, $B_B1$-0, $B_B1$-1, $B_B1$-2) relating to each of said materials A and B, the equivalent activity in a reference radio-element being equal to the largest of the equivalent activities $A_{equiv/A}$ and $A_{equiv/B}$, the reduced thickness being selected to be:

• smaller than the minimum shielding thickness $EA_{min}$ in material A and the equivalent thickness $EA_{equiv}EB_{min}$ of material A equal to the thickness of material A providing, with regard to a reference radio-element source (X), the same protective factor as the minimum shielding thickness in material B $EB_{min}$ if the ionisation chamber (111) and the gamma spectrometry chain (112) are placed behind a shielding thickness in material A, or
• smaller than the minimum shielding thickness $EB_{min}$ in material B and the equivalent thickness $EB_{equiv}EA_{min}$ of material B equal to the thickness of material B providing, with regard to a reference radio-element source (X), the same protective factor as the minimum shielding thickness in material A $EA_{min}$ if the ionisation chamber (111) and the gamma spectrometry chain (112) are placed behind a shielding thickness in material B.

3. The method for determining equivalent activity in a determined reference radio-element (X) of an irradiated sample (100) according to claim 1, **characterised in that** the point source activities for each of the radio-elements of the first library (B1-0, B2-0) detected by a gamma spectrometry chain (112) and the point source detection limits for each of the radio-elements of the second library (B1-1, B2-1) not detected by the gamma spectrometry chain (112) are calculated during a first step (301), followed by a second step (302), during which said point source activities and detection limits are converted into photon fluences by order of energy, a third step (303) calculating the photon fluences corrected by a weighting of the photon fluences by response coefficients of said ionisation chamber (111) contained in the response table of said ionisation chamber (111), said reconstituted values of the equivalent rate being obtained by a weighting of said photon fluences by the equivalent dosage rate conversion factors generated at said ionisation chamber (111) included in the equivalent dosage rate conversion table behind the reduced protective thickness of the measurement station.

4. The method for determining equivalent activity in a determined reference radio-element (X) of an irradiated sample (100) according to claim 3, **characterised in that** the response table of said ionisation chamber (111) assigns to each given energy band [Ei, Ef] the minimum response coefficient that is read on the response curve of said ionisation chamber (111) and that corresponds to the energy range [0, Ef].

5. The method for determining equivalent activity in a determined reference radio-element (X) of an irradiated sample (100) according to any one of the preceding claims, **characterised in that** the dosage rate value declared at said ionisation chamber (111) is equal to the detection limit ($L_{de}$) if the dosage rate measured by said ionisation chamber (111) is less than or equal to a decision-making threshold ($S_{de}$) and is declared equal to the net dosage rate value measured by said ionisation chamber (111), increased by an uncertainty ($\xi_{de}$) if the dosage rate measured by said ionisation chamber (111) is greater than said decision-making threshold ($S_{de}$).

6. The method for determining equivalent activity in a determined reference radio-element (X) of an irradiated sample (100) in the presence of a background noise according to any one of the preceding claims, **characterised in that** said decision-making threshold ($S_{de}$) and detection limit ($L_{de}$) are provided by the relation:

$$S_{d_e} = \frac{2 \cdot F \cdot e}{t} \cdot \left(1 + \sqrt{1 + \frac{2 \cdot D_0}{F \cdot e}}\right) \text{ and } L_{d_e} = \frac{4 \cdot F \cdot e}{t} \cdot \left(1 + \sqrt{1 + \frac{2 \cdot D_0}{F \cdot e}}\right),$$

where: F designates the sampling coefficient of said ionisation chamber (111) for the reference radio-element (X), expressed in Sv/Coulomb;
e designates the charge of the electron;
t designates the measurement time of the irradiated sample;
$D_0$ designates the dosage generated by the background noise during the time t, expressed in Sv.

7. The method for determining equivalent activity in a determined reference radio-element (X) of an irradiated sample (100) in the presence of a background noise according to any one of the preceding claims, **characterised in that** the decision-making threshold ($SD_{net}$) and detection limit ($LD_{net}$) used to analyse the peak-to-peak subtraction of the spectrums acquired by the gamma spectrometry chain, in the absence and in the presence of the sample to be measured and which are expressed as a number of photons per second transmitted at the energy level $E_i$, which photons have been fully absorbed in the photo-electric effect detector and which only originate from the sample, are provided by the relation:

$$SD_{net} = K \cdot \sqrt{\frac{p'(a)}{t_m} + \frac{p'(a)}{t_0} + 5{,}042 \cdot (\frac{R \cdot B}{t_m^2} + \frac{R' \cdot B'}{t_0^2})}$$

and

$$LD_{net} = \frac{K^2}{t_m} + 2 \cdot K \cdot \sqrt{\frac{p'(a)}{t_m} + \frac{p'(a)}{t_0} + 5{,}042 \cdot (\frac{R \cdot B}{t_m^2} + \frac{R' \cdot B'}{t_0^2})} \, ,$$

where: K is the safety coefficient corresponding to a first and second

species error every two equal samples that are taken;
p'(a) is the standardised net surface area of the total absorption peak at the energy level $E_i$ of the background noise spectrum determined in the absence of the sample, integrated on the region of interest [$E_i$-a, $E_i$+a];
a defines the region of interest [$E_i$-a, $E_i$+a] of integration of the surface area of the total absorption peak;
R is the resolution of the spectrometry chain at the energy level $E_i$ for the spectrum acquired in the presence of the sample and corresponds to the total width at mid-height that is measured on the net total absorption peak;
R' is the resolution of the spectrometry chain at the energy level $E_i$ for the background noise spectrum and corresponds to the total width at mid-height that is measured on the net total absorption peak;
$t_m$ is the acquisition time of the spectrum in the presence of the sample;
to is the acquisition time of the spectrum of the background noise; B is the average value of the continuous background in the interval [$E_i$-a, $E_i$+a] of the spectrum acquired in the presence of the sample;
B' is the average value of the continuous background in the interval [$E_i$-a, $E_i$+a] of the spectrum of the background noise.

8. A device for measuring an irradiated sample (100) comprising at least one work plane (101) that is designed to receive said irradiated sample (100) and covering a shielding thickness (102) beneath which a shielded case (110) is disposed, **characterised in that** said shielded case (110) comprises at least one ionisation chamber (111) and one gamma spectrometry detector (112) associated with a spectrometry chain, and is disposed beneath said shielding thickness (102) substantially facing said irradiated sample (100), at least said ionisation chamber (111) and said spectrometry chain being connected to a processing unit implementing the method for determining equivalent activity in a determined radio-element reference (X) of said irradiated sample (100) according to any one of the preceding claims.

FIG.1

FIG.2

```
┌─────────────────────────────────────────────────────────────────────────┐
│  ┌──────────────────────┐        ┌──────────────────────┐      301        │
│  │ Radioéléments de     │───────▶│ Radioéléments        │                 │
│  │ B1-0 détectés        │        │ B1-1 non détectés    │                 │
│  └──────────────────────┘        └──────────────────────┘      3012       │
│           │                               │                               │
│           ▼                               ▼                               │
│  ┌──────────────────────┐        ┌──────────────────────┐                 │
│  │ Calcul des activités │        │ Calcul des limites de│                 │
│  │ en source ponctuelle │        │ détection en source  │                 │
│  └──────────────────────┘        │ ponctuelle           │                 │
│      3011     │                  └──────────────────────┘                 │
│               │                           │            3013               │
│               ▼                           ▼                               │
│  ┌────────────────────────────────────────────────────┐                  │
│  │ Activités en source ponctuelle par radioélément     │                  │
│  └────────────────────────────────────────────────────┘                  │
└─────────────────────────────────────────────────────────────────────────┘
┌─────────────────────────────────────────────────────────────────────────┐
│  ┌────────────────────────────────────────────────────┐                  │
│  │ Annulation des limites de détection des radioéléments                 │
│  │ non identifiés de B1-1 n'appartenant pas à B1-2     │        302       │
│  └────────────────────────────────────────────────────┘                  │
│           │                    3021                                       │
│           ▼                           ┌──────────────────────┐           │
│  ┌──────────────────────┐   3022      │ Liste de données des │           │
│  │ Activités par        │             │ radioéléments de     │           │
│  │ radioélément         │             │ B1-0 et B2-0         │           │
│  └──────────────────────┘             └──────────────────────┘           │
│           │                                   │                           │
│           ▼                                   ▼                           │
│  ┌────────────────────────────────────────────────────┐                  │
│  │ Conversion des activités en fluences photoniques    │                  │
│  └────────────────────────────────────────────────────┘                  │
└─────────────────────────────────────────────────────────────────────────┘
┌─────────────────────────────────────────────────────────────────────────┐
│  ┌──────────────────────┐        ┌──────────────────────┐                 │
│  │ Pondération par les  │◀───────│ Table de conversion  │                 │
│  │ facteurs de          │        │ en DED derrière      │        303      │
│  │ conversion en DED    │        │ l'épaisseur réduite  │                 │
│  └──────────────────────┘        └──────────────────────┘                 │
│           │                                                               │
│           ▼                                                               │
│  ┌──────────────────────┐                                                 │
│  │ Contribution de      │                                                 │
│  │ chaque raie          │                                                 │
│  │ d'énergie au DED     │                                                 │
│  └──────────────────────┘                                                 │
└─────────────────────────────────────────────────────────────────────────┘
┌─────────────────────────────────────────────────────────────────────────┐
│  ┌──────────────────────┐        ┌──────────────────────┐                 │
│  │ Pondération de la    │◀───────│ Table de réponse de  │                 │
│  │ contribution des     │        │ la chambre           │        304      │
│  │ raies d'énergie au   │        │ d'ionisation         │                 │
│  │ DED par les          │        └──────────────────────┘                 │
│  │ coefficients de      │                                                 │
│  │ réponse              │                                                 │
│  └──────────────────────┘                                                 │
│           │                                                               │
│           ▼                                                               │
│  ┌──────────────────────┐                                                 │
│  │ Valeur reconstituée  │                                                 │
│  │ du DED               │                                                 │
│  └──────────────────────┘                                                 │
└─────────────────────────────────────────────────────────────────────────┘
┌─────────────────────────────────────────────────────────────────────────┐
│  ┌──────────────────────┐        ┌──────────────────────┐                 │
│  │ Calcul du facteur    │◀───────│ Valeur nette du DED  │        305      │
│  │ correctif            │        │ déclarée à la        │                 │
│  └──────────────────────┘        │ chambre d'ionisation │                 │
│                                  └──────────────────────┘                 │
└─────────────────────────────────────────────────────────────────────────┘
┌─────────────────────────────────────────────────────────────────────────┐
│ Résultat du produit des activités en source ponctuelle par le facteur    │
│ correctif :                                                               │
│ Fichier source ponctuelle par radioélément                  306          │
└─────────────────────────────────────────────────────────────────────────┘
```

# FIG.3

Fichier source ponctuelle par radioélément ◄──► B1-2 (ou B2-2)

Activités en source ponctuelle des radioéléments de B1-2

Activités en source ponctuelle des autres radioéléments n'appartenant pas à B1-2

401

Table de conversion en DED derrière $E_{Max}$, par radioélément

Table de conversion en DED par radioélément derrière l'épaisseur $E_{int}$ choisie entre $E_{Réduite}$ et $E_{min}$

4020 — Pondération des activités par les facteurs de conversion en DED

Pondération des activités par les facteurs de conversion en DED — 4030

402

DED derrière $E_{Max}$, par les radioéléments de B1-2

4021

DED derrière $E_{int}$, par les radioéléments n'appartenant pas à B1-2

403

4031

Facteur de conversion du DED derrière $E_{Max}$ en activité $^{60}Co$

Facteur de conversion du DED derrière $E_{int}$ en activité $^{60}Co$

4022 — Activité équivalente des radioéléments > $^{60}Co$

Activité équivalente des radioéléments ≤ $^{60}Co$ — 4032

**Activité équivalente en $^{60}Co$ de l'échantillon** 404

## FIG.4

EP 2 504 720 B1

Radioéléments de B1-1

Calcul des limites de détection par radioélément
en source ponctuelle

5011

__501__

5012 ⌐ Liste des limites de détection en source ponctuelle par radioélément

Annulation dans la souce ponctuelle des limites de détection des
radioéléments de B1-1 n'appartenant pas à B1-2

5021

__502__

Liste des limites de détection par
radioélément de B1-2

Liste de données des
radioéléments de B1-0 et B2-0

⌐ 5022

Conversion des limites de détection en fluences photoniques

Pondération des fluences
photoniques par les facteurs
de conversion en DED

Table de conversion en DED
derrière $E_{réduite}$

__503__

Contribution de chaque raie d'énergie au DED

Pondération par les coefficients de
réponse de la chambre
d'ionisation

Table de réponse de la
chambre d'ionisation

__504__

Valeur reconstituée du DED

Calcul du facteur correctif

Valeur calculée de la limite de
détection de la chambre d'ionisation

__505__

Résultat du produit des activités en source ponctuelle par le facteur correctif :
**Fichier source ponctuelle par radioélément**

__506__

# FIG.5

EP 2 504 720 B1

| | |
|---|---|
| Fichier source ponctuelle obtenu à l'étape 506 | B1-2 |

**601**

| Limites de détection corrigées en source ponctuelle des radioéléments de B1-2 | Limites de détection corrigées en source ponctuelle des autres radioéléments n'appartenant pas à B1-2 |
|---|---|

**602**

Table de conversion en DED derrière $E_{Max}$

Pondération par les facteurs de conversion en DED

DED derrière $E_{Max}$, par les radioéléments de B1-2

Facteur de conversion du DED derrière $E_{Max}$ en activité $^{60}$Co

**6022** — Limite de détection équivalente des radioéléments > $^{60}$Co

**603**

Table de conversion en DED par radioélément derrière $E_{int}$ choisie entre $E_{Réduite}$ et $E_{min}$

Pondération par les facteurs de conversion en DED

DED derrière $E_{int}$, par les radioéléments n'appartenant pas à B1-2

Facteur de conversion du DED derrière $E_{int}$ en activité $^{60}$Co

Activité équivalente des radioéléments ≤ $^{60}$Co — **6032**

**Limite de détection d'activité équivalente en $^{60}$Co de l'échantillon**

**604**

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *ESRF procedures for experiments using radioactive samples on beamlines other than beamline BM20 (ROBL, http://www.esrf.eu/Infrastructure/Safety/Experiments/RadioactiveSamples/rad ioactive%20samples%20version%20C.pdf*